# EUROPÄISCHE PATENTSCHRIFT

(11) **EP 3 977 763 B1**
(45) Veröffentlichungstag und Bekanntmachung des Hinweises auf die Patenterteilung: **26.07.2023**
(21) Anmeldenummer: 20729694.8
(22) Anmeldetag: 28.05.2020
(51) Int. Cl.: G06F 1/16, G06F 3/04847, G06F 3/04883, H04M 1/72418, H04W 4/80, H04M 1/72454, H04M 1/72457, H04M 1/72469, H04W 4/02, H04W 12/06, H04W 12/63, H04W 12/64

(54) **VERFAHREN, COMPUTERPROGRAMM, VORRICHTUNG UND SYSTEME ZUM BETREIBEN EINES MOBILFUNKGERÄTS**
METHODS, COMPUTER PROGRAM, APPARATUS AND SYSTEMS FOR OPERATING A MOBILE RADIO
MÉTHODES, PROGRAMME D'ORDINATEUR, DISPOSITIF ET SYSTÈMES POUR FAIRE FONCTIONNER UN APPAREIL DE RADIOCOMMUNICATION MOBILE

(30) Priorität: 29.05.2019 DE 102019114453; 10.03.2020 DE 102020106434
(43) Veröffentlichungstag der Anmeldung: 06.04.2022
(73) Patentinhaber: Safenow GmbH, 81541 München (DE)
(72) Erfinder: RUMLAND, Tilman, 80802 München (DE)
(74) Vertreter: Viering, Jentschura & Partner mbB Patent- und Rechtsanwälte
(86) Internationale Anmeldenummer: PCT/EP2020/064826
(87) Internationale Veröffentlichungsnummer: WO 2020/239903

(56) Entgegenhaltungen:
- WO-A1-2016/191497
- US-A1- 2018 132 104
- US-A1- 2018 190 097
- US-A1- 2018 332 162

## Beschreibung

Verschiedene Ausführungsbeispiele betreffen ein Verfahren zum Betreiben eines Mobilfunkgeräts.

Um dem steigenden Sicherheitsbedürfnis der Bevölkerung Rechnung zu tragen, werden zunehmend statische Überwachungs-und Sicherheitsmaßnahmen eingerichtet. Solche Maßnahmen werden kaum aktiv überwacht sondern speichern ihre Daten lediglich zur späteren Verwendung ab. Diese können daher allenfalls eine Abschreckungswirkung gegen Dritte entfalten aber keine aktiven Gegenmaßnahmen ergreifen oder Hilfe rufen.

Dem steigenden Sicherheitsbedürfnis steht ein steigendes Bedürfnis für Privatsphäre entgegen, so dass herkömmliche Überwachungs- und Sicherheitsmaßnahmen in vielen Bereichen des Lebens nur wenig Akzeptanz finden oder unzulässig sind. Daher sind statische Überwachungs- und Sicherheitsmaßnahmen meist nur auf öffentliche Bereiche konzentriert und finden in anderen Bereichen, wie beispielsweise des privaten Lebens, in Toiletten oder Umkleiden nur selten Anwendung. Diese und andere unbewachte Bereiche können daher für Dritte zu einem beliebten Ziel werden.

Das Dokument WO2016191497 A1 offenbart die Meldung von Notfällen an eine Notfallstation, und ein Mobilgerät, das eine Schnittstelle zur Eingabe eines Passwortes anzeigt, sobald der Nutzer eine Berührungsschnittstelle loslässt.

Anschaulich stehen sich Privatsphäre und der Schutz durch Überwachungs- und Sicherheitsmaßnahmen konkurrierend entgegen.

Das hierin beschriebene Verfahren ermöglicht gemäß verschiedenen Ausführungsformen einen verbesserten Schutz gegen Handlungen Dritter (z.B. Belästigung oder kriminelle Handlungen) ohne dafür die Privatsphäre einzuschränken zu müssen. Anschaulich wird mittels des Verfahrens ein Mobilfunkgerät bereitgestellt, welches bei Bedarf in Alarmbereitschaft versetzt werden kann und einen Mechanismus implementiert, der es erlaubt, zuverlässig zu erkennen, falls Hilfe benötigt wird.

Gemäß verschiedenen Ausführungsformen kann ein Verfahren zum Betreiben eines Mobilfunkgeräts gemäß einem ersten Modus und einem zweiten Modus aufweisen: Ermitteln einer Angabe über einen Standort des Mobilfunkgeräts mittels eines ersten Sensors des Mobilfunkgeräts; Ermitteln einer Berührung des Mobilfunkgeräts mittels eines zweiten Sensors des Mobilfunkgeräts, Umschalten in den zweiten Modus, wenn in dem ersten Modus ermittelt wurde, dass die Berührung ein erstes vordefiniertes Kriterium erfüllt, Erzeugen einer Nachricht gemäß einem drahtlos-Kommunikationsprotokoll, wenn in dem zweiten Modus ermittelt wurde, dass die Berührung unterbrochen wurde, wobei die Nachricht die Angabe aufweist und ferner angibt, dass die Berührung unterbrochen wurde; Umschalten in den ersten Modus ohne Erzeugen der Nachricht, wenn in dem zweiten Modus ermittelt wurde, dass die Berührung ein zweites vordefiniertes Kriterium erfüllt. Das zweite vordefinierte Kriterium kann beispielsweise erfüllt sein, wenn das erste vordefinierte Kriterium nicht mehr erfüllt ist.

Anschaulich kann in dem zweiten Modus die Alarmbereitschaft hergestellt sein und mittels der Nachricht ein Alarm ausgelöst werden, falls der Benutzer die Kontrolle über das Mobilfunkgerät und damit den Kontakt dazu verliert (z.B. bewusst oder unbewusst). Ist die Gefahr vorüber, kann das Mobilfunkgerät in den ersten Modus versetzt werden, was die Alarmbereitschaft deaktiviert.

Es zeigen
- Figuren: 1 und 2 jeweils ein Verfahren zum Betreiben eines Mobilfunkgeräts gemäß verschiedenen Ausführungsformen in einem schematischen Ablaufdiagram;
- Figuren: 3, 11, 12 und 14 jeweils ein System zum Durchführen des Verfahrens gemäß verschiedenen Ausführungsformen in einem schematischen Kommunikationsdiagram;
- Figuren 4 bis 10: jeweils ein Mobilfunkgerät zum Durchführen des Verfahrens gemäß verschiedenen Ausführungsformen in einer schematischen Draufsicht;
- Figur 13: eine Funkbake zum Durchführen des Verfahrens gemäß verschiedenen Ausführungsformen in einem schematischen Aufbaudiagram;
- Figur 15: ein Mobilfunkgerät zum Durchführen des Verfahrens gemäß verschiedenen Ausführungsformen in einem schematischen Aufbaudiagram;
- Figur 16 und 17: jeweils die Anzeige eines Mobilfunkgeräts in einer schematischen Draufsicht;
- Figur 18: das Verfahren zum Betreiben des Systems gemäß verschiedenen Ausführungsformen in einem schematischen Ablaufdiagramm;
- Figur 19: das Lokalisieren gemäß verschiedenen Ausführungsformen in einem schematischen Ablaufdiagramm;
- Figur 20: das Umgebungsaufzeichnen gemäß verschiedenen Ausführungsformen in einem schematischen Ablaufdiagramm;
- Figur 21: das Alarmieren gemäß verschiedenen Ausführungsformen in einer schematischen Übersicht;
- Figur 22 und 23: jeweils das Alarmieren gemäß verschiedenen Ausführungsformen in einem schematischen Ablaufdiagramm;
- Figur 24 und 25: jeweils die Verknüpfung von zwei oder mehr Mobilfunkgeräten gemäß verschiedenen Ausführungsformen in einem schematischen Ablaufdiagramm; und
- Figur 26 bis 30: jeweils die Anzeige eines Mobilfunkgeräts in einer schematischen Draufsicht.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", "links", "rechts", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. kabelgebunden oder drahtlos), eines direkten oder indirekten Anschlusses sowie einer direkten oder indirekten Kopplung. Mehrere Elemente können beispielsweise mittels der Verbindung entlang einer Wechselwirkungskette miteinander gekoppelt sein, entlang welcher die Wechselwirkung (z.B. ein Signal) übertragen werden kann, die eine Information überträgt. Beispielsweise können zwei miteinander gekoppelte Elemente Informationen (z.B. Daten) miteinander austauschen. Kommunikativ miteinander gekoppelte Vorrichtungen können sich beispielsweise gegenseitig authentifiziert haben, so dass diese einander gegenseitig erkennen. In den Figuren werden identische oder ähnliche Elemente mit identischen Bezugszeichen versehen, soweit dies zweckmäßig ist.

Ein Mobilfunkgerät kann gemäß verschiedenen Ausführungsformen ein Mobiltelefon, z.B. ein Featurephone oder ein Smartphone, aber auch ein Funkmeldeempfänger, ein Tablet, ein Laptop, eine Smartwatch oder eine Mischform aus diesen Gerätetypen sein.

Gemäß verschiedenen Ausführungsformen kann jedem einzelnen Benutzer des Mobilfunkgeräts bereitgestellt werden, jederzeit selbst entscheiden zu können, wann er nach seinem individuellen Sicherheitsempfinden nach Maßnahmen zur Steigerung seiner Sicherheit ergreifen möchte. Beispielsweise kann er Belästigungen oder strafbare Handlungen mittels einer Echtzeit-Videoaufzeichnung festhalten (anschaulich enttarnen) und/oder sich mittels einer Handbewegung schnell, unkompliziert und präzise mit dem in kürzester Reichweite verfügbarem Helfer verbinden zu lassen. Ferner können eine Reihe zusätzlicher Funktionalitäten bereitgestellt sein oder werden, die sich nach Anwendungsfall unterscheiden oder fließend ineinander übergehen. Diese können von dem Benutzer wahlweise aktiviert/deaktiviert und/oder konfiguriert (auch als Wahlentscheidung bezeichnet) werden und dienen dazu, die tatsächliche Sicherheit und damit auch das Sicherheitsempfinden des Benutzers zu erhöhen. Eine getroffene Wahlentscheidung kann beispielsweise abgespeichert werden (z.B. mittels einer Datenbank), z.B. lokal auf dem Mobilfunkgerät und/oder auf einer Rechenanlage, welche die Nachricht erhält, z.B. zur späteren Wiederverwendung.

Gemäß verschiedenen Ausführungsformen kann eine IT-Infrastruktur (auch als System bezeichnet) bereitgestellt sein oder werden, welche eine schnelle, reibungslose, ortsgebundene Kommunikation zwischen dem Mobilfunkgerät (anschaulich dem Hilferufsender) und einem Empfängergerät (anschaulich dem Hilferufempfänger) ermöglicht.

Im Folgenden werden verschiedene Schritte und Einzelheiten zu dem Verfahren beschrieben. Es kann verstanden werden, dass das Beschriebene (z.B. einzelne Schritte des Verfahrens) in Analogie mittels Hardware (wie z.B. eines hartverschalteten Schaltkreises) und/oder Software (z.B. Codesegmente oder einer ganzen Anwendung) implementiert werden kann. Beispielsweise kann eine Anwendung (auch als Programm bezeichnet) bereitgestellt sein oder werden, die entsprechende Codesegmente (z.B. Programmcode) aufweist, und die auf einem Prozessor und/oder mittels eines Schaltkreises, der den Prozessor aufweist, ausgeführt sein oder werden kann. Der Prozessor (oder der Schaltkreis) kann beispielsweise Teil eines Mobilfunkgeräts oder einer Rechenanlage sein. Die Rechenanlage kann beispielsweise eine Vielzahl von Prozessoren aufweisen, die zentral innerhalb eines physisch zusammenhängenden Verbunds angeordnet oder auch dezentral untereinander mittels eines zellularen Netzwerks verbunden sind. Auf dieselbe Weise können Codesegmente oder die Anwendung auf demselben Prozessor ausgeführt werden oder Teile davon auf mehrere Prozessoren verteilt werden, welche mittels des zellularen Netzwerks miteinander kommunizieren.

Die Übertragung einer Information (Informationsübertragung) kann gemäß verschiedenen Ausführungsformen gemäß einem Kommunikationsprotokoll (KP) erfolgen. Die Informationsübertragung kann aufweisen, eine Nachricht, welche die Information aufweist, gemäß dem Kommunikationsprotokoll zu erzeugen und/oder zu übermitteln. Das Kommunikationsprotokoll kann anschaulich eine Vereinbarung, nach der die Informationsübertragung zwischen zwei oder mehreren Parteien abläuft bezeichnen. In seiner einfachsten Form kann das Kommunikationsprotokoll definiert werden als eine Menge von Regeln, welche die Syntax, Semantik und Synchronisation der Informationsübertragung festlegen. Das Kommunikationsprotokoll (z.B. ein Netzwerkprotokoll) kann einen aus Schichten aufgebauten Protokollstapel aufweisen, bei dem die Regeln unter den einzelnen Ebenen des Protokollstapels aufgeteilt werden. Die Konfiguration des Protokollstapels bzw. seiner Schichten kann beispielsweise mittels eines Referenzmodells, z.B. des OSI-Modells, beschrieben werden, welches jeder Schicht diejenigen Dienste zuordnet, die sie erbringen soll. Die Übermittlung einer Information über Bluetooth kann hierin aufweisen, eine Nachricht, die die Information aufweist, gemäß einem Bluetooth-Kommunikationsprotokoll zu erzeugen und/oder zu übermitteln. Das Bluetooth-Kommunikationsprotokoll kann optional einen niedrig-Energie-Protokollstapel (Low-Energy-Protokollstapel) aufweisen, d.h. die Information kann über niedrig-Energie-Bluetooth übermittelt werden. Dies kann in Analogie auch für ein Kommunikationsprotokoll anderen Typs gelten.

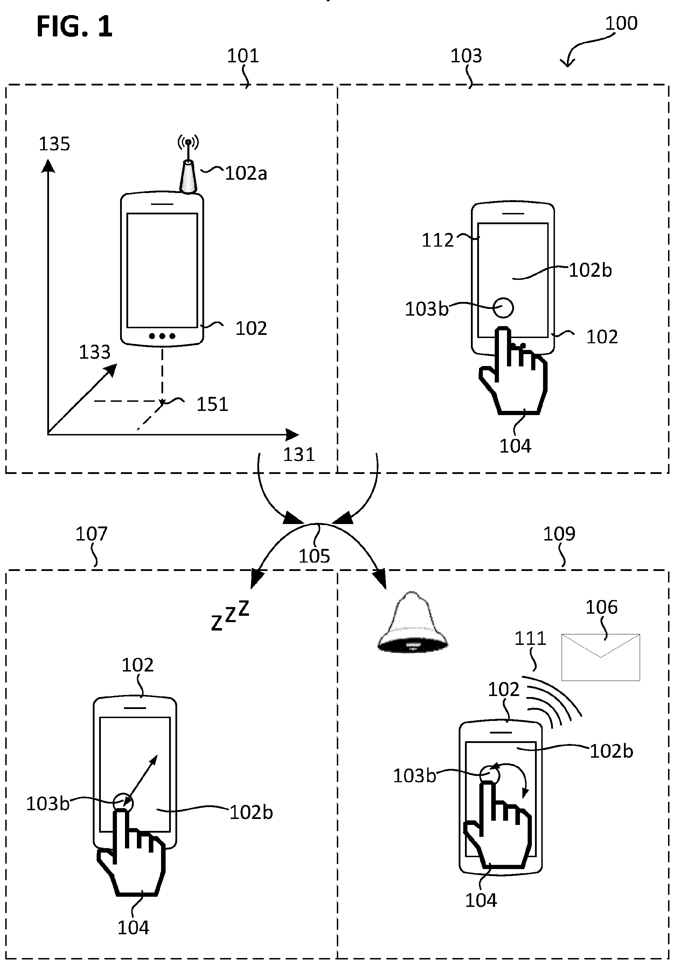

**Fig.1** veranschaulicht ein Verfahren 100 zum Betreiben eines Mobilfunkgeräts 102 gemäß verschiedenen Ausführungsformen in einem schematischen Ablaufdiagram. Das Verfahren kann anschaulich eingerichtet sein, einen Alarm bei Berührungsverlust auslösen 111, wenn das Mobilfunkgerät 102 in einem Bereitschaftsmodus 109 ist.

Das Verfahren 100 kann in 101 aufweisen: Ermitteln einer Angabe über einen Standort 151 des Mobilfunkgeräts 102 mittels eines ersten Sensors 102a des Mobilfunkgeräts 102 (auch als Lokalisieren 101 bezeichnet). Die Angabe (auch als Standortangabe bezeichnet) kann beispielsweise die Koordinaten des Standorts gemäß einem räumlichen Koordinatensystem 131, 133, 135 aufweisen. Das räumliche Koordinatensystem 131, 133, 135 kann ein zweidimensionales oder dreidimensionales Koordinatensystem sein. Das Koordinatensystem kann beispielsweise den Erdball (auch als Geo-Koordinatensystem bezeichnet) umspannen und die Koordinaten in geographischer Breite und Länge oder einem Äquivalent dazu angeben (auch als Geo-Koordinaten bezeichnet). Das Koordinatensystem kann im Allgemeinen aber ein beliebiges Koordinatensystem sein, welches eine eindeutige Angabe über den geostationären Standort ermöglicht, mit entsprechenden Bezugspunkten, um Positionen, Vektoren, Bewegungen und dergleichen zu beschreiben.

Der erste Sensor 102a (auch als Lokalisierungssensor 102a bezeichnet) kann beispielsweise eingerichtet sein, mit einem weltraumgestützten Navigationssystem (z.B. zur Positionsbestimmung mittels Satelliten) zu kommunizieren. Das weltraumgestützte Navigationssystem kann beispielsweise ein Globales Positionsbestimmungssystem (GPS), ein Globales Satellitennavigationssystem (GLONASS), ein europäisches globales Navigationssatellitensystem (Galileo) oder ein chinesisches globales Navigationssatellitensystem (Beidou) aufweisen oder daraus gebildet sein. Das weltraumgestützte Navigationssystem kann mehrere geostationäre Satelliten aufweisen, die mittels eines codierten Radiosignals periodisch ihre aktuelle Position und die genaue Uhrzeit ausstrahlen.

Der Lokalisierungssensor 102a kann alternativ oder zusätzlich eingerichtet sein, mit einem anderen Navigationssystem (allgemeiner Geolokalisierungssystem) zu kommunizieren, z.B. einem bodengestützten Navigationssystem (z.B. Funknavigationssystem) . Das bodengestützte Navigationssystem kann beispielsweise zum Lokalisieren 101 innerhalb eines Gebäudes eingerichtet sein, z.B. mittels mehrerer Funkbaken innerhalb des Gebäudes. Jede Funkbake (allgemeiner: Funksender) kann mittels eines Radiosignals periodisch und/oder auf Anfrage ihre Kennung, ihre aktuelle Position und/oder die genaue Uhrzeit ausstrahlen. Es können allerdings auch andere Funksender als Referenzpunkt für das Lokalisieren 101 verwendet werden, wenn auf Grundlage deren Radiosignals der Standort des Funksenders und/oder des Mobilfunkgeräts 102 ermittelt werden kann. Beispielsweise kann der Funksender ein Bluetooth-Transmitter oder ein Mobilfunktransmitter (z.B. ein Sendeturm) sein.

Das Lokalisieren 101 kann optional unter Verwendung einer Datenbank erfolgen. Beispielsweise kann die Datenbank eine Zuordnung des erfassten Radiosignals (bzw. darin enthaltener Informationen) zu dem Standort des Senders des Radiosignals aufweisen.

Der Lokalisierungssensor 102a kann eingerichtet sein, das Radiosignal zu erfassen und auf dessen Grundlage seinen Standort (und damit den des Mobilfunkgeräts 102) oder zumindest einen Standortbereich (d.h. eine Abschätzung), in dem sein Standort liegt, zu ermitteln. Der Lokalisierungssensor 102a kann beispielsweise gemäß ISO 19762-5 eingerichtet sein. Der Lokalisierungssensor 102a kann alternativ oder zusätzlich zum Lokalisieren 101 mittels Odometrie eingerichtet sein.

Das Verfahren 100 kann in 103 aufweisen: Ermitteln einer Berührung 103b des Mobilfunkgeräts 102 mittels eines (z.B. berührungsempfindlichen) zweiten Sensors 102b (auch als Berührungssensor 102b bezeichnet) des Mobilfunkgeräts 102. Der Berührungssensor 102b kann beispielsweise Teil eines berührungsempfindlichen Bildschirms sein, ein physischer Schalter, ein emulierter Schalter, ein Fingerabdrucksensor (oder ein anderer biometrischer Sensor) oder zumindest eine berührungsempfindliche Oberfläche aufweisen. Allgemeiner gesprochen, kann der Berührungssensor 102b eingerichtet sein, das Ereignis der Berührung 103b des Mobilfunkgeräts 102 durch einen Benutzer 104 des Mobilfunkgeräts 102 (hierin auch als Anwender 104 bezeichnet) zu erfassen. Beispielsweise kann der physische Schalter betätigt sein oder werden, was als Berührung 103b erfasst wird. Der Berührungssensor 102b kann beispielsweise einen kapazitiven, optischen, resistiven oder induktiven Sensor aufweisen oder daraus gebildet sein.

Das Verfahren kann in 105 aufweisen, das Mobilfunkgerät 102 zwischen einem ersten Modus 107 (auch als Ruhemodus bezeichnet) und einem zweiten Modus 109 (auch als Bereitschaftsmodus bezeichnet) umzuschalten.

Wenn in dem Ruhemodus 107 ermittelt wurde, dass die Berührung 103b ein erstes vordefiniertes Kriterium (auch als Scharfschaltungskriterium bezeichnet) erfüllt, kann das Umschalten 105 in den Bereitschaftsmodus 109 erfolgen (auch als Scharfschalten 105 oder Eskalation bezeichnet). Wenn in dem Bereitschaftsmodus 109 ermittelt wurde, dass die Berührung 103b ein zweites vordefiniertes Kriterium (auch als Entschärfungskriterium bezeichnet) erfüllt, kann das Umschalten 105 in den Ruhemodus 107 erfolgen (auch als Entschärfen 105 bezeichnet).

Das oder jedes hierin im Kontext zu der Berührung 103b beschriebene Kriterium (auch als Berührungskriterium bezeichnet, z.B. das Entschärfungskriterium, das Scharfschaltungskriterium oder ein Aufzeichnenkriterium) kann beispielsweise erfüllt sein, wenn die Berührung 103b gemäß einem vordefinierten Berührungsmuster (z.B. einer Geste), z.B. mit einer vordefinierten räumlichen und/oder zeitlichen Verteilung und/oder Intensität, erfolgt. Anschaulich kann das Berührungskriterium definieren, auf welche Weise das Berührung 103b erfolgen soll, damit die Berührung 103b als Eingabe interpretiert wird und/oder eine Reaktion des Mobilfunkgeräts 102 auslöst.

Beispielsweise kann das Kriterien erfüllt sein, wenn die Berührung 103b entlang einer vordefinierten Trajektorie oder zwischen zwei vordefinierten Bereichen auf dem Berührungssensor 102b erfolgt. Beispielsweise kann das Berührungskriterium erfüllt sein, wenn eine vordefinierte Eingabe (z.B. Code) oder eine Berührungsabfolge (d.h. eine Sequenz) erfasst wird. Anschaulich kann das Berührungskriterium erfüllt sein, wenn beispielsweise in einer bestimmten Weise über die berührungsempfindliche Oberfläche (z.B. des Bildschirms 102b) gestrichen und/oder getippt wird oder wenn ein physischer Taster gemäß einer bestimmten Sequenz betätigt wird (z.B. dreimal hintereinander, mehrmals kurz und/oder lang, oder Ähnliches).

Wenn in dem Bereitschaftsmodus 109 ermittelt wurde, dass die Berührung 103b unterbrochen wurde (auch als Berührungsunterbrechung oder Kontaktverlust bezeichnet), kann hingegen eine Nachricht 106 gemäß einem Kommunikationsprotokoll (KP) von dem Mobilfunkgerät 102 erzeugt 111 und/oder gesendet 111 werden (auch als Alarmieren 111 bezeichnet). Die Nachricht 106 kann die Standortangabe (auch als Geo-Information bezeichnet) aufweisen und ferner direkt oder indirekt angeben (z.B. eine Information hierzu aufweisen), dass die Berührung 103b in dem Bereitschaftsmodus 109 unterbrochen wurde (auch als Alarmangabe bezeichnet).

Alternativ oder zusätzlich kann eine oder mehr als eine zusätzliche Nachricht gemäß einem Kommunikationsprotokoll (KP) von dem Mobilfunkgerät 102 erzeugt 111 und/oder gesendet 111 werden, welche die Standortangabe aufweist und/oder angibt, dass das Mobilfunkgerät 102 in den Bereitschaftsmodus 109 umgeschaltet ist oder wird (auch als Bereitschaftsangabe bezeichnet), wie später noch genauer beschrieben wird.

Die Alarmangabe kann beispielsweise eine komplexes Wort aufweisen und/oder auch einen nur wenige Bit (z.B. ein oder zwei Bit) aufweisenden Indikator, z.B. einen Bitschalter, wie später noch genauer beschrieben wird.

Ein zur drahtlosen Kommunikation eingerichtetes KP (auch als drahtlos-KP bezeichnet) kann beispielsweise in Einklang mit einem zellulären Mobilfunknetzwerk sein, mit dem das Mobilfunkgerät 102 verbunden ist, z.B. einem GSM-Netz, GPRS-Netz, UMTS-Netz und/oder LTE-Netz. Die Nachricht 106 kann beispielsweise eine Sprachnachricht oder eine Textnachricht, wie beispielsweise eine Kurznachricht (z.B. SMS), eine Sofortnachricht (z.B. Instant Message) oder eine andere Textnachricht gemäß einem (z.B. proprietären) Nachrichtenprotokoll sein, sein.

Das drahtlos-KP kann beispielsweise Details zu einer Vermittlungsschicht, Sicherungsschicht und/oder Bitübertragungsschicht (gemäß dem OSI-Model) definieren. Die Nachricht kann beispielsweise auf einer darüber liegenden Schicht, z.B. der Sitzungsschicht oder Anwendungsschicht, übermittelt, gesendet und/oder empfangen werden.

Das Entschärfen 105 kann beispielsweise erfolgen, ohne dass die Nachricht erzeugt 111 und/oder gesendet 111 wird.

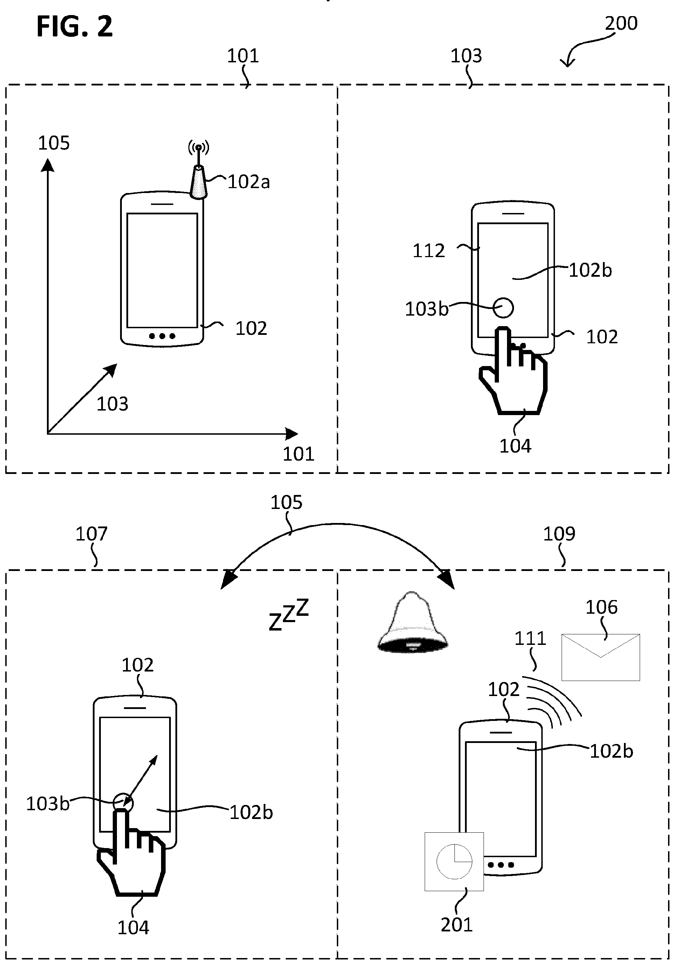

**Fig.2** veranschaulicht ein Verfahren 200 zum Betreiben eines Mobilfunkgeräts 102 gemäß verschiedenen Ausführungsformen in einem schematischen Ablaufdiagram. Das Verfahren 200 kann anschaulich eingerichtet sein, einen Alarm nach dem Ablauf eines Timers (auch als Zeitauslöser oder Zeitschalter bezeichnet) auszulösen, wenn das Mobilfunkgerät 102 in einem Bereitschaftsmodus ist.

Das Verfahren 200 kann in 101, 103, 105, 107 und 109 eingerichtet sein, wie das Verfahren 100 mit dem Unterschied, dass die Nachricht 106 erzeugt 111 und/oder gesendet 111 wird, wenn in dem Bereitschaftsmodus 109 anstatt der Berührungsunterbrechung ermittelt wurde, dass ein vordefinierter Zeitraum 201 verstrichen ist (auch als Zeitablauf oder Ablauf des Zeitauslösers bezeichnet). Die Alarmangabe kann dann entsprechend angeben, dass in dem Bereitschaftsmodus 109 der Zeitraum verstrichen ist. Das Herunterzählen des vordefinierten Zeitraums 201 bzw. das Ermitteln, dass der Zeitraum 201 verstrichen ist, kann beispielsweise mittels des Zeitauslösers implementiert werden, z.B. mittels eines softwaregestützten Zeitauslösers, welcher beispielsweise von einem Takt des Mobilfunkgeräts 102 angesteuert wird und/oder eine von dem Betriebssystem bereitgestellte Zeit ausliest.

Allgemeiner gesprochen, kann das Alarmieren 111 erfolgen, wenn in dem Bereitschaftsmodus 109 ein vordefiniertes Ereignis ermittelt wird. Die Alarmangabe kann dann entsprechend angeben, dass das vordefinierte Ereignis in dem Bereitschaftsmodus 109 eingetreten ist. Das vordefinierte Ereignis kann im Allgemeinen repräsentieren, dass der Anwender 104 nicht mehr Herr der Lage ist oder Hilfe benötigt. Das vordefinierte Ereignis kann beispielsweise die Berührungsunterbrechung oder der Zeitablauf sein.

Der Zeitraum 201 kann beispielsweise von dem Anwender 104 selbst eingestellt sein oder werden, z.B. wenn in den Bereitschaftsmodus 109 umgeschaltet wird und/oder bereits in dem Ruhemodus 107. Die Eingabe zum Einstellen des Zeitraums kann beispielsweise mittels Betätigens (z.B. Berührens) des Mobilfunkgeräts 102 erfolgen.

Das vordefinierte Ereignis kann allerdings auch aufweisen, dass eine mit dem Mobilfunkgerät 102 gekoppelte (z.B. über Funk) externe Vorrichtung (auch als externe Auslösevorrichtung bezeichnet) betätigt wird, z.B. gemäß dem Scharfschaltungskriterium und/oder einem anderen Betätigungsmuster. Die externe Auslösevorrichtung kann beispielsweise ein drahtloser Schalter (z.B. ein Bluetooth-Schalter), ein Musikabspielgerät, eine Aktivitätsüberwachungsvorrichtung (z.B. Gesundheitsarmband oder Gesundheitsanstecker), eine Fernbedienung, eine intelligente Brille oder eine intelligente Uhr (z.B. eine Smartwatch) sein. Diese externe Auslösevorrichtung kann optional das Mobilfunkgerät 102 für die Übertragung der Nachricht 106 nutzen. Die Kommunikation zwischen dem Mobilfunkgerät 102 und der externen Auslösevorrichtung kann beispielsweise über Bluetooth erfolgen. So können beispielsweise externe Bedienungsknöpfe eines Smartphones, einer Smart-Watch oder per Bluetooth oder auf andere Weise integrierbare externe Auslöser zum Auslösen des Ereignisses verwendet werden.

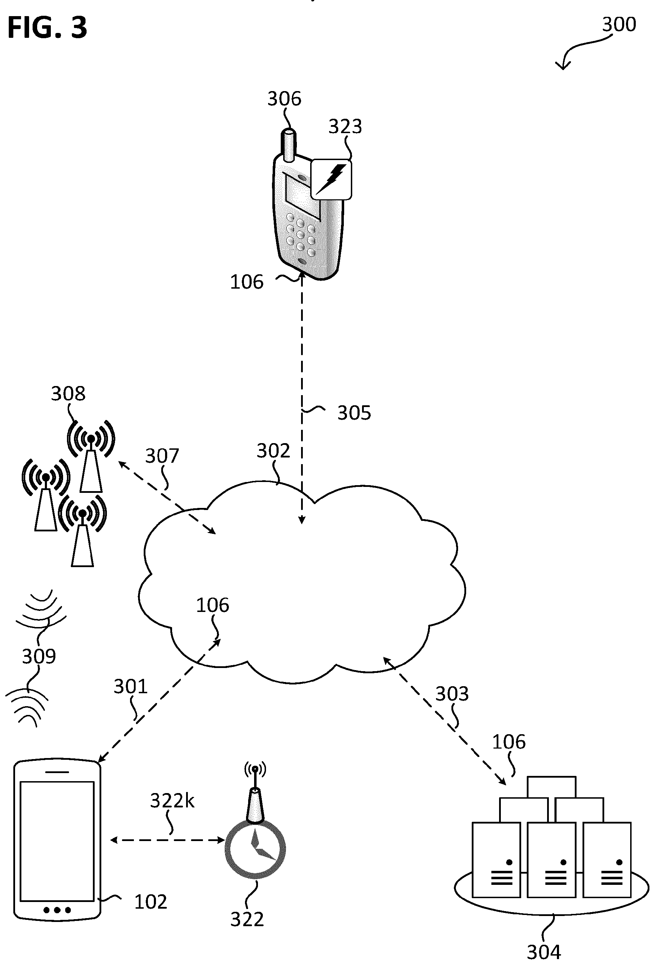

**Fig.3** veranschaulicht ein System 300 zum Durchführen des Verfahrens 100 oder 200 gemäß verschiedenen Ausführungsformen in einem schematischen Kommunikationsdiagram.

Das System 300 kann eine Verbindung zu einem Netzwerk 302 aufweisen (auch als Netzwerk-Verbindung bezeichnet), z.B. eine Internet-Verbindung. Mittels des Netzwerks 302 können die Bestandteile des Systems 300 untereinander kommunikativ miteinander gekoppelt sein, d.h. in der Lage sein, Informationen auszutauschen.

Das Netzwerk 302 kann mehrere Sub-Netzwerke aufweisen, welche miteinander verbunden sind. Das Netzwerk 302 kann beispielsweise, nach Reichweite unterschieden, ein lokales Netzwerk 302 (beispielsweise ein Local Area Network (LAN), ein Wireless LAN (WLAN), oder ein Personal Area Network (PAN), wie z.B. ein drahtloses PAN (WPAN), wie z.B. ein Bluetooth-Netzwerk) oder ein nichtlokale Netzwerk 302 (wie beispielsweise ein Metropolitan Area Network (MAN), ein Wide Area Network (WAN) oder ein Global Area Network (GAN)) aufweisen oder daraus gebildet sein. Das Netzwerk 302 kann beispielsweise nach Übertragungstyp unterschieden ein Funknetzwerk 302 (z.B. Mobilfunknetz) oder ein kabelgebundenes Netzwerk 302 aufweisen oder daraus gebildet sein. Das Netzwerk 302 kann beispielsweise auch ein zelluläres Funknetzwerk 302 (z.B. ein WLAN vom Typ IEEE 802.11 im Ad-hoc-Modus, ein Bluetooth-Netzwerk oder ein anderes zelluläres Mobilfunknetzwerk 302) aufweisen oder daraus gebildet sein.

Im Folgenden wird zum einfacheren Verständnis auf eine Internet-Verbindung Bezug genommen, d.h. dass das System 300 eine Verbindung mit dem Internet 302 (weltweiter Verbund von Rechnernetzwerken) aufweist oder Teil dessen ist. Das Beschriebene kann in Analogie allerdings auch für andere Konstellationen oder Netzwerke gelten.

Das System 300 kann das Mobilfunkgerät 102 aufweisen. Das Mobilfunkgerät 102 kann eingerichtet sein, drahtlos (d.h. per Funk) mit dem Netzwerk 302 zu kommunizieren 301, z.B. gemäß dem drahtlos-KP. Somit kann die Nachricht 106 an das Netzwerk 302 übermittelt werden, z.B. gemäß dem drahtlos-KP.

Das System 300 kann ferner eine Rechenanlage 304 aufweisen, z.B. einen Server, Computer oder Ähnliches. Die Rechenanlage 304 kann mit dem Netzwerk 302 kommunikativ verbunden 303 sein, z.B. gemäß einem Netzwerk-KP. Die Nachricht 106 kann beispielsweise gemäß dem drahtlos-KP an die Rechenanlage 304 adressiert sein, so dass diese mittels des Netzwerks 302 an die Rechenanlage 304 übermittelt wird.

Das System 300 kann ferner ein Empfängergerät 306 aufweisen, welches mit dem Netzwerk 302 kommunikativ verbunden 305 ist. Das Empfängergerät 306 kann beispielsweise ein Mobilgerät sein, z.B. ein anderes Mobilfunkgerät, z.B. ein Pager, z.B. ein Laptop, oder Ähnliches. Dann kann das Empfängergerät 306 mit dem Netzwerk 302 gemäß dem oder einem anderen drahtlos-KP verbunden sein. Das Empfängergerät 306 kann aber auch ein stationäres Gerät sein, z.B. ein Fernsehgerät, ein Smarthome-Gerät, ein fest verkabelter 305 Computer oder Ähnliches. Ferner kann das Empfängergerät 306 mit dem Netzwerk 302 gemäß dem oder einem anderen Netzwerk-KP verbunden 305 sein. Das System 300 kann beispielsweise eine Vielzahl von Empfängergeräten 306 aufweisen. Jedes Empfängergerät 306 kann optional von dem System 300 registriert sein oder werden, z.B. mittels einer Datenbank der Rechenanlage 304.

Die Nachricht 106 kann optional eine Angabe über das Empfängergerät 306 aufweisen (auch als Adressangabe bezeichnet), z.B. eine Kennung des Empfängergeräts 306. Die Rechenanlage 304 kann dann eingerichtet sein, die Adressangabe aus der Nachricht 106 zu extrahieren und die Nachricht 106 oder zumindest deren Inhalt (z.B. als neue Nachricht 106) an das Empfängergerät 306 gemäß der Adressangabe zu übermitteln.

Das Empfängergerät 306 kann eingerichtet sein, die Standortdaten mittels der Nachricht 106 zu ermitteln und diese gemeinsam mit der Alarmangabe auszugeben 323 (auch als Alarmschlagen 323 bezeichnet), z.B. visuell und/oder akustisch. Alternativ oder zusätzlich kann aber auch die Rechenanlage 304 eingerichtet sein, die Standortdaten und die Alarmangabe zu extrahieren und dem Empfängergerät 306 ein Kommando (z.B. als neue Nachricht 106) zu übermitteln, welches das Empfängergerät 306 zu dem Alarmschlagen 323 veranlasst. Das Alarmschlagen 323 kann beispielsweise aufweisen, eine Karte anzuzeigen, die eine Markierung gemäß der Standortangabe aufweist. Optional kann das Empfängergerät 306 eingerichtet sein, Navigationsdaten zu ermitteln, welche eine Route zu dem Standort des Empfängergeräts 306 gemäß der Standortangabe repräsentieren, und diese auszugeben.

Optional kann das System 300 eingerichtet sein, eine Kommunikationsverbindung zwischen dem Empfängergerät 306 und dem Mobilfunkgerät 102 zu initiieren, z.B. eine Sprechverbindung. Damit kann erreicht werden, dass ein Benutzer des Empfängergeräts 306 (auch als Empfänger oder Sicherheitsgeber bezeichnet) mit dem Anwender 104 Rücksprache halten kann.

Weist das System 300 optional mehrere Empfängergeräte 306 auf, kann die Rechenanlage 304 eingerichtet sein, eines von diesen Empfängergeräten 306 auszuwählen, an welche die Nachricht bzw. das Kommando übermittelt wird (auch als Empfängerauswählen bezeichnet). Das Empfängerauswählen kann beispielsweise auf Grundlage eines jeweiligen Standortes jedes der Empfängergeräte 306, einer jeweiligen Verfügbarkeit jedes der Empfängergeräte 306, einer vom Anwender 104 definierten Präferenz und/oder der Adressangabe erfolgen. Beispielsweise kann dasjenige Empfängergerät 306 ausgewählt werden, das dem Mobilfunkgerät 102 am nächsten ist, das die größte Präferenz aufweist, und/oder das als verfügbar gekennzeichnet ist.

Das Mobilfunkgerät 102 kann eine Anwendung aufweisen. Die Anwendung kann beispielsweise eine lokale Anwendung sein, z.B. auf dem Mobilfunkgerät 102 installiert sein (z.B. nichtflüchtig im Betriebssystem eingebettet ist) und/oder von diesem ausgeführt werden. Alternativ oder zusätzlich kann die Anwendung eine Webanwendung sein. Die Webanwendung kann beispielsweise auf der Rechenanlage 304 ausgeführt werden und nur deren Benutzeroberfläche auf einem Webbrowser des Mobilfunkgeräts 102 dargestellt werden (z.B. analog zu einem Fernzugriff).

Die Anwendung kann eingerichtet sein, mit der Rechenanlage 304 zu kommunizieren (z.B. auf der Anwendungsschicht), z.B. zum Übertragen der Nachricht 106 und/oder zum Abrufen von Informationen (z.B. eines Updates) oder Daten aus der Datenbank.

Das System 300 weist optional die externe Auslösevorrichtung 322 auf, welche beispielsweise mit dem Mobilfunkgerät 102 und/oder dem Netzwerk 302 gekoppelt 322k ist. Das System 300 weist optional eine oder mehr als eine Funkbake 308 (auch als Beacon bezeichnet) auf, welche mit dem Netzwerk 302 (z.B. kabelgebunden) verbunden 307 ist. Die oder jede Funkbake 308 kann beispielsweise eingerichtet sein, mit dem Mobilfunkgerät 102 drahtlos zu kommunizieren 309, z.B. um dem Mobilfunkgerät 102 eine Position und/oder Kennung der Funkbake 308 zu übermitteln und/oder um mittels der Funkbake 308 die Nachricht 106 an das Netzwerk 302 zu übermitteln.

Die Nachricht 106 kann auf ihrem Weg durch das Netzwerk (z.B. bis zum Empfang an der Rechenanlage 304 und/oder dem Empfängergerät 306) optional gemäß verschiedenen KP übertragen werden. Beispielsweise kann die Nachricht 106 nacheinander gemäß einem Bluetooth-KP, einem TCP/IP-KP (Transmission Control Protocol/Internet KP), und wieder einem Bluetooth-KP übertragen werden.

In dem System 300 können eine oder mehr als eine Komponente weggelassen werden, je nachdem, wie das Verfahren durchgeführt wird, z.B. die Funkbake(n) 308, die Rechenanlage 304 und/oder die Auslösevorrichtung 322.

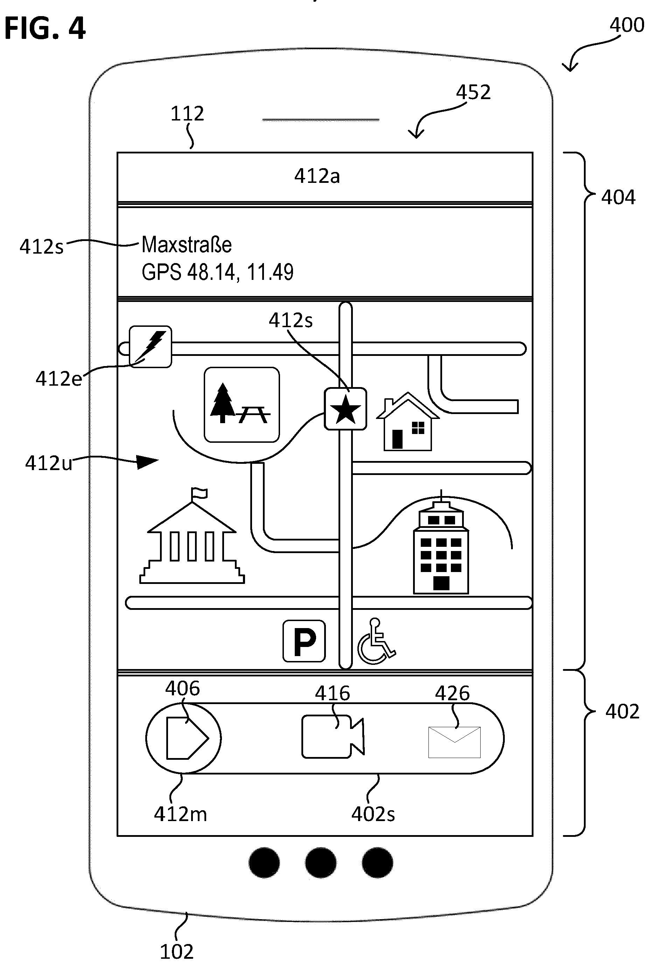

**Fig.4** veranschaulicht ein Mobilfunkgerät 102, das eine Anwendung 452 zum Durchführen des Verfahrens 100 oder 200 gemäß verschiedenen Ausführungsformen ausführt, in einer schematischen Draufsicht 400, z.B. auf eine visuelle Ausgabe der Anwendung mittels der Anzeigevorrichtung 112 (oder allgemeiner einer Benutzerschnittstelle 112) des Mobilfunkgeräts 102. Hierin wird zum vereinfachten Verständnis auf ein Mobilfunkgerät 102, dass mittels der Anwendung 452 das Verfahren 100 oder 200 implementiert, Bezug genommen. Das Beschriebene kann in Analogie auch für ein anderweitig eingerichtetes Mobilfunkgerät 102, das zum Durchführen des Verfahrens 100 oder 200 eingerichtet ist, gelten.

Die Anwendung 452 kann einen interaktiven Teil 402 (z.B. eine erste Anzeigevorrichtung-Teilfläche 402 belegend) und einen reaktiven Teil 404 (z.B. eine zweite Anzeigevorrichtung-Teilfläche 404 belegend) aufweisen, welche angezeigt werden. Der interaktive Teil 402 kann eingerichtet sein, mit dem Anwender 104 zu interagieren. Die Anwendung 452 kann optional einen Satz persönliche Einstellungen und/oder Abfragen bereitstellen, mittels denen der Anwender 104 die Funktionen der Anwendung 452 und/oder des Systems 302 beeinflussen kann (im Folgenden auch als Wahlentscheidung bezeichnet).

Die Anwendung 452 kann eingerichtet sein, eine oder mehr als eine der folgenden Informationen auszugeben (z.B. mittels der Benutzerschnittstelle 112) und/oder periodisch zu aktualisieren,
- eine Information über den Modus 107, 109, in dem das Mobilfunkgerät 102 betrieben wird (auch als Modusinformation bezeichnet);
- eine Information 412s über die Standortangabe (auch als Standortinformation 412s bezeichnet);
- eine Information über die Verbindungsqualität zu dem Netzwerk 302;
- eine Information 412e (auch als Empfängergerätinformation bezeichnet) über ein oder mehr als ein Empfängergerät 306 (z.B. dessen Standort, Verfügbarkeit und/oder Kennung);
- eine Information zu persönlichen Einstellungen der Anwendung;
- eine Information (auch als Erfassungsinformation bezeichnet) über die erfasste Berührung (z.B. deren Eigenschaften);
- eine Information 412u (auch als Umgebungsinformation bezeichnet) über einer Beschaffenheit der räumlichen Umgebung des Mobilfunkgeräts 102 (z.B. eine Karte, Fluchtwege, usw.);
- einen Hinweis 406 (auch als Berührungshinweis bezeichnet) zu einer Berührung, die ein oder mehr als ein Berührungskriterium erfüllen würde (z.B. eine Richtungsangabe, ein Symbol oder einen vorgezeichneten Pfad);
- einen Hinweis darüber, welche oder dass die Anwendung ausgeführt wird (z.B. den Anwendungsnamen und/oder ein Aktivitätshinweis); und/oder
- eine Information über den Ablauf des Zeitauslösers.

Der reaktive Teil 404 kann beispielsweise zumindest die Empfängergerätinformation 412e, die Umgebungsinformation 412u und/oder die Standortinformation 412s aufweisen. Der interaktive Teil 402 kann beispielsweise zumindest die Modusinformation und/oder den Berührungshinweis 412s aufweisen. Der Berührungshinweis 412s kann beispielsweise einen oder mehr als einen Bereich des Berührungssensors angeben, an dem die Berührung 103b beginnen und/oder enden soll und/oder entlang dessen die Berührung verändert werden soll (z.B. eine Trajektorie).

Die Erfassungsinformation, die Modusinformation und/oder der Berührungshinweis können beispielsweise einander überlagert sein oder werden. Beispielsweise kann ein virtueller Marker 412s (z.B. eine Reglerposition) angezeigt werden, dessen Farbe die Modusinformation repräsentiert, dessen Position die Erfassungsinformation repräsentiert und/oder der ein oder mehr als ein Symbol 406 (z.B. einen Pfeil) aufweist, welches den Berührungshinweis und/oder die Modusinformation repräsentiert. Es können auch andere Symbole 416, 426 angezeigt werden, welche den Berührungshinweis und/oder die Modusinformation repräsentieren.

Die Standortinformation 412s kann beispielsweise die Koordinaten und/oder einen Namen des Standorts aufweisen, z.B. den Straßenname, Stadtnamen, Landnamen, usw. Die Empfängergerätinformation 412e und/oder die Standortinformation 412s können beispielsweise mit der Umgebungsinformation 412u überlagert sein oder werden.

Der interaktive Teil 402 kann beispielsweise im unteren Viertel der Anzeigevorrichtung 112 des Mobilfunkgeräts 102 dargestellt werden, beispielsweise in Form eines Schiebereglers 402s (auch als Slider bezeichnet), mit Hilfe dessen der Anwender 104 mit der Anwendung 452 interagieren kann, z.B. eine oder mehr als eine Funktionalität der Anwendung ansteuern und/oder kontrollieren kann.

Anstatt des Schiebereglers 402s kann alternativ oder zusätzlich ein oder mehr als ein anderes physisches Bedienelement 402s (z.B. ein Taster des Mobilfunkgeräts 102) und/oder virtuelles Bedienelement 402s (z.B. ein Navigationsbalken oder ein Drehrad) verwendet werden, dessen Betätigung beispielsweise mittels der Anzeigevorrichtung 112 des Mobilfunkgeräts 102 als Rückmeldung angezeigt werden kann. Die Anwendung 452 kann die Berührungsgesten des Anwenders 104 auswerten, die das Betriebssystem des Mobilfunkgeräts 102 erfasst und über seine Programmierschnittstellen zur Verfügung stellt. Sollte sich die Anzahl der Berührungspunkte ändern, die das Betriebssystem erfasst oder sollte der den Schieberegler 402s bedienende Finger vom Mobilfunkgerät 102 entfernt werden, so kann die Anwendung 452 darauf reagieren.

Im Folgenden wird zur Vereinfachung des Verständnisses auf ein Bedienelement 402s in Form eines Schiebereglers 402s mit einem Marker 412m Bezug genommen. Dasselbe kann in Analogie auch für andere Formen und/oder Ausgestaltungen des Bedienelements 402s gelten.

Der Schieberegler 402s kann eine Fläche aufweisen, auf welcher der Marker 412m mittels Berührungsgesten horizontal und/oder vertikal verschoben werden kann, wie später noch genauer beschrieben wird. Die Position des Markers ganz links (allgemeiner eine erste Markerposition) entspricht beispielsweise 0% des Reglers. Die Position des Marker ganz rechts (allgemeiner eine zweite Markerposition) entspricht beispielsweise 100% des Reglers. Die Berührung 103b des Schiebereglers 402s kann von der Anwendung erfasst und/oder ausgelesen werden und mittels einer Positionierung des Markers (z.B. Änderung der Markerposition) am Ort der Berührung 103b zurückgemeldet werden. Der Bereich zwischen der ersten Markerposition (z.B. am linken Rand der Fläche) und der aktuellen Position des Markers kann farblich unterlegt sein oder werden, um den aktuellen Modus 107, 109 des Mobilfunkgeräts 102 anzuzeigen.

An verschiedenen Stellen der Fläche weist der Schieberegler 402s Symbole 406, 416, 426 (Icons) auf, die je nach Position des Markers 412m ausgegraut (nicht aktiviert) und/oder hervorgehoben (aktiviert) werden. Zusätzlich kann die Anwendung 452 unterschiedlich reagieren, je nachdem an welcher Position der Marker 412m losgelassen wird. Wird die Berührung des Schieberegler 402s in dem Ruhemodus 107 unterbrochen, kann der Marker beispielsweise in die erste Markerposition springen. In Kombination erlauben diese Berührungs- und Rückmeldungsmuster mit nur einem einzigen Bedienelement eine komplexe Interaktion des Anwenders 104 mit dem Mobilfunkgerät 102 (z.B. dessen Anwendung 452), z.B. ohne dass der Anwender 104 in einer Stresssituation überfordert wird.

Die Kommunikation zwischen der Anwendung 452 (auch als App bezeichnet) und der Rechenanlage 304 (z.B. Servern) kann beispielsweise über das Internet 302 erfolgen. Alternativ oder zusätzlich können zusätzliche Kommunikationswege bereitgestellt sein oder werden, wie später noch genauer beschrieben wird, die beispielsweise genutzt werden, wenn die Kommunikation mittels des Internets 302 eingeschränkt (z.B. blockiert) ist. Beispielsweise kann je nach von dem Betriebssystem (z.B. iOS und/oder Android) bereitgestellten Programmierschnittstellen das Alarmieren 111 mittels einer SMS und/oder Telefonie erfolgen, falls eine Kommunikation darüber möglich ist. Alternativ oder zusätzlich kann das Alarmieren 111 mittels Bluetooth erfolgen.

Zumindest einige der Symbole 416, 426 können beispielsweise zu einer Position korrespondieren, in die der Marker gebracht werden soll, um eine Funktionalität der Anwendung 452 anzusteuern (z.B. zu starten) und/oder um ein Berührungskriterium zu erfüllen. Beispielsweise kann es Bringen des Markers 412m in die zweite Markerposition 426 veranlassen, dass das Alarmieren 111 erfolgt. Beispielsweise kann es das Bringen des Markers 412m in eine dritte Markerposition 416 zwischen der ersten und zweiten Markerposition (z.B. bei ungefähr 50%) veranlassen, dass ein dritter Sensor (z.B. eine Kamera, z.B. Videokamera) des Mobilfunkgeräts 102 aktiviert wird und/oder mittels diesem Audiodaten und/oder Bilddaten erfasst werden (auch als Umgebungsaufzeichnen bezeichnet).

Mittels Berührens des Schiebereglers 402s (d.h. aktive Steuerung) kann das Mobilfunkgerät 102 zwischen dem Ruhemodus 107 und dem Bereitschaftsmodus 109 umgeschaltet 105 werden, wie nachfolgend näher erläutert wird. Der reaktive Teil 404 kann optional umgeschaltet werden, je nach dem Modus bzw. der jeweiligen Funktionalität der Anwendung 452, welche der Anwender 104 über den Schieberegler 402s ansteuert.

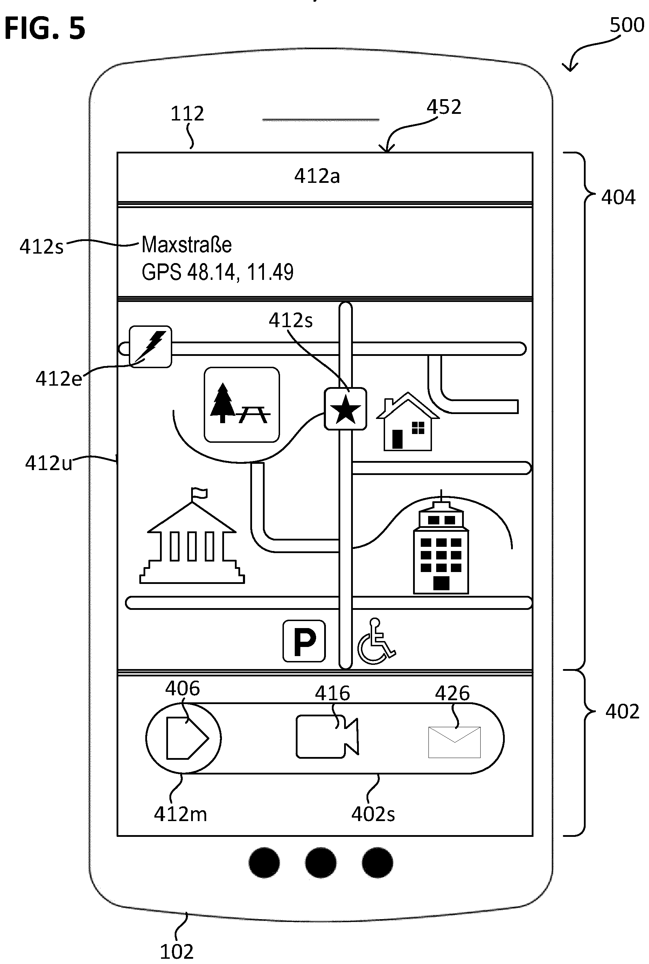

Fig.5 veranschaulicht ein Mobilfunkgerät 102 in dem Ruhemodus 107 in einer schematischen Draufsicht 500 analog zu Draufsicht 400. Der Ruhemodus 107 kann der Ausgangszustand sein, in dem das Mobilfunkgerät 102 gebracht ist oder wird, wenn die Anwendung 452 gestartet und/oder in den Vordergrund gebracht wird. Ohne ein Betätigen des Schieberegler 402s (z.B. Verschieben des Markers 412m nach rechts), kann der Schieberegler 402s angeben, dass das Mobilfunkgerät 102 in dem Ruhemodus 107 ist. Im Ruhemodus 107 kann sich der Marker 412m beispielsweise in der ersten Markerposition befinden. Der Schieberegler 402s und/oder der Marker 412m können beispielsweise in ihrer Erscheinung (z.B. Farbe, Form und/oder Größe) variiert 412s werden, z.B. periodisch (anschaulich "atmen"), um anzugeben, dass die Anwendung ausgeführt wird (d.h. als Aktivitätshinweis). Der Schieberegler 402s kann optional angeben, dass die Möglichkeit besteht, aus dem Ruhemodus 107 heraus zu veranlassen, dass eine Videoaufnahme (zum Videobeweis) gestartet wird, z.B. indem der Marker 412m auf eine dritte Markerposition 416 verschoben wird, und/oder dass das Alarmieren 111 durchgeführt wird, z.B. in dem der Marker 412m die zweite Markerposition 426 verschoben wird.

In dem Ruhemodus 107 kann die Standortangabe (z.B. GPS-Koordinaten, die Straße, die Gegend und/oder X-Y-Koordinaten der Geodaten des Mobilfunkgeräts 102 aufweisend) an das Empfängergerät 306 übermittelt werden.

Für das Lokalisieren 101 (vereinfacht als Ortung des Mobilfunkgeräts 102 bezeichnet) können primär die vom Betriebssystem zur Verfügung gestellten Programmierschnittstellen genutzt werden. Diese greifen neben der Ortung über GPS auch auf die WLAN-Topologie und andere Techniken zurück, um das Mobilfunkgerät 102 möglichst genau lokalisieren 101 zu können. Optional können Signale von einer Bluetooth-Funkbake 308 in der Nähe des Mobilfunkgeräts 102 von diesem erfasst werden, um den Standort des Mobilfunkgeräts 102 zu ermitteln. Beispielsweise kann die Anwendung 452 Daten von eigenen Funkbaken 308 des Systems 300 erfassen, die beispielsweise innerhalb eines Gebäudes angeordnet sind, um das Lokalisieren 101 in Gebäuden zu erleichtern. Die Position einer Funkbake 308 kann beispielsweise mittels einer Datenbank der Rechenanlage 304 gespeichert sein oder werden oder von der Funkbake selbst mitgeteilt werden. Die Position einer Funkbake 308 kann z.B. von dem Mobilfunkgerät 102 (z.B. von der Anwendung 452) ermittelt werden auf Grundlage der Datenbank. Die so erhaltenen Daten können mit der vom Betriebssystem bereitgestellten Daten kombiniert werden, was es ermöglicht, den Standort des Mobilfunkgeräts 102 mit höherer Genauigkeit zu ermitteln. Die oder jede Funkbake 308 erleichtert somit das Lokalisieren 101 und/oder kann optional einen zusätzlichen Kommunikationsweg bereitstellen. Allgemeiner gesprochen, kann das Lokalisieren 101 gängige Ortungsstandards verwenden (z.B. nachträglich integriert oder aktualisiert).

Auf der zweiten Anzeigevorrichtung-Teilfläche 404 kann eine Karte 412u angezeigt werden, die dem Anwender 104 signalisiert, dass er eine Verbindung zu dem System 300 und/oder dem Empfängergerät 306 (anschaulich "auf dem Radar" des entsprechenden Helfers ist) hat, z.B. wenn er dies per Wahlentscheidung autorisiert hat. Alternativ oder zusätzlich kann eine Funkbake 308 signalisieren (z.B. dem Mobilfunkgerät 102), dass sich das Mobilfunkgerät 102 in einer von dem System 300 überwachten Umgebung befindet, z.B. auch wenn dessen Verbindung zu dem Netzwerk 302 eingeschränkt oder unterbrochen ist (z.B. ohne Internet-Verbindung). Das Alarmieren 111 kann beispielsweise mittels gesicherter Bereiche (sogenannter Sicherheitsbereiche) erfolgen und kann damit beispielsweise auch ohne eine Verbindung des Mobilfunkgeräts 102 zu dem Netzwerk 302 erfolgen, wie später genauer beschrieben wird.

Auf der zweiten Anzeigevorrichtung-Teilfläche 404 kann optional angegeben werden, dass die Standortangabe 412s an das Empfängergerät 306 übermittelt wurde und/oder dass das Empfängergerät 306 verfügbar ist. Beispielsweise kann das Empfängergerät 306 eingerichtet sein, per Benutzereingabe sich als verfügbar und/oder nicht-verfügbar zu kennzeichnen, z.B. in Antwort auf den Erhalt der Standortangabe. Anschaulich kann der Sicherheitsgeber so Kenntnis davon erlangen, wo sich der Anwender 104 aufhält, und der Anwender 104 kann Kenntnis davon erlangen, dass sein Standort dem Sicherheitsgeber bekannt ist. Dies kann dem Anwender 104 ein selbstbestimmtes und ruhiges Gefühl vermitteln und so Fehlentscheidungen und/oder Stress vorbeugen.

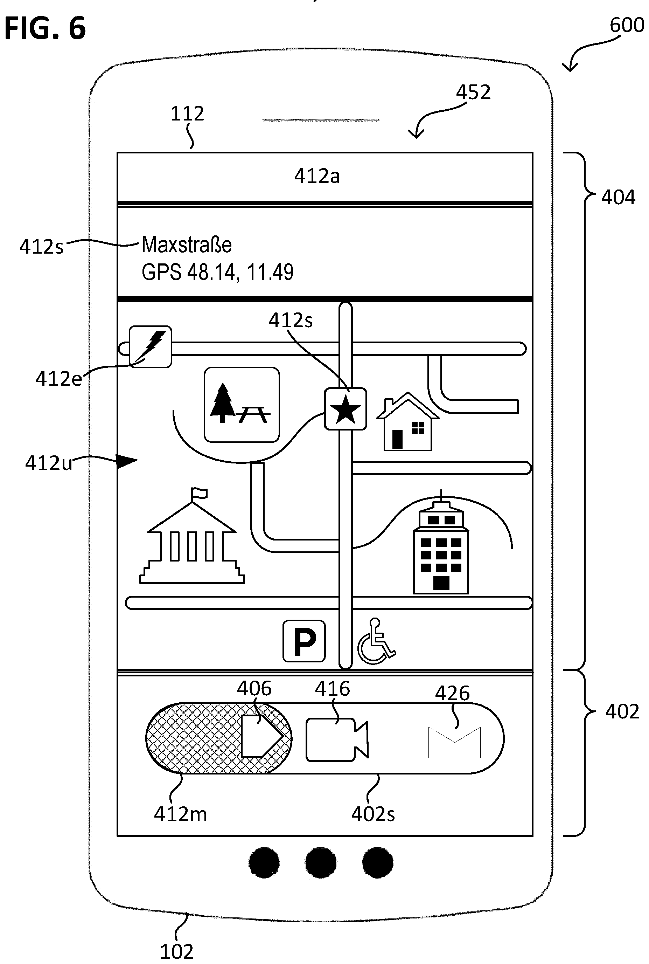

**Fig.6** veranschaulicht ein Mobilfunkgerät 102 in dem Bereitschaftsmodus 109 in einer schematischen Draufsicht 600 analog zu Draufsicht 400. Der Marker 412m kann der Berührung durch den Anwender 104 nachfolgen, d.h. dessen Erscheinung (z.B. Position, Farbe und/oder Form) kann die Erfassungsinformation repräsentieren. Damit kann direkt eine Rückmeldung zu dem Anwender 104 erfolgen, dass und/oder wie seine Berührung erfasst wurde. Zum Scharfschalten 105 des Mobilfunkgeräts 102 kann der Anwender 104 den Marker 412m mittels der Berührung (d.h. aktiv) verschieben, z.B. nach rechts. Damit kann der Marker 412m neben der ersten Markerposition angeordnet sein. In Antwort auf das Scharfschalten 105 kann optional eine Rückmeldung von dem Mobilfunkgerät 102 abgeben werden. Beispielsweise kann der Marker 412m in seiner Erscheinung (z.B. Farbe) verändert werden und/oder das Mobilfunkgerät 102 kann eine haptische Rückmeldung, z.B. mittels einer Vibration, abgeben.

Solange der Anwender 104 den Berührungskontakt in dem Bereitschaftsmodus 109 zum dem Schieberegler 402s (z.B. dessen Marker) aufrechterhält, kann kein Alarmieren 111 erfolgen. In Antwort darauf, dass in dem Bereitschaftsmodus 109 erfasst wurde, dass der Anwender 104 (z.B. sein Finger) den Berührungskontakt zum Schieberegler 402s verliert (z.B. durch Eigen- oder Fremdeinwirkung), kann das Alarmieren 111 erfolgen. Dieser Mechanismus erreicht, dass es für einen Dritten (z.B. einen Angreifer) erschwert wird, dem Anwender 104 das Mobilfunkgerät 102 zu entwenden, ohne dass der Berührungskontakt abbricht, oder das Entschärfen 105 durchzuführen, ohne das Einverständnis des Anwenders 104 zu haben. Ein Dritter müsste beispielsweise sofort und mit Gewalt den Finger des Anwenders 104 auf der exakten Position festhalten um das Alarmieren 111 zu verhindern. Anschließend müsste der Finger des Anwenders 104 mit Gewalt zur ersten Markerposition zurückgeführt werden.

Optional kann der Marker 412m automatisch angeben, dass das Alarmieren 111 erfolgt ist, z.B. indem dieser weiter in Richtung der zweiten Markerposition 426 verschoben und/oder in seiner Erscheinung verändert wird. Das Entschärfen 105 des Mobilfunkgeräts 102 kann beispielsweise nur erfolgen, indem der Marker 412m mittels der Berührung in Richtung zu der ersten Markerposition hin (z.B. nach links) zurückgeführt wird.

Allgemeiner gesprochen können ein erstes Berührungsmuster (z.B. eine Wischgeste nach rechts) das Scharfschalten 105 und ein dazu entgegengesetztes (z.B. invertiertes) zweites Berührungsmuster das Entschärfen 105 auslösen. Das zweite Berührungsmuster muss allerdings nicht notwendigerweise entgegengesetzt zu dem ersten Berührungsmuster sein. Beispielsweise kann alternativ oder zusätzlich das Entschärfen 105 nur bei Eingabe eines Authentifizierungscodes (d.h. dass das zweite Berührungsmuster unter anderem den Authentifizierungscode repräsentiert) erfolgen.

Solange der Finger des Anwenders 104 in Berührung mit dem Schieberegler 402s bleibt, kann das Mobilfunkgerät 102 in dem Bereitschaftsmodus 109 bleiben, ohne das Alarmieren 111 durchzuführen. Somit kann sich der Anwender 104 sicher sein, dass er in voller Kontrolle seines Mobilfunkgeräts 102 bleibt solange er in Berührungskontakt mit selbigem ist. Sollte der Berührungskontakt unterbrochen werden, dann kann das vom Anwender 104 gewollt sein. Ansonsten kann bei Kontaktverlust zum Schieberegler 402s immer automatisch das Alarmieren 111 erfolgen, außer, wenn das Mobilfunkgerät 102 im Ruhemodus 107 ist. Um das Mobilfunkgerät 102 zu entschärfen 105 (d.h. in den Ruhemodus 107 umzuschalten), kann es beispielsweise erforderlich sein, dass der Anwender 104 den Schieberegler 402s wieder komplett nach links verschiebt ohne den Kontakt zum Schieberegler 402s zu verlieren. Das Betätigen des Schiebereglers 402s (z.B. Hin- und Herschieben des Markers 412m) zum Scharfstellen 105 und Entschärfen 105 des Mobilfunkgeräts 102 kann optional jeweils mit einer kurzen Vibration durch das Mobilfunkgerät 102 quittiert werden. Der Anwender 104 erhält damit eine haptische Rückmeldung, dass die Anwendung 452 noch reagiert.

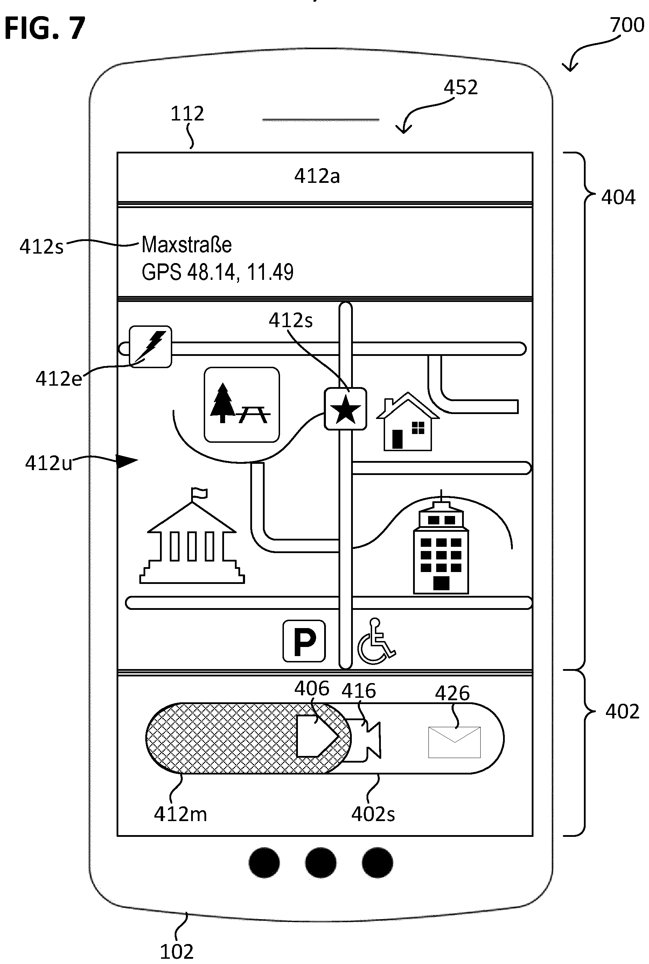

**Fig.7** veranschaulicht ein Mobilfunkgerät 102 in einer schematischen Draufsicht 700 analog zu Draufsicht 400, wenn das Mobilfunkgerät 102 in dem Bereitschaftsmodus 109 ist. Optional kann das Verfahren 100 oder 200 aufweisen, dass Umgebungsdaten, z.B. Audiodaten und/oder Bilddaten, erfasst werden, z.B. mittels des dritten Sensors des Mobilfunkgeräts (auch als Umgebungsaufzeichnen bezeichnet). Der dritte Sensor kann eine Kamera und/oder ein Mikrofon aufweisen. Die Bilddaten können beispielsweise Fotodaten und/oder Videodaten aufweisen oder daraus gebildet sein.

Das Umgebungsaufzeichnen kann erfolgen, wenn in dem Bereitschaftsmodus 109 ermittelt wurde, dass die Berührung ein drittes vordefiniertes Kriterium (auch als Aufzeichnenkriterium bezeichnet) erfüllt. Das Aufzeichnenkriterium kann beispielsweise erfüllt sein, wenn der Marker auf die dritte Markerposition 416 und/oder auf ein Kamerasymbol 416 des Schiebereglers 402s gezogen wird.

Anstatt permanent überwacht zu werden, kann dem Anwender 104 die Wahlentscheidung, sich mittels des Mobilfunkgeräts 102 selbst bewachen zu können, bereitgestellt werden, beispielsweise mittels der Videokamera des Mobilfunkgeräts 102. Zum Selbstschutz kann so ein potentieller Angreifer abgeschreckt werden, während sein Handeln gleichzeitig per Umgebungsaufzeichnen (z.B. Video- und/oder Audioaufzeichnung) festgehalten wird. Dies kann im Vergleich zu statischen Überwachungs- und Sicherheitsmaßnahmen die Überwachung verbessern. Damit kann gehemmt werden, dass unbewachte Bereiche für Dritte zu einem beliebten Ziel werden. Die Aufzeichnungen der Audio- und/oder Bilddaten kann optional der postkriminellen Beweissicherung dienen. Zum Schutz vor Missbrauch und gewaltsamen Entfernen des aufgezeichneten Beweismaterials, können die Aufzeichnungen je nach Netzabdeckung lokal gespeichert werden und/oder an die Rechenanlage 304 (z.B. externe Server) übermittelt und dort abgespeichert werden.

In dem Ruhemodus 107 (z.B. wenn die Anwendung 452 im Hintergrund inaktiv oder beendet ist) kann kein Umgebungsaufzeichnen durch die Anwendung 452 erfolgen (d.h. dass keine Audio- und/oder Videodaten erfasst werden). Das Umgebungsaufzeichnen kann je nach Betriebssystem nur bei im Vordergrund laufender Anwendung 452 möglich sein und/oder automatisch erfolgen, sobald das Scharfstellen 105 durch den Anwender 104 erfolgt. Einmal gestartet, kann das Umgebungsaufzeichnen optional auch dann fortgeführt werden, wenn das Mobilfunkgerät 102 nicht mehr mit dem Anwender 104 in Kontakt steht, z.B. wenn der Anwender 104 den Schieberegler 112m nicht mehr berührt.

Sofern die Anwendung 452 von dem Anwender 104 gestartet wurde (z.B. im Vordergrund oder sichtbar im Hintergrund, z.B. als Daemon), kann der Standort des Mobilfunkgeräts 102 von der Anwendung 452 ausgelesen und/oder periodisch aktualisiert (anschaulich mitprotokolliert) werden, z.B. ähnlich zu oder basierend auf einer Kartennavigation oder Kartennavigation-Anwendung.

Das Umgebungsaufzeichnen kann beispielsweise aufweisen, die Umgebungsdaten (z.B. Bild- und/oder Audiodaten) mit der Standortangabe (z.B. Geodaten) zu verknüpfen. Beispielsweise können die Umgebungsdaten georeferenziert werden. Die Umgebungsdaten können in dem Datenspeicher des Mobilfunkgeräts 102 gespeichert werden. Alternativ oder zusätzlich können die Umgebungsdaten nach extern, z.B. in mehreren Datenpaketen, gemäß dem drahtlos-KP übermittelt werden, z.B. an einen der Anwendung 452 zugeordneten Cloudspeicher der Rechenanlage 304 und dort gespeichert werden.

Die extern von dem Mobilfunkgerät 102 gespeicherten Umgebungsdaten können dem Anwender 104 mittels der Anwendung 452 oder auf einem anderen Weg zugänglich gemacht werden, z.B. für eine fest definierte Dauer (auch als Zugänglichkeitsdauer bezeichnet). Der Anwender 104 des Mobilfunkgeräts 102 kann zu seinem eigenen Schutz die Wahlentscheidung bereitgestellt werden, das gespeicherte Videomaterial nicht löschen zu können (z.B. für die Zugänglichkeitsdauer), um so nicht von Dritten erpressbar zu sein. Die Umgebungsdaten können nach einer anderen fest definierten Dauer automatisch gelöscht werden, z.B. von der Rechenanlage 304. Sollten die Umgebungsdaten relevante Daten für eine strafrechtliche Verfolgung des Dritten beinhalten, kann dem Anwender 104 die Wahlentscheidung bereitgestellt werden, das Material aus dem Cloudspeicher der Rechenanlage 304 innerhalb der Zugänglichkeitsdauer auf das Mobilfunkgerät 102 und/oder einen Cloudspeicher des Anwenders 104 herunterzuladen und damit frei darüber zu verfügen. Die Metadaten (z.B. Länge, Auflösung, usw.) der Umgebungsdaten und/oder die Standortangabe können beispielsweise anonymisiert gespeichert werden.

Das eingesetzte drahtlos-KP kann eine Übertragung der Standortangabe und/oder der Umgebungsdaten von wenigen Sekunden Länge mittels sequenzieller Datenpakete unterstützen. Dies erreicht, dass einzelne Unterbrechungen bei schlechter Kommunikationsverbindung oder bei einem Eingriff durch den Dritten nicht die komplette Aufzeichnung kompromittieren. Die Rechenanlage 304 kann für die Zuordnung der Datenpakete lediglich eine Benutzerkennung (z.B. eine eineindeutige 64 Zeichen lange Zeichenkette) speichern, die keinen Rückschluss auf die Person des Anwenders 104 zulässt. Soll eine Kommunikation mit einer öffentlichen (z.B. staatlichen) Notrufnummer (z.B. mit der Polizei) erfolgen, kann es optional erforderliche sein, dass die Mobilfunknummer des Mobilfunkgeräts 102 von der Anwendung 452 validiert wurde. Allgemeiner gesprochen, kann anstatt der Notrufnummer ein anderer öffentlicher (z.B. staatlicher) oder privater Notrufkontakt verwendet werden.

Die Rechenanlage 304 kann allerdings frei von Angaben zu der Mobilfunknummer des Mobilfunkgeräts 102 bleiben. Alternativ oder zusätzlich kann die Mobilfunknummer nicht zusammen mit der Benutzerkennung an die Rechenanlage 304 übermittelt werden. Der Anwender 104 kann optional persönliche Informationen von sich der Anwendung 452 bereitstellen, z.B. sein Name und sein Bild, um eine Identifizierung durch den Sicherheitsgeber zu erleichtern.

Wenn der Schieberegler 402s durch Verschiebung des Markers 412m nach rechts eine gewisse Aktivierungsschwelle überschritten hat (beispielsweise in etwa in der Mitte des Schiebereglers 402s), kann das Umgebungsaufzeichnen gestartet werden. Das Umgebungsaufzeichnen kann beendet werden, sobald der Schieberegler 402s wieder unter die Aktivierungsschwelle nach links verschoben wurde. Das Mobilfunkgerät 102 kann währenddessen die ganze Zeit in dem Bereitschaftsmodus 109 bleiben, auch wenn das Umgebungsaufzeichnen beendet wird. Um ausgehend von dem aktivierten Umgebungsaufzeichnen zurück in den Ruhemodus 107 zu gelangen, kann es erforderlich sein, wie vorangehend beschrieben, den Marker 412m wieder in die erste Markerposition zu verschieben, ohne den Berührungskontakt zu dem Marker 412m zu verlieren. Allgemeiner gesprochen, kann das Entschärfungskriterium erfüllt sein, wenn der Marker 412m in die erste Markerposition gebracht ist.

Damit zum sequentiellen Erfüllen des Scharfschaltungskriteriums und des Aufzeichnenkriteriums die Gefahr der Unterbrechung der Berührung (d.h. der Verlust des Berührungskontakts) reduziert wird, können die jeweiligen Kriterien derart eingerichtet sein, dass diese mittels einer fortsetzbaren und/oder nicht gegenläufigen Berührung erfüllt werden können. Der Anwender 104 kann somit ausgehend von dem aktivierten Umgebungsaufzeichnen den Marker 412m noch weiter nach rechts verschieben, um das Alarmieren 111 manuell auszulösen, oder nach links verschieben, um das Umgebungsaufzeichnen zu beenden oder in den Ruhemodus 107 umzuschalten. Ein Loslassen des Markers 412m beim Umgebungsaufzeichnen kann das Alarmieren 111 auslösen. Während des Umgebungsaufzeichnens können die Umgebungsdaten optional abschnittsweise mittels einer (z.B. kryptografischen) Hashfunktion abgebildet (anschaulich "gehashed") werden und/oder auf einer Blockkette (auch als Blockchain bezeichnet) gespeichert werden, was erreicht, dass diese zeitlich eindeutig verifiziert sind. Die Blockkette kann eine kontinuierlich erweiterbare Liste von Datensätzen, "Blöcke" genannt, bereitstellen, die mittels eines kryptographischen Verfahrens (z.B. mittels der Hashfunktion) miteinander verkettet sind. Das Löschen der Umgebungsdaten kann damit für den Betreiber der Rechenanlage 304 erschwert oder unmöglich sein, ohne Spuren zu hinterlassen. Beispielsweise kann eine Logik bereitgestellt werden, die eingerichtet ist, Umgebungsdaten inklusive der dazugehörenden Positionsangabe zu bilden und deren mittels der Hashfunktion erzeugtes Abbild auf einer der Blockkette zu sichern.

Für jedes von der Rechenanlage 304 empfangene Datenpaket des Mobilfunkgeräts 102 kann eine Prüfsumme berechnet und zusammen mit der Benutzerkennung (z.B. einer eineindeutigen Identifikationsangabe des Anwenders 104) zur weiteren Datenübertragung an einen externen Dienstleister übermittelt werden, der eine auditierbare Protokollierung zur Verfügung stellen kann. Dies erreicht, dass selbst der Betreiber der Rechenanlage 304 und/oder Anwendung 452 die Umgebungsdaten nicht unbemerkt manipulieren kann und erhöht damit die Sicherheit. Für die verteilte Protokollierung kann eine Blockkette verwendet werden, da eine breitere Verteilung der Daten das Kompromittieren durch Dritte erschwert. Die Rechenanlage 304 kann Protokolldaten über eine Programmierschnittstelle zur Verfügung stellen, so dass die Umgebungsdaten zum Beispiel von einer Nichtregierungsorganisation gespeichert werden können.

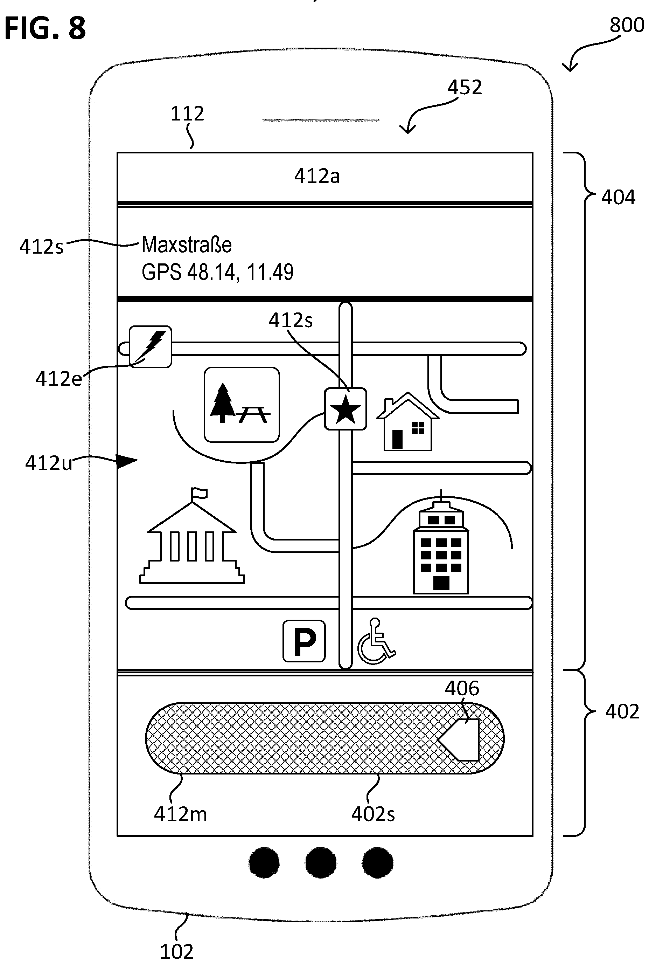

**Fig.8** veranschaulicht ein Mobilfunkgerät 102 in dem Bereitschaftsmodus 109 in einer schematischen Draufsicht 800 analog zu Draufsicht 400, wenn das Alarmieren 111 erfolgt. Sollte sich der Anwender 104 in einer Situation befinden, in der er Unterstützung benötigt, kann er alternativ oder zusätzlich zum Umgebungsaufzeichnen manuell das Alarmieren 111, d.h. anschaulich einen aktiven Hilferuf, auslösen. Das Alarmieren 111 kann beispielsweise ausgelöst werden, indem der Marker 412m losgelassen oder in die zweite Markerposition verschoben wird. Optional kann das Alarmieren 111 erfolgen, wenn von dem Mobilfunkgerät 102 ermittelt wurde, dass die externe Auslösevorrichtung 322 über eine definierte Anzahl von Wiederholungen betätigt wurde.

Das Alarmieren 111 kann aufweisen, dem Empfängergerät 306 die Standortangabe zu übermitteln. Der Sicherheitsgeber kann somit sehr gezielt und schnell zur Unterstützung (z.B. Sicherheit) des Anwenders 104 informiert werden, ohne Zeit für die Ortung oder die Klärung von Zuständigkeiten zu verlieren. Dem Anwender 104 kann optional die Wahlentscheidung bereitgestellt sein oder werden, zusätzliche persönliche Daten (wie beispielsweise ein Bild von sich) zu hinterlegen, welche zusammen mit der Standortangabe an das Empfängergerät 306 übermittelt werden, um dem Anwender 104 eine gezieltere Suche vor Ort zu ermöglichen.

Optional kann jedem Empfängergerät 306 zumindest ein geografischer Verantwortungsbereich (anschaulich dessen hilfewirksame Reichweite) zugeordnet werden, z.B. basierend auf dessen Standort (z.B. die Geoposition). Der Verantwortungsbereich kann beispielsweise mittels eines Geozauns (auch als Geofence bezeichnet) repräsentiert sein oder werden (z.B. dessen Kontur). Das Ermitteln des Verantwortungsbereichs und/oder des Geozauns kann beispielsweise mittels der Rechenanlage 304 erfolgen. Als Geozaun kann als eine (z.B. virtuelle) Grenze für einen geografischen (z.B. realen) Bereich verstanden werden. Der geographische Bereich kann räumlich zwei- oder dreidimensional sein. Der Geozaun kann basierend auf einem Geolokalisierungssystem implementiert werden, indem Daten bereitgestellt werden, welche die Position, Orientierung und/oder Form der virtuellen Grenze in zwei- oder dreidimensionaler Form beschreiben. Der Geozaun kann beispielsweise mittels Polygonen unter Verwendung von Geo-Koordinaten ermittelt werden. Der von dem Geozaun begrenzte Bereich (auch als geoumzäunter Bereich bezeichnet) kann beispielsweise die virtuelle Entsprechung eines realen Verantwortungsbereichs sein. Der Geozaun und/oder der geoumzäunte Bereich können beispielsweise mittels des Formats GeoJSON oder einem anderen Geomarkierungsformat abgespeichert und/oder definiert sein oder werden.

Die Nachricht 106 kann dann zumindest an das oder diejenigen Empfängergerät(e) 306 übermittelt werden, die dem Verantwortungsbereich, in dem der Standort des Mobilfunkgeräts 102 liegt, zugeordnet ist/sind. Die Rechenanlage 304 kann auf Grundlage der mittels der Nachricht 106 übermittelten Standortangabe den entsprechenden Verantwortungsbereich ermitteln, ferner das in kürzester Reichweite dazu innerhalb des Verantwortungsbereichs als verfügbar gekennzeichnete Empfängergerät 306 ermitteln und ferner dieses an das Mobilfunkgerät 102 vermitteln. Ist an dem Standort des Mobilfunkgeräts 102 kein Verantwortungsbereich zugeordnet, kann optional der Notrufkontakt (z.B. die Polizei) als Rückfallebene alarmiert werden. Für das Lokalisieren 101 des Mobilfunkgeräts 102 können im Allgemeinen die vom Betriebssystem des Mobilfunkgeräts 102 zur Verfügung gestellten Koordinaten verwendet werden (z.B. Geoposition via GPS, Funkbarken und anderen Ortungstechniken). Für das Lokalisieren 101 innerhalb von Gebäuden kann das Lokalisieren 101 zusätzlich aufweisen, eine Vielzahl dafür eingereichter Funkbarken 308 zu verwenden, wie später noch genauer beschrieben wird.

Der Übergang zwischen verschiedenen Verantwortungsbereichen kann mittels der Rechenanlage 304 periodisch ermittelt und/oder dem Anwender 104 angezeigt werden. Der Anwender 104 kann somit jederzeit sehen, welche Sicherheitsgeber an seiner Geoposition verfügbar und verantwortlich sind und kann selbst entscheiden, ob er deren Hilfe anfordern möchte.

Jedes im System 300 registrierte Empfängergerät 306 kann optional mittels der Rechenanlage 304 verifiziert sein oder werden. Das oder jedes resistierte und verifizierte Empfängergerät 306 kann beispielsweise ohne weitere Voraussetzungen von dem Mobilfunkgerät 102 angezeigt werden, z.B. mittels der Anwendung 452. Optional kann dem Anwender 104 die Wahlentscheidung bereitgestellt werden, ein oder mehr als ein registriertes und/oder verifiziertes Empfängergerät 306 einzeln abzuwählen (auch als Opt-Out bezeichnet) oder zu präferieren (Opt-in), z.B. als Favorit zu markieren. Dies erreicht beispielsweise, dass ein weniger vertrauenswürdiger Sicherheitsgeber nicht zuerst zur Hilfe gerufen wird.

Dem Anwender 104 kann somit die Wahlentscheidung bereitgestellt werden, an welches Empfängergerät 306 oder in welcher Reihenfolge die Nachricht 106 an mehrere Empfängergeräte 306 übermittelt werden soll. Alternativ oder zusätzlich kann dem Anwender 104 die Wahlentscheidung bereitgestellt werden, die Nachricht 106 an ein nicht im System 300 registriertes Empfängergerät (auch als unregistriertes Empfängergerät bezeichnet) zu übermitteln. Anschaulich kann der Anwender 104 einen eigenen Sicherheitsgeber wählen. Optional kann die Wahlentscheidung aufweisen, dem unregistrierten Empfängergerät 306 einen Verantwortungsbereich zuzuordnen. Optional kann eine gegenseitige Autorisierung des Mobilfunkgeräts 102 und des unregistrierten Empfängergeräts erfolgen. Dies erreicht, dass der Sicherheitsgeber des unregistrierten Empfängergeräts auch in Kenntnis davon ist, dass und von wem er zu Hilfe gerufen wird. Die Nachricht 106 wird beispielsweise nur dann an das unregistrierte Empfängergerät übermittelt, wenn dieses verfügbar und innerhalb des ihm zugeordneten Verantwortungsbereichs ist.

Ferner kann die Rechenanlage 304 oder eine entsprechende Anwendung (auch als Empfängergerätanwendung bezeichnet) bereitgestellt sein oder werden, welche es ermöglicht, das entsprechende (registrierte oder unregistrierte) Empfängergerät zwischen verfügbar und nicht-verfügbar umzuschalten und/oder dessen Standort an die Rechenanlage 304 zu übermitteln. Die Empfängergerätanwendung kann anschaulich das Gegenstück zu der Anwendung 452 sein, und den hierin beschriebenen Mechanismus auf dem Empfängergerät 306 implementieren.

Beispielsweise kann die Rechenanlage 304 mittels der Empfängergerätanwendung, die auf dem Empfängergerät ausgeführt wird, die Verfügbarkeit (z.B. Erreichbarkeit) und/oder den Standort des Empfängergeräts 306 ermitteln. Alternativ oder zusätzlich kann die Empfängergerätanwendung die Verfügbarkeit (z.B. Erreichbarkeit) und/oder den Standort des Empfängergeräts 306 an die Rechenanlage 304 übermitteln und/oder periodisch aktualisieren.

Wird ein Empfängergerät 306 von der Nachricht 106 nicht erreicht oder ist dessen Verbindung zu dem Netzwerk 302 unterbrochen, kann als Rückfallebene der Notrufkontakt alarmiert werden 111. Bei einem Sicherheitsanbieter-Notrufkontakt findet dieser Schritt erst statt, wenn sich kein dem Verfügbarkeitsbereich, in dem das Mobilfunkgerät 102 ist, zugeordnetes Empfängergerät 306 zurückmeldet, oder keines in dem Verfügbarkeitsbereich verfügbar ist. Sofern zumindest ein Empfängergerät 306 erreichbar ist, kann das Alarmieren 111 erfolgen, indem eine Push-Nachricht 106 bei allen dem Verfügbarkeitsbereich zugeordneten Empfängergeräten 306 zugestellt wird. Dies erreicht, dass zumindest ein Helfer über eine Internet-Verbindung verfügt und den Alarm entgegennehmen kann. Das Alarmieren 111 kann alternativ oder zusätzlich per SMS-Nachricht 106 erfolgen (z.B. bei erfolgloser Push-Nachricht 106 und/oder zum Zweck der Redundanz).

Ein Push-Nachricht 106 kann beispielsweise eine an die Anwendung 452 adressierte Nachricht sein (z.B. der Benutzerkennung zugeordnet), deren Inhalt in Antwort auf den Empfang von dem Gerät 102, 306, welches die Push-Nachricht 106 erhält, angezeigt wird, z.B. unabhängig davon, welche Anwendung(en) in diesem Moment von dem Betriebssystem im Vordergrund ausgeführt werden. Der Inhalt der Push-Nachricht 106 kann von der Anwendung 452 an das Betriebssystem übergeben werden (mittels einer Programmierschnittstelle), wobei das Betriebssystem das Anzeigen der Information übernimmt.

Optional kann bei dem Empfängerauswählen dasjenige Empfängergerät 306 ausgewählt werden, welches die geringste räumliche Distanz (via GPS, Bluetooth, Innenraum-Funkbaken, und Außenbereich-Funkbaken) zum Mobilfunkgerät 102 aufweist. Sollte dieses Empfängergerät 306 nicht verfügbar oder erreichbar sein oder aus einem anderen Grund nicht auf die Nachricht 106 reagieren, kann die Nachricht automatisch zum nächsten Empfängergerät 306 übermittelt werden. Kann in dieser Reihenfolge kein Empfängergerät 306 gefunden werden, dass auf die Nachricht 106 reagiert, kann als Rückfallebene der Notrufkontakt alarmiert 111 werden.

Wurde das Alarmieren 111 durchgeführt, kann optional das Entschärfungskriterium modifiziert (auch als erweitertes Entschärfungskriterium bezeichnet) werden. Beispielsweise kann das erweiterte Entschärfungskriterium erfüllt sein, wenn alternativ oder zusätzlich zu dem oben beschriebenen Berührungsmuster (z.B. eine Berührungsgeste) eine Benutzereingabe erfolgt, z.B. mittels Berührens des Mobilfunkgeräts 102. Mittels der Benutzereingabe kann beispielsweise eine Autorisierung des Anwenders 104 erfolgen (auch als Benutzerautorisierung bezeichnet). Anschaulich kann das Entschärfen 105 nur dann durchgeführt werden, wenn sich der Anwender 104 autorisiert, z.B. mittels eines Codes.

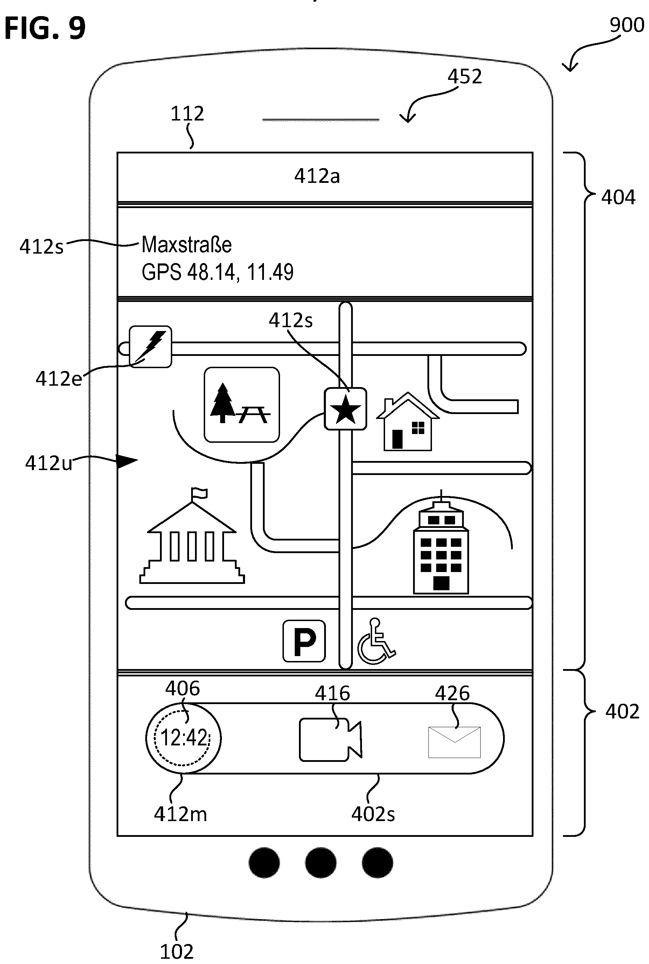

**Fig.9** veranschaulicht ein Mobilfunkgerät 102 in einer schematischen Draufsicht 900 analog zu Draufsicht 400, wenn das Mobilfunkgerät 102 in dem Bereitschaftsmodus 109 ist.

Für den Fall, dass der Anwender 104 den Eindruck hat, potentiell die Kontrolle über sein Handeln zu verlieren (zum Beispiel durch die Einnahme von KO-Tropfen), kann ihm die Wahlentscheidung bereitgestellt sein oder werden, beim Aktivieren des Bereitschaftsmodus 109 den Zeitraum 201 (auch Timer als bezeichnet) anzugeben, d.h. den Zeitschalter zu aktivieren. Beispielsweise kann das Scharfschaltungskriterium erfüllt sein, wenn eine Benutzereingabe erfolgt, welche den Zeitraum 201 angibt. Beispielsweise kann die Anwendung 452 eine Reihe von Zeiträumen anbieten, aus denen der Anwender 104 den Zeitraum 201 auswählt. Ferner kann eine Wahlentscheidung bereitgestellt werden, mittels der bei aktiviertem Zeitschalter verhindert werden kann, dass der Zeitraum 201 abläuft, z.B. indem dieser verlängert wird oder das Entschärfen 105 durchgeführt wird. Das Entschärfen 105 kann beispielsweise nur dann durchgeführt werden, wenn das erweiterte Entschärfungskriterium erfüllt wird.

Dieser Mechanismus ermöglicht es, auch dann das Alarmieren 111 durchzuführen, wenn die Kontrolle der Situation unvorhergesehen verloren geht. Dies kann beispielsweise bei der Einnahme von sogenannten "KO-Tropfen" der Fall sein.

Anschaulich kann ein Timer aktiviert werden, der nach einem persönlich definierten Zeitraum (beispielsweise 2, 5 oder 10 Minuten) automatisch das Alarmieren 111 auslöst. Das Symbol 406 des Markers 412m kann beispielsweise anzeigen, wie lange es noch dauert, bis der Zeitraum 201 verstrichen ist. Falls der Anwender 104 den Timer nicht abbricht, kann kurz vor Ablauf aktiv mittels einer Vibration des Mobilfunkgeräts 102, mittels eines Anrufs oder einer Push-Nachricht 106 darauf hingewiesen werden, dass das Alarmieren 111 bevorsteht. Sollte der Anwender 104 darauf nicht reagieren, wird das Alarmieren 111 durchgeführt. Falls sich seine Lage verbessert hat und er weiterhin oder wieder die Kontrolle über die Situation ausübt, kann er das Entschärfen 105 durchführen, z.B. indem er sich autorisiert, um den Timer abzubrechen.

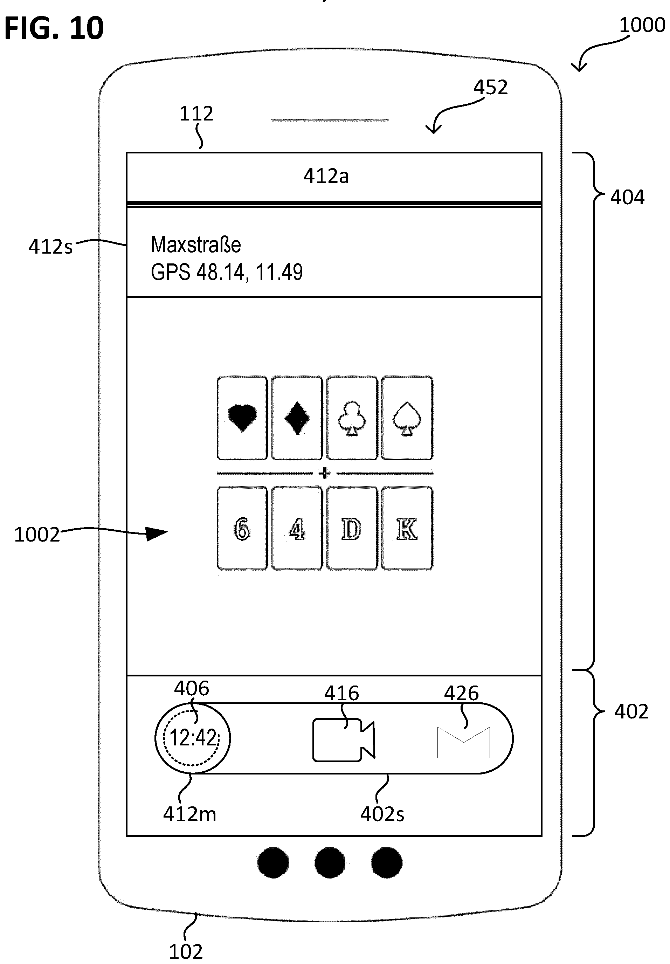

**Fig.10** veranschaulicht ein Mobilfunkgerät 102 in dem Bereitschaftsmodus 109 in einer schematischen Draufsicht 1000 analog zu Draufsicht 400, wenn das Mobilfunkgerät 102 zu einer Benutzereingabe zum Erfüllen des (z.B. erweiterten) Entschärfungskriterium auffordert, mit welcher der Anwender 104 autorisiert wird. In Antwort auf das Erfüllen des Entschärfungskriteriums kann beispielsweise das Entschärfen 105 durchgeführt werden, z.B. kann der Timer abgebrochen werden. Um das Entschärfungskriterium zu erfüllen, kann der Anwender 104 beispielsweise einen von ihm vorher definierten mehrstelligen (z.B. vierstelligen) Zahlencode eingeben und/oder die Lösung zu einer ihm angezeigten (z.B. bildbasierten) Aufgabe 1002 eingeben. Die Aufgabe 1002 kann beispielsweise darin bestehen, mindestens zweimal hintereinander jeweils ein ihm bekanntes Objekt (z.B. ein Bild) unter vier Auswahlmöglichkeiten auszuwählen. Ist die Eingabe korrekt, kann der Anwender 104 als autorisiert gelten.

Ein Beispiel für eine bildbasierte Aufgabe 1002 kann aufweisen, eine dem Anwender 104 bekannte Spielkarte eines französischen Kartenblatts zur Autorisierung richtig einzugeben. Die Aufgabe 1002 kann z.B. darin bestehen, aus einer ersten Reihe angezeigter Felder die Farbe der bekannten Spielkarte auszuwählen und aus einer zweiten Reihe angezeigter Felder den Wert der bekannten Spielkarte auszuwählen. Welche(r) Farbe/Wert auf welchem Feld angezeigt wird ist willkürlich und wird jedes Mal per Zufall zugelost.

Beispielsweise kann eine Wahrscheinlichkeit, eine Kombination aus zweimal jeweils 1 aus 4 Auswahlmöglichkeiten zufällig zu treffen ungefähr 6,25% betragen. Die entsprechende Absicherung beträgt ungefähr 93,75%.

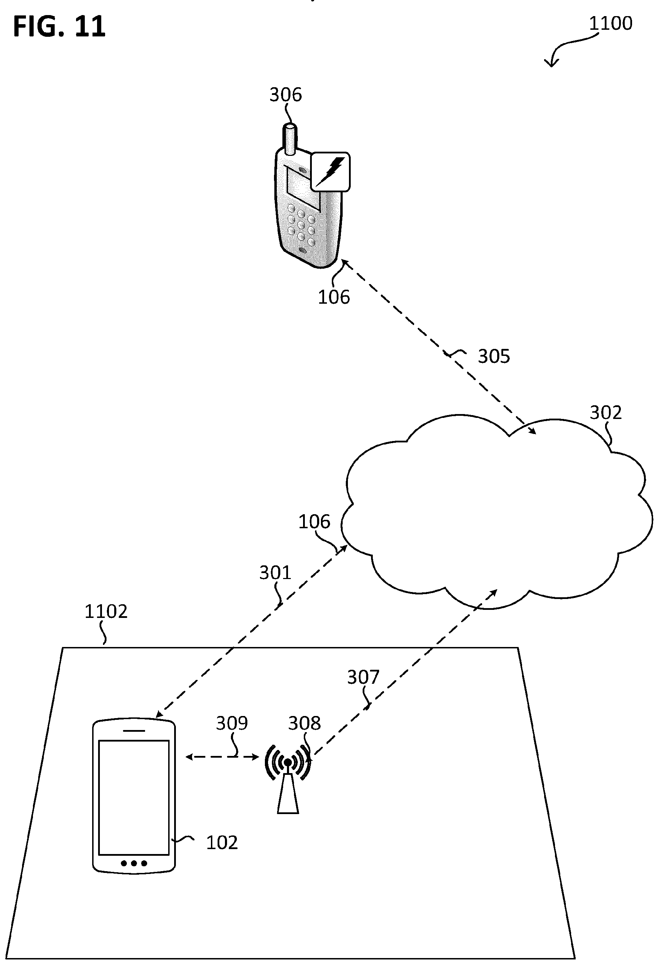

**Fig.11** veranschaulicht ein System 1100, z.B. das System 300, zum Durchführen des Verfahrens 100 oder 200 gemäß verschiedenen Ausführungsformen in einem schematischen Kommunikationsdiagram. Das System 1100 kann eine Funkbake 308 aufweisen, welche in einem Verfügbarkeitsbereich 1102 angeordnet ist und deren Signal den Verfügbarkeitsbereich 1102 abdeckt (dann auch als Sicherheitsbereich bezeichnet). Das Alarmieren 111 kann erfolgen, sobald die Funkbake 308 von dem Mobilfunkgerät 102 ermittelt wird (z.B. dieses in Reichweite der Funkbake 308 kommt).

Beispielsweise kann der Sicherheitsbereich 1102 die Eingangstür zu einem Gebäude aufweisen, die neben dem physischen Schutz durch einen Helfer zusätzlich durch eine digitale Schleuse geschützt wird. Die Nachricht 106 kann an das Empfängergerät 306 (z.B. die entsprechende Sicherheitskraft) übermittelt werden, sobald sich ein Anwender 104 in dem Sicherheitsbereich 1102 aufhält, dessen Mobilfunkgerät 102 beispielsweise in dem Bereitschaftsmodus 109 ist, z.B. einen noch aktiven Zeitschalter herunterzählt. Das Alarmieren 111 kann beispielsweise erfolgen, wenn das Mobilfunkgerät 102 die Präsenz der Funkbake 308 erfasst hat. Dem Anwender 104 wird somit die Wahlentscheidung bereitgestellt, das Mobilfunkgerät 102 in einen Alarmgeber zu verwandeln, der wie eine Diebstahlsicherung in einem Ladengeschäft fungiert und anschlägt, sobald jemand versucht die Sicherheitszone mit dem Mobilfunkgerät 102 zu durchqueren.

Die Funkbake 308 kann eine fest mit dem Gebäude verbundene Funkbake sein, die beispielsweise per Kabel mit Energie versorgt wird. Alternativ oder zusätzlich kann die Funkbake eine mobile Funkbake sein, die eine Batterie zur Energieversorgung aufweist.

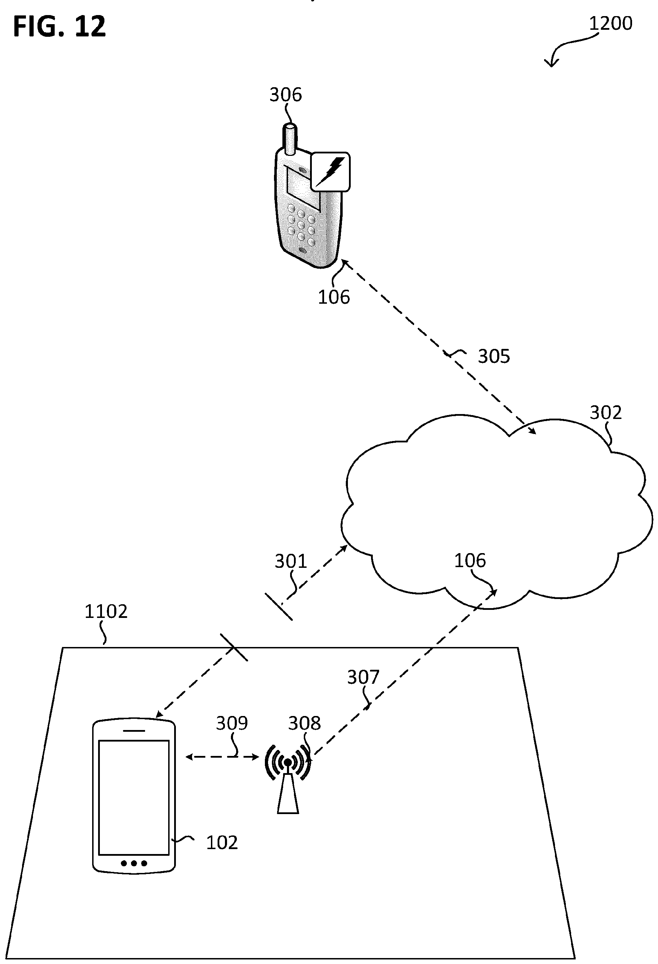

Fig.12 veranschaulicht ein System 1200, z.B. das System 300 oder 1100, zum Durchführen des Verfahrens 100 oder 200 gemäß verschiedenen Ausführungsformen in einem schematischen Kommunikationsdiagram. Um die Kommunikation innerhalb eines Sicherheitsbereichs 1102 auch bei schlechter (z.B. unterbrochener) Verbindung 301 mit dem Netzwerk 302 zu gewährleisten, kann das Alarmieren 111 aufweisen, die Funkbake 308 anzuweisen, die Nachricht 106 an das Netzwerk 302 zu übermitteln.

Beispielsweise kann das Mobilfunkgerät 102 (z.B. die Anwendung 452) zum Alarmieren 111 als Funkbake fungieren und damit unabhängig von der Verbindung 301 von der stationären Funkbake 308 erfasst (z.B. geortet) werden. Um Missbrauch zu hemmen, kann die Benutzerkennung des Anwenders 104 zusammen mit der Mobilfunknummer des Mobilfunkgeräts 102 (oder andere Daten des Mobilfunkgeräts 102 und/oder Anwenders 104) und einer optionalen Prüfsumme als Beacon-ID (Bacon-Kennung) verwendet werden. Beispielsweise können bei Missbrauch darauf basierend ein Mobilfunkgerät 102 und/oder der Anwender 104 gesperrt werden.

In Antwort darauf kann die stationäre Funkbake 308 die Nachricht 106 erzeugen 111 und/oder senden, wobei die Nachricht optional eine Angabe zu einer Entfernung des Mobilfunkgeräts 102 von der stationären Funkbake 308 (und damit eine Angabe zu dessen Standort) aufweist, und/oder zumindest die Alarmangabe aufweist zum Angeben, dass ein Alarmieren 111 in der Nähe erfolgt ist. Alternativ oder zusätzlich kann die Empfängergerätanwendung mittels des Empfängergeräts 306 die Funkbake 308 implementieren. Damit kann das Empfängergerät 306 als mobile Funkbake verwendet werden.

Beispielsweise kann die Nachricht 106 von dem Mobilfunkgerät 102 erzeugt und an die Funkbake 308 übermittelt werden, welche die Nachricht 106 an das Netzwerk 302 weiterleitet. Damit kann das Alarmieren 111 anschaulich "huckepack" über die Funkbake 308 übertragen werden, selbst wenn das Mobilfunkgerät 102 keine Internet-Verbindung 301 besitzt. Optional kann auf dieselbe Weise ein Weiterleiten von anderen Daten von dem Mobilfunkgerät 102 erfolgen, z.B. dessen Standortangabe und/oder die Umgebungsdaten.

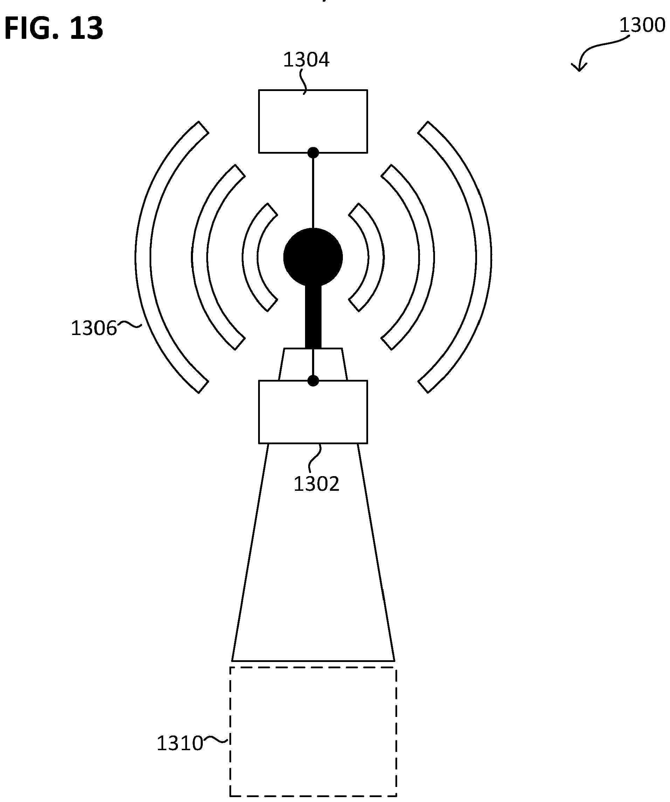

**Fig.13** veranschaulicht eine Funkbake 308 zum Durchführen des Verfahrens 100 oder 200 gemäß verschiedenen Ausführungsformen in einem schematischen Aufbaudiagram 1300. Die Funkbake 308 kann im Unterschied zu einer festinstallierten Funkbake 308 eine flexible, eigenständige Hardware-Lösung bereitstellen, um einen mobilen Sicherheitsbereich 1102 bereitstellen zu können.

Die Funkbake 308 kann aufweisen: ein Warnlicht 1302, das beispielsweise eine Lampe (allgemeiner Beleuchtungseinrichtung) aufweist, die signalisiert, dass erfasst wurde, dass ein Alarmieren 111 innerhalb des Sicherheitsbereichs 1102 erfasst wurde; eine optionale Photovoltaik-Komponente 1304 (z.B. eine Solarzelle), um autonom ohne Stromnetz funktionieren zu können (zum Beispiel bei Festivals); eine Audio-Komponente (z.B. einen Tongeber), die eingerichtet ist, ein lautes Geräusch abzugeben, um auf einen Notfall aufmerksam zu machen (z.B. von mindestens 100 Dezibel); einen Funkempfänger 1306 für den Empfang verschiedener Signale gemäß einem Funk-Standard (z.B. Bluetooth); einen optionalen Funksender 1308 zum Weiterleiten der Nachricht 106 (und damit die Erhöhung der Reichweite) und/oder zur Kommunikation mit dem Mobilfunkgerät 102. Der Funksender 1308 und/oder Funkempfänger 1306 (zusammen oder einzeln auch als Transmitter bezeichnet) können beispielsweise zur Kommunikation gemäß einem der folgenden drahtlos-KP eingerichtet sein: ein WLAN-KP, ein Langstrecke-WAN-KP (LoRaWAN-KP), ein Bluetooth-KP, ein Punkt-zu-Punkt-über Netzwerk-KP (PPPoE-KP). Das LoRaWAN-KP kann beispielsweise mehr Reichweite bereitstellen als das WLAN und/oder weniger als ein Mobilfunkstandard (beispielsweise 3G, d.h. der dritten Generation).

Mittels des PPPoE-KP und/oder des LoRaWAN-KP kann die Nachricht 106 an das Internet 302 weitergeleitet werden. Alternativ oder zusätzlich kann die Weiterleitung der Nachricht 106 gemäß dem Bluetooth-KP erfolgen (anschaulich als Rückfallebene, falls die Anwendung 452 nicht selbstständig über das Internet kommunizieren kann).

Der Transmitter 1306, 1308 (den Funksender 1308 und/oder Funkempfänger 1306 aufweisend) kann beispielsweise einen Kurzstrecke-Transmitter zum Kommunizieren mit dem Mobilfunkgerät 102 aufweisen (z.B. per Bluetooth, WLAN oder LoRaWAN). Alternativ oder zusätzlich kann der Transmitter 1306, 1308 kann einen Langstrecke-Transmitter aufweisen zum Kommunizieren mit der Rechenanlage 304 (z.B. per zellulärem Mobilfunknetz).

Die Funkbake 308 kann alternativ oder zusätzlich zu der Photovoltaik-Komponente 1304 eine Batterie 1310 oder eine andere autarke Energieversorgung aufweisen.

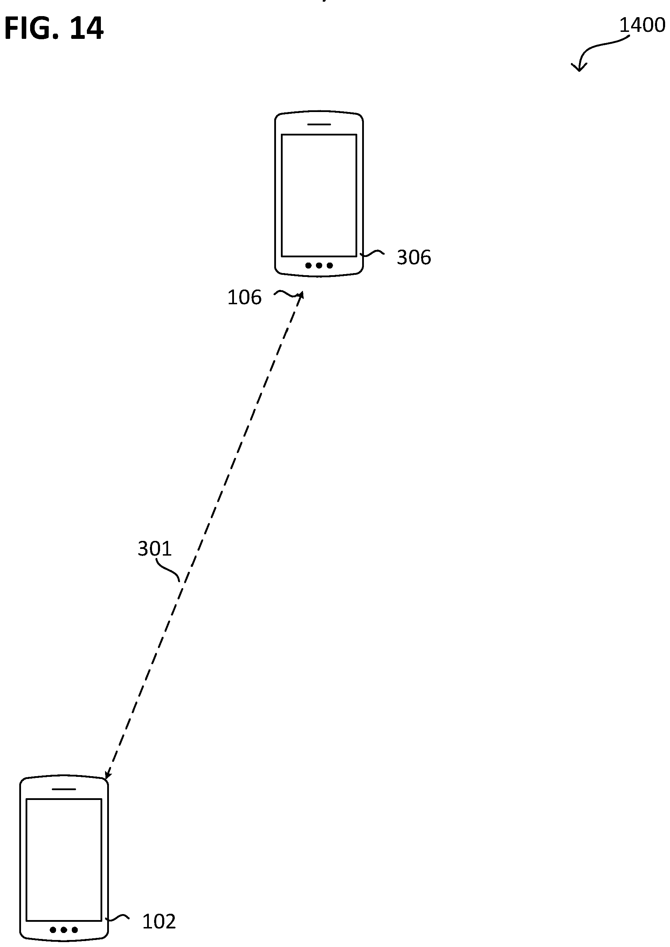

**Fig.14** veranschaulicht ein System 1400, z.B. das System 300, 1100, 1200 oder 1400, zum Durchführen des Verfahrens 100 oder 200 gemäß verschiedenen Ausführungsformen in einem schematischen Kommunikationsdiagram. In dem System 1400 kann das Empfängergerät 306 analog zu dem Mobilfunkgerät 102 eingerichtet und mit diesem assoziiert sein (auch als verknüpfte Mobilfunkgeräte 102, 306 bezeichnet). Zur Verknüpfung von zwei oder mehr Mobilfunkgeräten 102, 306 kann eine gegenseitige Autorisierung erfolgen. Das Alarmieren 111 kann dann aufweisen, die Nachricht 106 an jedes der verknüpften Mobilfunkgeräte 102, 306 zu übermitteln, z.B. mittels einer unmittelbaren Kommunikationsverbindung zwischen diesen und/oder gemäß einem Kurzstrecken-drahtlos-KP.

Dem Anwender 104 kann beispielsweise beim Umgebungsaufzeichnen zusätzlich die Wahlentscheidung bereitgestellt sein oder werden, als Vorstufe zum Alarmieren 111 mittels des Netzwerks 302, ein verknüpftes Mobilfunkgerät 102 zu alarmieren, z.B. eine sich in seiner Nähe befindliche private Personen seines Vertrauens. Beispielsweise könnten sich mehrere Gäste für einen gemeinsamen Abend in einem Nachtclub digital vernetzen und aufeinander aufpassen.

Jedem der miteinander verknüpften Mobilfunkgeräte 102 kann beispielsweise bereitgestellt werden, den letzten erfassten Standort der anderen verknüpften Mobilfunkgeräte 102 abzurufen. Die Gruppe verknüpfter Mobilfunkgeräte 102 kann beispielsweise definieren (z.B. mittels eines gemeinschaftlichen Radius), wie weit diese maximal voneinander entfernt sein möchten. Wenn ein Mobilfunkgerät 102 der Gruppe die gemeinschaftliche, maximal definierten Entfernung untereinander überschreitet, dann kann in Antwort darauf jedes der verknüpften Mobilfunkgeräte 102 eine entsprechende Information darüber erhalten und/oder ausgeben. Optional kann der Batterieladezustand der verknüpften Mobilfunkgeräte 102 untereinander eingesehen werden und/oder eine Push-Benachrichtigung kann diese über einen niedrigen Batterieladezustand eines anderen Mobilfunkgerätes 102 der Gruppe informieren.

Wenn eines der verknüpften Mobilfunkgeräte 102 in den Bereitschaftsmodus 109 umschaltet (oder das Alarmieren 111 auslöst), können alle Mobilfunkgeräte 102 der Gruppe darüber informiert werden (z.B. mittels der Push-Benachrichtigung).

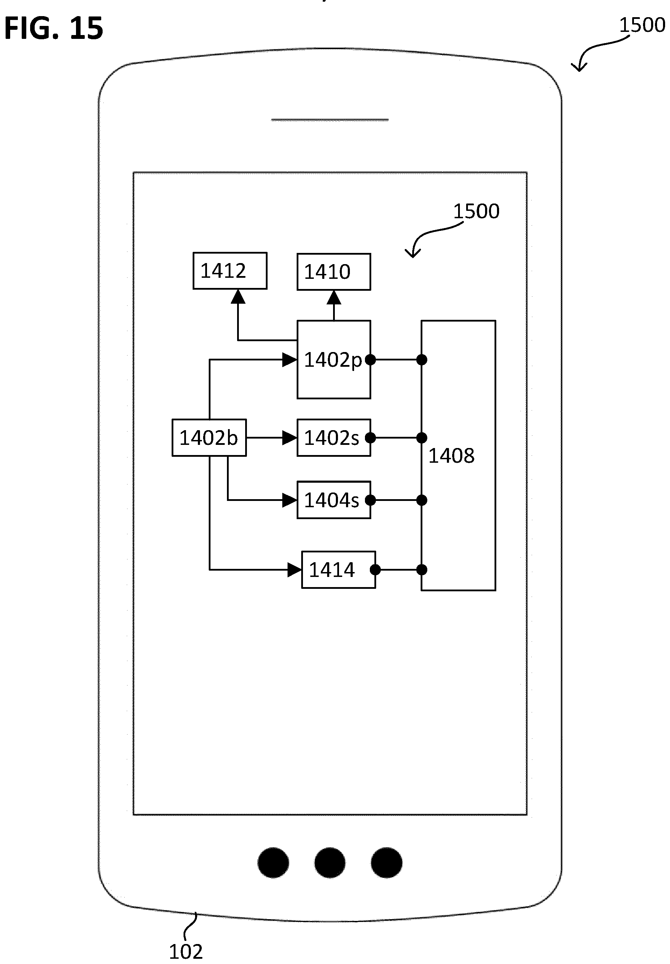

**Fig.15** veranschaulicht ein Mobilfunkgerät 102 zum Durchführen des Verfahrens 100 oder 200 gemäß verschiedenen Ausführungsformen in einem schematischen Aufbaudiagram 1500. Das Mobilfunkgerät 102 kann einen oder mehr als einen Prozessor 1402p (z.B. der ARM-Architektur oder x86-Architektur), einen Datenspeicher 1402s und mehrere Sensoren 1404s aufweisen und ferner eine Batterie 1402b (z.B. Akkumulator) zum Versorgen dieser mit elektrischer Energie. Ferner kann das Mobilfunkgerät einen Kommunikationsbus aufweisen, der den Prozessor 1402p, den Datenspeicher 1402s, und die mehrere Sensoren 1404s kommunikativ miteinander verbindet.

Ferner kann das Mobilfunkgerät mittels des Prozessors 1402p ein Betriebssystem 1412 ausführen, wie beispielsweise Windows, iOS, Google Chrome OS, Android, Blackberry OS, WebOS, KaiOS oder Linux. Das Betriebssystem 1412 kann beispielsweise eine Anwendungsverwaltung, eine Speicherverwaltung, eine Dateiverwaltung und/oder eine Rechteverwaltung implementieren und ferner eine oder mehr als eine Programmierschnittstelle zur Anbindung von Anwendungen an das Betriebssystem 1412 aufweisen. Ferner kann das Mobilfunkgerät 102 eine oder mehr als eine Anwendung 1410 (z.B. die Anwendung 452 und/oder die Empfängergerätanwendung) aufweisen, welche mittels des Prozessors 1402p ausgeführt ist und/oder auf dem Betriebssystem 1412 läuft. Die oder jede Anwendung 1410 kann optional auf dem Datenspeicher 1402s gespeichert sein. Der Datenspeicher 1402s kann beispielsweise einen flüchtigen und/oder nichtflüchtigen Datenspeicher aufweisen, z.B. einen USB-Stick, einen Flash-Speicher, RAM (Direktzugriffsspeicher), DRAM (dynamisches RAM) oder EPROM (löschbarer programmierbarer Nur-Lese-Speicher).

Eine Programmierschnittstelle kann zum Anbinden einer oder mehr als einer Anwendung an das Betriebssystem eingerichtet sein und eine oder mehr als eine Betriebssystemfunktionen bereitstellen. Eine Betriebssystemfunktion kann beispielsweise eingerichtet sein, bei ihrem Aufruf zumindest Daten des Betriebssystems zurückzuliefern oder Daten abzuspeichern.

Optional kann das Mobilfunkgerät eine oder mehr als eine Benutzerschnittstelle 1414 (z.B. Benutzer-Eingabeschnittstelle und/oder Benutzer-Ausgabeschnittstelle) aufweisen, z.B. einen Bildschirm (auch als Anzeigevorrichtung bezeichnet), eine physische Tastatur, einen Lautsprecher, eine Vibrationsvorrichtung, einen oder mehr als einen physischen Schalter (z.B. Taster) oder Ähnliches. Die mehrere Sensoren 1404s können beispielsweise einen Lokalisierungssensor, ein Mikrofon, einen Berührungssensor, einen optoelektronischen Sensor, einen Lagesensor, einen Magnetfeldsensor, einen Beschleunigungssensor oder Ähnliches aufweisen. Das Betriebssystem 1412 kann eingerichtet sein, jeden einzelnen der mehrerer Sensoren 1404s und/oder jede Benutzerschnittstelle 1414 anzusteuern (z.B. auszulesen), um mit dem Benutzer zu interagieren (z.B. Benutzereingaben anzunehmen und/oder Informationen auszugeben). Das Betriebssystem 1412 kann beispielsweise Informationen bereitstellen (mittels einer entsprechenden Programmierschnittstelle) und/oder periodisch aktualisieren, welche die von einem Sensor bzw. einer Benutzerschnittstelle ausgelesenen Daten repräsentiert. Der Berührungssensor kann optional eingerichtet sein, zumindest eine Eigenschaft einer Berührung des Mobilfunkgeräts 102 zu ermitteln, z.B. deren Ort und/oder Trajektorie (oder allgemeiner räumliche Verteilung), deren Intensität (z.B. Druck und/oder Fläche), deren Dauer und/oder Frequenz (oder allgemeiner zeitliche Verteilung). Die Eigenschaft(en) der Berührung können beispielsweise in ein Berührungsmuster übersetzt werden, um dieses mit dem Berührungskriterium zu vergleichen.

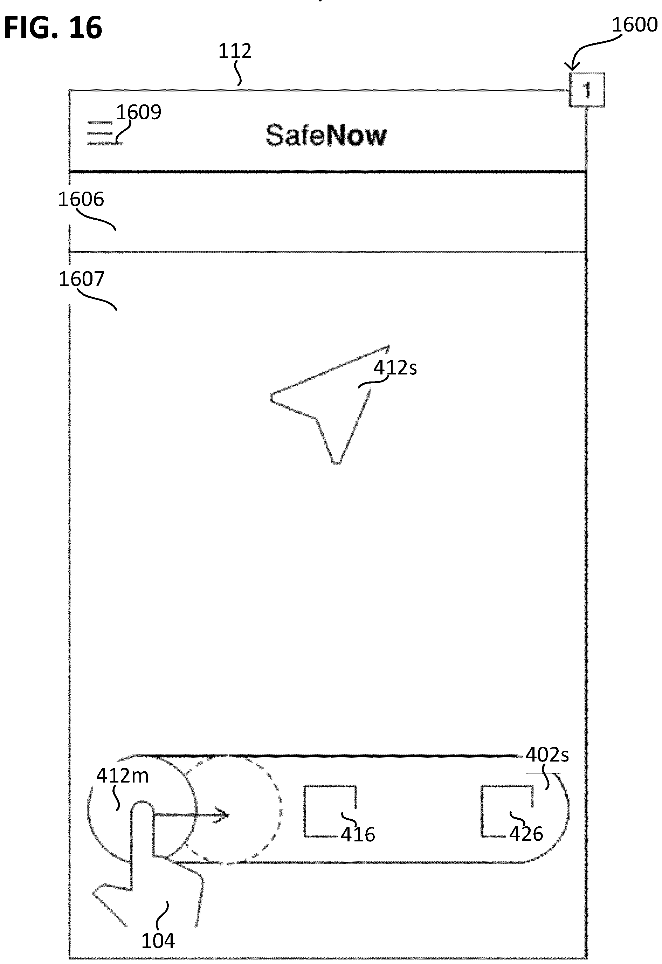

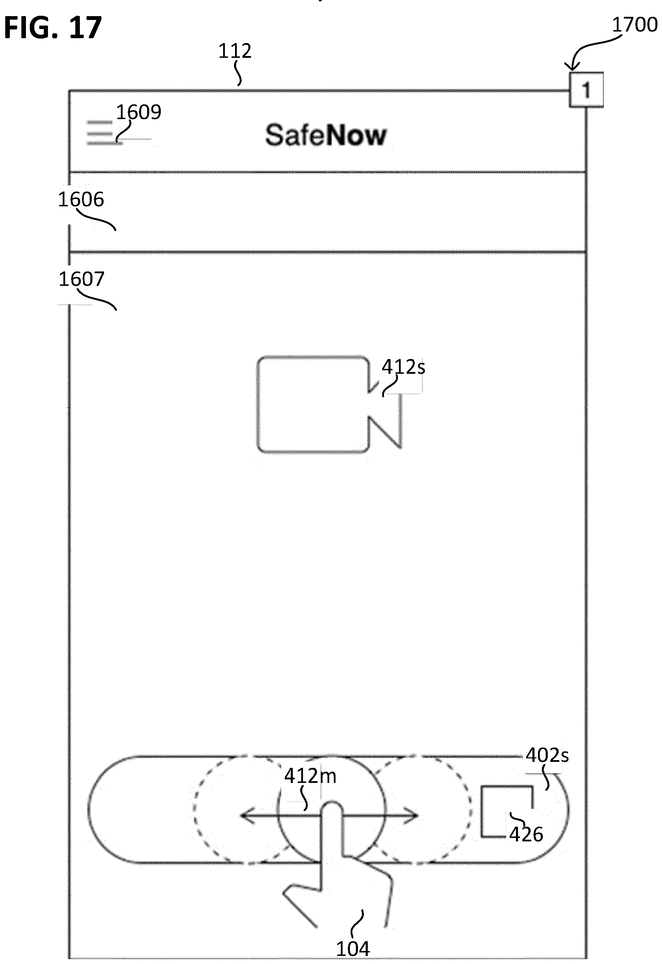

**Fig.16** und **Fig.17** veranschaulichen jeweils die Anzeigevorrichtung 112 (vereinfacht auch als Anzeige bezeichnet) eines Mobilfunkgeräts 102 in verschiedene schematischen Draufsichten 1600 bis 1700 analog zu Draufsicht 400 während des Durchführens des Verfahrens 100, 200. Der Ausgangszustand des Mobilfunkgeräts 102, z.B. wenn die Anwendung 452 gestartet wird, ist der Ruhemodus 107.

In 1600 kann die Anzeige 112 beispielsweise die Startseite der Anwendung 452 darstellen, wobei als zentrales Bedienelement ein virtueller Schieberegler 402s mittels der Startseite bereitgestellt ist, dessen Zustand durch Berührung (z.B. mit dem Finger des Anwenders 104) und horizontales Bewegen des Berührungsortes (auch als Streichbewegung bezeichnet) verändert werden kann. Mittels der Streichbewegung wird der interne Zustand des Schiebereglers 402s (auch als Reglerzustand bezeichnet) zwischen den Werten 0% (Berührung ganz links) und 100% (Berührung ganz rechts) verändert. Die Streichbewegung kann beispielsweise erst dann registriert werden, wenn diese auch an einer Position auf dem Schieberegler 402s beginnt, welche dem aktuellen Zustand des Schiebereglers 402s entspricht. Als Rückmeldung kann der Zustand des Schiebereglers 402s angezeigt werden, indem die Position mittels des Markers 412m (vereinfacht auch als Regler oder Zustandsanzeiger bezeichnet) markiert wird. Anschaulich kann somit die Position des Reglers 412m mit dem Finger geführt werden zwischen 0% und 100%. Solange der Finger bewegungslos an dem Regler 412m gehalten wird, ändert sich der Zustand des Schiebereglers 402s nicht.

Optional werden ein zuvor ausgegrautes Video-Symbol 416 und/oder Alarm-Symbol 426 hervorgehoben, wenn der Reglerzustand einen jeweiligen Schwellwert übersteigt, um den aktuellen Reglerzustand zusätzlich zu visualisieren. Wird der Reglerzustand wieder unter den jeweiligen Schwellwert geführt, wird das entsprechende 416, 426 Symbol wieder ausgegraut dargestellt. Das Alarm-Symbol 426 wird beispielsweise ab einem Reglerzustand oberhalb des Schwellenwerts von 0% hervorgehoben.

Die Anwendung 452 kann auf jede Änderung des Reglerzustands mit einer Aktion reagieren. Im Ruhemodus 107 werden im Info-Bereich 1606 der Anzeige 112 beispielsweise Information 412s zur Ortung des Mobilfunkgeräts 102 angezeigt (beispielsweise auf Grundlage einem Geo-Lokalisieren 101 des Mobilfunkgeräts 102). Alternativ oder zusätzlich kann der Kontext-Bereich 1607 der Anzeige 112 eine Karte mit der aktuellen Position 412s des Mobilfunkgeräts 102 anzeigen.

Von 1600 zu 1700 wird der Reglerzustand über einen ersten Schwellenwert von 25% gebracht, worauf in Antwort in den Bereitschaftsmodus 109 umgeschaltet 105 werden kann und optional zusätzlich zu der Ortung 101 des Mobilfunkgeräts 102 eine Videoaufzeichnung mittels des Mobilfunkgeräts 102 erfolgen kann. Als zusätzliche Visualisierung wird optional das Video-Symbol 416 hervorgehoben. Wird der Reglerzustand über einen zweiten Schwellenwert von 70% gebracht, wird als Unterstützung eine LED-Beleuchtung des Mobilfunkgeräts 102 eingeschaltet, so dass der Anwender 104 ohne zusätzliches Bedienelement die Ausleuchtung der Videoaufzeichnung steuern kann.

Von 1700 zu 1600 wird der Reglerzustand zurück nach ganz links (0%) gebracht und dann die Berührung unterbrochen, z.B. der Marker 412m losgelassen. In Antwort darauf kann die Interaktion mit dem Anwender 104 enden, ohne, dass das Alarmieren 111 erfolgt, und/oder es kann das Mobilfunkgerät 102 in den Ruhemodus 107 umgeschaltet werden. Wird der Reglerzustand in 1700 auf eine beliebigen anderen Wert verschieden von 0% gebracht und dann die Berührung unterbrochen (d.h. der Zustand des Schiebereglers 402s ist größer 0%), kann das Alarmieren 111 erfolgen, Beispielsweise kann das Alarmieren 111 an einen Sicherheitsdienst oder die Polizei gerichtet sein.

Über einen virtuellen Menüschalter 1709 (auch als Menü-Button bezeichnet) des Mobilfunkgeräts 102 kann der Anwender 104 zusätzliche Seiten und Dialoge zum Beispiel für Einstellungen oder die Hilfe erreichen. Das dabei angezeigte Menü lässt sich beispielsweise nur über den Menüschalter 1709 öffnen, um eine versehentliche Bedienung auszuschließen.

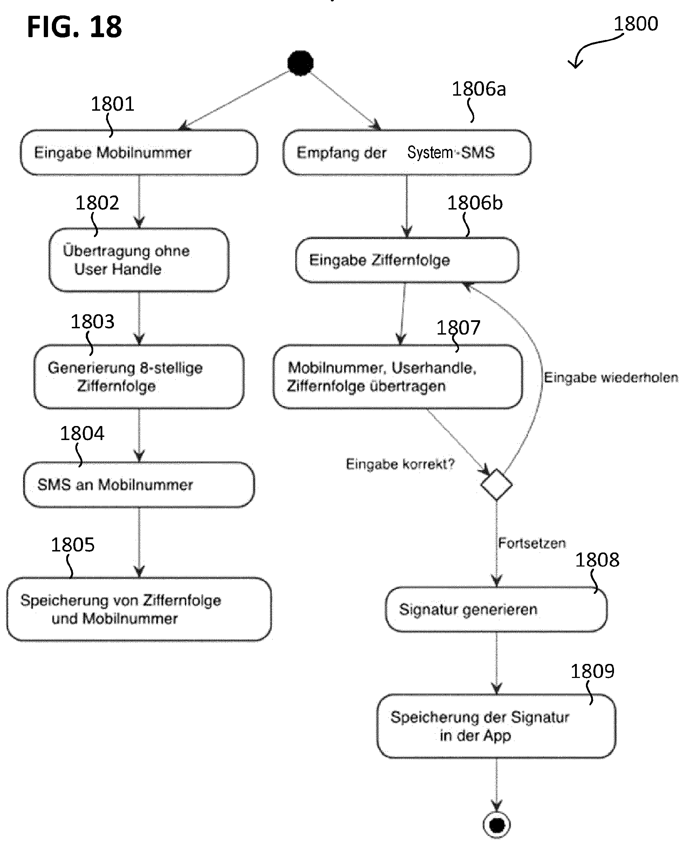

**Fig.18** veranschaulicht das Verfahren 100 oder 200 zum Betreiben des Systems 300, 1100, 1200, 1400 gemäß verschiedenen Ausführungsformen in einem schematischen Ablaufdiagramm 1800.

Das System 300, 1100, 1200, 1400 kann serverseitig 304 soweit wie möglich mit anonymisierten Daten arbeiten. Jede Anfrage an die Rechenanlage 304 kann unter Verwendung der Benutzerkennung des Anwenders 104, die einen eindeutigen Identifikator (z.B. eine Zeichenfolge) aufweist, erfolgen. Die Benutzerkennung kann beim allerersten Starten und/oder unmittelbar nach dem Installieren der Anwendung 452 von dem Mobilfunkgerät 102 generiert werden.

Die Benutzerkennung kann dem Anwender 104 identifizieren, d.h. diesem eindeutig zugeordnet sein, aber keinen Rückschluss auf seine Person zulassen. Beispielsweise kann die Benutzerkennung eine oder mehr als eine UUID ("Universally Unique Identifier" - einmalige universelle Kennung) aufweisen oder daraus gebildet sein (beispielsweise die Zeichenfolge 7e129414-76b9-4000-9d9f-1c399944759f). Beispielsweise kann die Benutzerkennung zwei mit einem Minuszeichen konkatenierte UUID (beispielsweise die Zeichenfolge 7e129414-76b9-4000-9d9f-1c399944759f-e46a9c7e-163e-4caf-986e-81f3b06590bc ergebend) aufweisen.

Während der Nutzung der Mobilfunkgeräts 102 (z.B. der Anwendung 452) können GPS-Koordinaten des Mobilfunkgeräts 102 serverseitig 304 protokolliert werden. Das dazu erfolgende Lokalisieren 101 (z.B. mittels Geo-Lokalisierung) und die damit verbundene Überwachung kann eine Grundfunktion des Mobilfunkgeräts 102 (z.B. der Anwendung 452) sein und Basisnutzen für den Anwender 104. Details zu seiner Person muss der Anwender 104 dazu nicht preisgeben.

Das Umgebungsaufzeichnen (z.B. eine Videoüberwachung) kann unter Verwendung der Benutzerkennung und/oder den aktuellen GPS-Koordinaten des Mobilfunkgeräts 102 referenziert werden. Auch hierfür muss der Anwender 104 keine Details zu seiner Person preisgeben.

Für das Alarmieren 111 (z.B. von Sicherheitskräften) reicht die anonyme Benutzerkennung jedoch nicht immer aus, z.B. wenn die Gefahr von absichtlichen Irreführungen oder böswilligen Angriffen auf das System 300, 1100, 1200, 1400 (z.B. dessen Alarmierungsweg) nicht ausgeschlossen werden kann. In diesem Fall kann der Anwender 104 mittels des Mobilfunkgeräts 102 aufgefordert 1801 werden, eine persönliche Angabe einzugeben, z.B. seine Postadresse oder die Mobilfunknummer des Mobilfunkgeräts 102. Optional kann das Mobilfunkgerät 102 und/oder der Anwender 104 mittels der persönlichen Angabe verifiziert werden von dem System 300, 1100, 1200, 1400. Die Bestätigung erfolgt beispielsweise in einer Form, die ohne dauerhafte Speicherung der Mobilfunknummer auf der Rechenanlage 304 auskommt.

Der Anwender 104 kann auch direkt zur Eingabe der Mobilfunknummer aufgefordert 1801 werden. Die Mobilfunknummer kann beispielsweise ohne die sonst übliche Angabe einer Benutzerkennung (auch als User-Handle bezeichnet) an die Rechenanlage 304 übermittelt 1802 werden. Darauf basierend generiert die Rechenanlage 304 eine zufällige mehrstellige (z.B. 4stellige, oder 8-stellige) alphanummerische Zeichenfolge 1803 und übermittelt 1804 diese (z.B. über einen SMS-Dienstleister) an die Mobilfunknummer. Die Übermittlung (z.B. SMS) kann die Zeichenfolge 1803 selbst und/oder einen UDL (universeller Deep-Link), der die Zeichenfolge aufweist, aufweisen. Der UDL kann beim Antippen direkt von dem Mobilfunkgerät 102 (z.B. der Anwendung 452) geöffnet werden.

Die Mobilfunknummer und die zufällige Zeichenfolge werden in einer Datenbank der Rechenanlage 304 temporär gespeichert 1805, z.B. für 5 Minuten oder weniger. Zur Authentifizierung empfängt 1806a das Mobilfunkgerät 102 die Übermittlung (z.B. die SMS) und/oder der Anwender 104 gibt 1806b die zufällige Zeichenfolge manuell in das Mobilfunkgerät 102 ein (z.B. per Anwendung 452). Die zufällige Zeichenfolge wird zusammen mit der Benutzerkennung und der Mobilfunknummer an die Rechenanlage 304 übertragen 1807, z.B. mittels des Netzwerks 302. Stimmen die Mobilfunknummer und die zufällige Zeichenfolge mit der serverseitig 304 gespeicherten Information überein, so kann in Antwort darauf eine Signatur 1808 auf Grundlage der Benutzerkennung und der Mobilfunknummer erzeugt und an das Mobilfunkgerät 102 übermittelt 1808 werden. Die Signatur kann beispielsweise ein kryptografisch signiertes Tupel aus Benutzerkennung und Mobilfunknummer aufweisen oder daraus gebildet sein.

Optional kann in Antwort darauf die in 1805 gespeicherte(n) Information(n) gelöscht werden. Alternativ oder zusätzlich kann eine MD5-Summe der Mobilfunknummer zusammen mit der Benutzerkennung von der Rechenanlage 304 gespeichert 1809 werden, um das Alarmieren 111 auch bei Anrufen einem Anwender 104 zuordnen zu können, z.B. wenn die Mobilfunknummer der Rechenanlage 304 selbst nicht bekannt ist.

Ferner kann die Signatur von dem Mobilfunkgerät 102 gespeichert 1809 werden, z.B. in einem nicht-flüchtigen Speicher (z.B. mittels der Anwendung 452). Dieser Ablauf ermöglicht, dass sich die Benutzerkennung und die Mobilfunknummer nur für einen kurzen Augenblick im Hauptspeicher der Rechenanlage 304 befinden und nicht persistent gespeichert werden. Aus den Logdateien der Rechenanlage 304 werden die Benutzerkennung und/oder die Mobilfunknummer herausgefiltert oder in diesen schlichtweg nicht gespeichert. Im Allgemeinen kann alternativ oder zusätzlich zu der Mobilfunknummer auch eine andere Adresse verwendet werden, unter welcher der Anwender 104 erreichbar ist (z.B. eine E-Mail-Adresse, eine Netzwerkadresse, eine Sofortnachricht-Adresse oder Ähnliches). Die Adresse kann beispielsweise mit dem Mobilfunkgerät 102 oder zumindest dem Anwender 104 assoziiert sein.

Die Benutzerkennung, die Mobilfunknummer und die Signatur können beispielsweise nur bei dem Alarmieren 111 (z.B. der Sicherheitskräfte) gemeinsam übertragen werden, beispielsweise wenn die Möglichkeit auf eine eindeutige Identifikation des Anwenders 104 in seiner Person oder zumindest über seine Mobilfunknummer erwünscht ist (z.B. für einen Rückruf). Die Mobilfunknummer kann beispielsweise der kleineste gemeinsame Nenner für eine Zusammenarbeit mit einem Sicherheitsdienst oder der Polizei sein.

Der Anwender 104 kann optional dem System 300, 1100, 1200, 1400 eine oder mehr als eine zusätzliche Angabe zu seiner Person zuführen, z.B. mittels einer Eingabe an dem Mobilfunkgerät 102, z.B. über die Einstellungen der Anwendung 452. Die Art und/oder der Umfang der Eingabe bleibt dem persönlichen Datenschutzbedürfnis gemäß der Einstellung der Anwendung 452 überlassen. Die eine oder mehr als eine zusätzliche Angabe kann beispielsweise einen Namen, ein Alter, ein Geschlecht oder ein oder mehr als ein Foto für die Identifikation des Anwenders 104 aufweisen. Die eine oder mehr als eine zusätzliche Angabe kann optional beim Alarmieren 111 mittels der Nachricht 106 übertragen werden und/oder muss nicht zwangsläufig von dem Mobilfunkgerät 102 validiert werden.

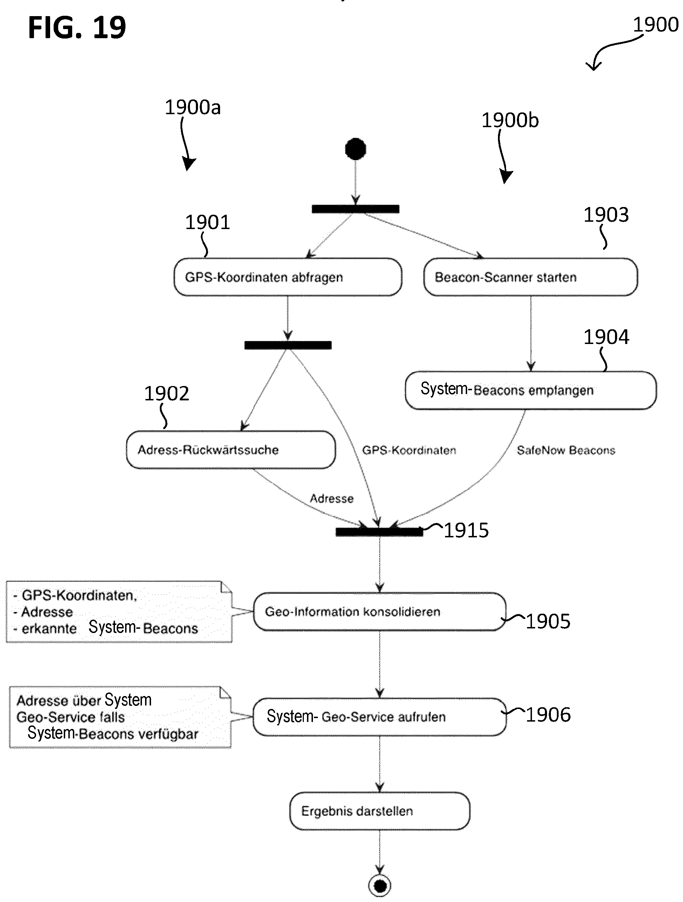

**Fig.19** veranschaulicht das Lokalisieren 101 (z.B. mittels Geo-Lokalisierung) gemäß verschiedenen Ausführungsformen in einem schematischen Ablaufdiagramm 1900, wobei das Lokalisieren 101 ein Auslesen 1900a und/oder ein Aufspüren 1900b aufweisen kann.

Das Auslesen 1900a kann aufweisen, mittels einer ersten Betriebssystemfunktion des Mobilfunkgeräts 102 kontinuierlich (z.B. periodisch) von dem Betriebssystem 1412 des Mobilfunkgeräts 102 bereitgestellte Standortdaten auszulesen 1901 (z.B. während der Laufzeit der Anwendung 452). Das Betriebssystem 1412 des Mobilfunkgeräts 102 kann die Standortdaten beispielsweise auf Grundlage einer GPS-Satelliteninformation, der Netztopologie des Netzproviders und/oder eines bekannten WLAN-Zugriffspunkts ermitteln. Die von der Betriebssystemfunktion ausgelesenen Standortdaten (z.B. GPS-Koordinaten) können weiterverarbeitet sowie über eine zweite Betriebssystemfunktion einer optionalen Adress-Rückwärtssuche unterzogen werden 1902. Auf Grundlage des Ergebnisses des Auslesens 1900a kann beispielsweise die Standortangabe ermittelt werden.

Das Aufspüren 1900b kann aufweisen, mittels einer dritten Betriebssystemfunktion einen Beacon-Scanner zu implementieren 1903 (z.B. mittels des Lokalisierungssensors 102a), der eingerichtet ist, einen oder mehr als einen Beacon 308 zu ermitteln, der eine dem System 300, 1100, 1200, 1400 zugeordnete Kennung aussendet. Wenn ein oder mehrere solcher Beacons 308 ermittelt 1904 wurden, können deren Details zum Ermitteln der Standortangabe herangezogen werden. Ein Beacon 308 kann beispielsweise ein iBeacon oder Eddystone-Beacon sein, wie später noch genauer beschrieben wird.

Die von 1901, 1902 und/oder 1904 bereitgestellten Daten (z.B. Geo-Informationen) können zu der Standortangabe 1915 zusammengeführt 1905, z.B. konsolidiert werden. Ändern sich die Daten aus 1901, 1902 und/oder 1904 kann die Standortangabe 1915 aktualisiert werden und optional mit dem vorhergehenden Stand verglichen werden. Wenn sich die Standortangabe 1915 signifikant verändert hat, kann ein Aufruf eines Geo-Services des Systems 300 erfolgen 1906 für deren weitere Verarbeitung und/oder Darstellung als Standortinformation 412s. Unter einer signifikanten Änderung der Standortangabe 1915 kann beispielsweise eine Änderung des Standorts 151 des Mobilfunkgeräts 102 (z.B. dessen GPS-Koordinaten) um mehr als einen Meter, eine geänderte Postadresse, eine Änderung des nächstgelegenen Beacons 308 und/oder eine Änderung zum nächstgelegenen Beacon 308 um mehr als einen Meter verstanden werden.

Der Geo-Service kann die (z.B. alle) dem Mobilfunkgerät 102 zur Verfügung stehende Geo-Information als Standortangabe erhalten und in Antwort die Metadaten für ein zuständiges Empfängergerät 306 (z.B. des Sicherheitsdienstleisters und/oder der Polizei) als Rückfallebene zurück an das Mobilfunkgerät 102 übermitteln. Für ein möglichst realistisches Ermitteln eines zuständigen Empfängergeräts 306 (z.B. des Sicherheitsdienstleisters) können datenbankgestützt Gebäudeinformationen, Zuständigkeiten und Dienstpläne von Sicherheitsdienstleister, Standortangaben von Beacons 308 und/oder aktuelle GPS-Koordinaten von Empfängergeräten 306 erfasst und einbezogen werden.

Konnten vom Betriebssystem 1412 des Mobilfunkgeräts 102 keine Standortdaten (z.B. GPS-Koordinaten) zur Verfügung gestellt werden, so kann das Lokalisieren 101 nur mittels, falls möglich, des einen oder mehr als einen erfassten Beacons 308 erfolgen. Der in einer Datenbank des Systems hinlegte Standort des oder jedes Beacons 308 kann dazu ausgewertet und der Standort des Mobilfunkgeräts 102 darauf basierend ermittelt werden, z.B. mittels einer Triangulation der Signalstärke mehrerer erfasster Beacons 308. Der Geo-Service des Systems kann bei Verwendung des einen oder mehr als einen Beacons 308 zum Lokalisieren 101 auch eine Postadresse an das Mobilfunkgerät 102 übermitteln, wenn das Betriebssystem 1412 des Mobilfunkgeräts 102 nicht selbst eine Adressauflösung implementiert.

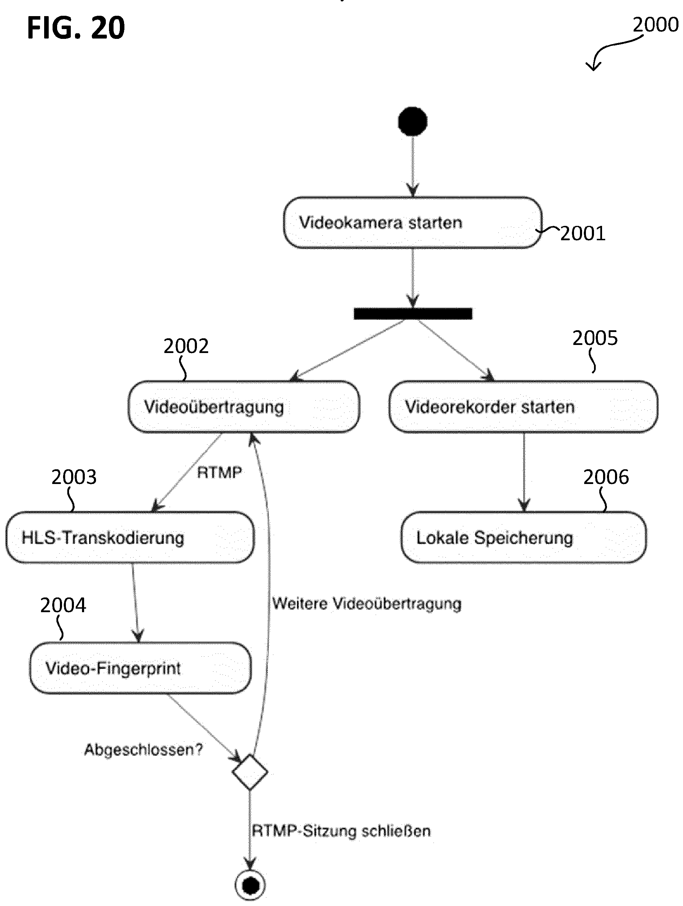

**Fig.20** veranschaulicht das Umgebungsaufzeichnen gemäß verschiedenen Ausführungsformen in einem schematischen Ablaufdiagramm 2000, das beispielsweise ein Erfassen von Videodaten aufweist, wobei die Videodaten zumindest Bilddaten und optional Audiodaten aufweisen. Das hier exemplarisch für die Videodaten beschriebene kann in Analogie auch für Fotos und/oder nur Audiodaten gelten.

Das Umgebungsaufzeichnen kann aufweisen, über eine vierte Betriebssystemfunktion die Videokamera des Mobilfunkgeräts 102 zu initialisieren 2001 und die Verarbeitung der Videodaten mittels der Anwendung 452 zu ermöglichen. Die vom Betriebssystem 1412 des Mobilfunkgeräts 102 bereitgestellten Videodaten können parallel für eine Videoübertragung über das Netzwerk 302 aufbereitet 2002 und optional mittels einer fünften Betriebssystemfunktionen lokal auf dem Mobilfunkgerät 102 gespeichert werden.

Sind die lokal gespeicherten Videodaten der Gefahr der Löschung durch einen Dritten und/oder einer Unterbrechung beim Aufbrauchen der lokalen Speicherkapazität des Mobilfunkgeräts 102 ausgesetzt, können diese optional an die Rechenanlage 304 übermittelt werden (z.B. mit oder ohne auf dem Mobilfunkgerät 102 gespeichert zu werden) und von dieser gespeichert werden. Die redundante Speicherung lokal und auf der Rechenanlage 304 kompensiert beispielsweise die Gefahr eines Netzwerkausfalls und ermöglicht damit eine erhöhte Datensicherheit.

Das Übertragen 2002 der Videodaten erfolgt beispielsweise paketweise über das RTMP-Protokoll (Real-Time-Messaging-Protocol-Protokoll) an die Rechenanlage 304 bzw. an einen von dieser bereitgestellten Video-Service und kann von der Rechenanlage 304 das ein Streaming-Format, z.B. ein HLS-Format (Hypertext-Übertragungsprotokoll-Live-Streaming-Format), transkodiert 2003 werden. Das RTMP-Protokoll ist für das wiederholte Aufsetzen bei Verbindungsabbrüchen besonders geeignet und wirkt dem entgegen, dass fehlerhaft übertragene Videodaten die komplette Datenübertragung kompromittieren.

Das Streaming-Format (z.B. HLS-Format) kann einzelne Videofragmente als eigenständige Dateien (sogenannte Chunks) abspeichern, von denen für jede Datei ein digitaler Fingerabdruck ermittelt werden kann 2004. Jeder Fingerabdruck kann zusammen mit einem Zeitstempel der jeweiligen Videodatei asynchron an einen Fingerabdruck-Service der Rechenanlage 304 übertragen und von diesem an eine oder mehr als eine externe Speichervorrichtungen übermittelt werden (auch als externe Speicherung bezeichnet). Die externe Speicherung sichert das System 300, 1100, 1200, 1400 gegen eine Datenmanipulation ab und/oder kann zumindest bereitstellen, dass eine Datenmanipulation, die z.B. von einem Mitarbeiter des Systems 300 durchgeführt wird, von extern aufgedeckt (oder zumindest rückgängig gemacht) werden kann.

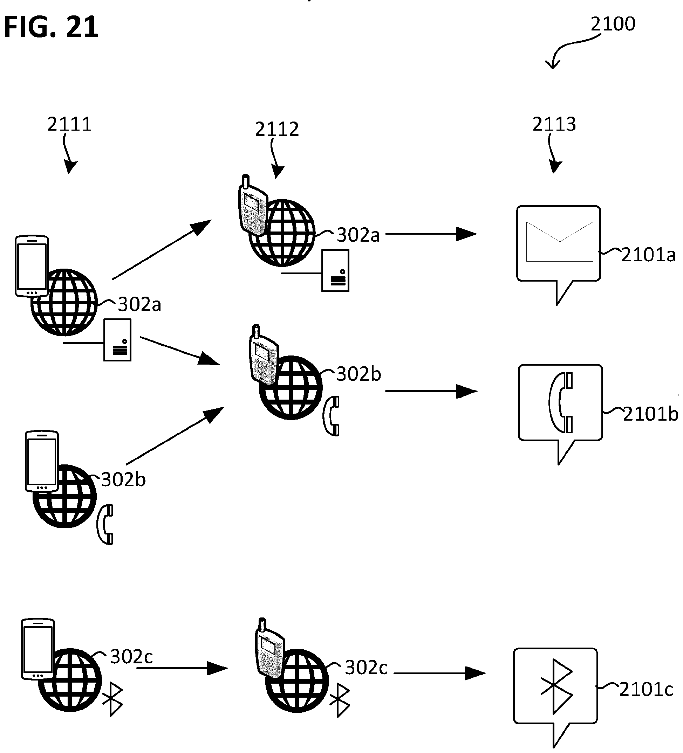

**Fig.21** veranschaulicht das Alarmieren 111 gemäß verschiedenen Ausführungsformen in einer schematischen Übersicht 2100, in welcher die Verbindung 2111 des Mobilfunkgeräts 102, die Verbindung 2112 des Empfängergeräts 306 und der Typ 2113 des KP (anschaulich der Alarmierungsweg) dargestellt sind. Das Übertragen 111 der Nachricht 106 kann, je nach Verfügbarkeit einer Internet-Verbindung und/oder je nach Erreichbarkeit des Empfängergeräts 306 (z.B. der Sicherheitskräfte) gemäß einem oder mehr als einem KP 2113 erfolgen.

Sind beide, das Mobilfunkgerät 102 und das Empfängergerät 306, mit einer Internet-Verbindung 302a verbunden, kann die Nachricht 106 in Form einer Textnachricht 2101a an das Empfängergerät 306 übertragen werden. Die Textnachricht 2101a kann beispielsweise eine Push-Nachricht oder eine SMS sein. Das Übertragen der Textnachricht 2101a an das Empfängergerät 306 kann mittels der Rechenanlage 304 erfolgen. Die Textnachricht 2101a kann die Standortangabe des Mobilfunkgeräts 102 aufweisen. Dem Empfängergerät 306 kann optional bereitgestellt sein oder werden, eine Videoübertragung zu dem Mobilfunkgeräts 102 zu initiieren, z.B. mittels der Empfängergerätanwendung. Anschaulich kann ein Helfer einen Video-Stream starten, um einen Eindruck von der aktuellen Situation des Anwenders 104 zu erlangen.

Ist das Empfängergerät 306 hingegen nur telefonisch (d.h. per Sprachnachricht) erreichbar, kann die Nachricht 106 in Form einer Sprachnachricht 2101b an das Empfängergerät 306 übertragen werden. Anschaulich kann beispielsweise ein Telefonanruf an die Sicherheitskräfte initiiert werden, durch welchen eine Alarmierung telefonisch von dem Anwender 104 ermöglicht wird. Ist das Mobilfunkgerät 102 mit der Internet-Verbindung 302a verbunden, kann optional zusätzlich zu der Sprachnachricht 2101b eine Nachricht 106 von dem Mobilfunkgerät 102 an die Rechenanlage 304 übermittelt werden (auch als internes Alarmieren bezeichnet), um beispielsweise im Nachgang Beweismaterial zur Verfügung stellen zu können.

Unabhängig von einer Verbindung zum Telefonnetz 302b und/oder der Internet-Verbindung 302a kann alternativ oder zusätzlich die Nachricht 106 in Form einer Bluetooth-Nachricht 2101c mittels einer Bluetooth-Verbindung 302c an das Empfängergerät 306 übertragen werden. Dazu kann das Mobilfunkgerät 102 (z.B. von der Anwendung 452 ausgelöst) einen Beacon implementieren (auch als Beacon-Modus bezeichnet) und kann somit von einem Beacon-Scanner in der Umgebung erkannt werden.

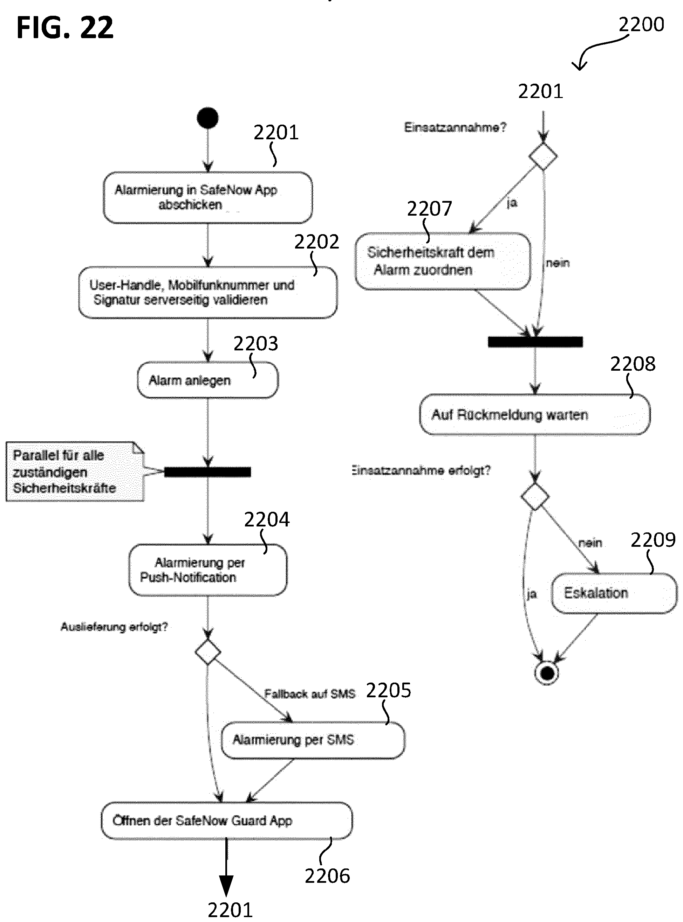

**Fig.22** veranschaulicht das Alarmieren 111 per Textnachricht 2101a gemäß verschiedenen Ausführungsformen in einem schematischen Ablaufdiagramm 2200.

Das Alarmieren 111 per Textnachricht 2101a kann mittels einer Push-Nachricht an das Empfängergerät 306 erfolgen, und im Fall, dass diese nicht an das Empfängergerät 306 übertragen werden kann, mittels der SMS. Das Alarmieren 111 per Textnachricht 2101a kann erfolgen, wenn das Mobilfunkgerät 102 und das Empfängergerät 306 mittels einer Internet-Verbindung miteinander verbunden sind. Das Mobilfunkgerät 102 kann das Alarmieren 111 durchführen 2201 (z.B. mittels der Anwendung 452), z.B. indem die Nachricht 106 an die Rechenanlage 304 übermittelt wird. Die Nachricht 106 kann optional die Benutzerkennung, die (z.B. validierte) Mobilfunknummer des Mobilfunkgeräts 102 und/oder die dazugehörende Signatur aufweisen. Die Rechenanlage 304 kann die Mobilfunknummer mittels eines Abgleichs mit der Benutzerkennung und der Signatur überprüfen 2202. Die Rechenanlage 304 kann die Nachricht 106 beispielsweise verwerfen, wenn der Abgleich keine Übereinstimmung ergibt. Ergibt der Abgleich eine Übereinstimmung, kann eine Information über den Erhalt der Nachricht 106 in einer Datenbank abgespeichert 2203 werden und ein für den Standort des Mobilfunkgeräts 102 zuständiges Empfängergerät 306 ermittelt werden, welches dann per Push-Nachricht 2101a darüber informiert wird 2204, dass das Alarmieren 111 erfolgt ist (z.B. zusammen mit der Standortangabe). Wird ermittelt, dass die Push-Nachricht 2101a nicht erfolgreich an das Empfängergerät 306 übertragen wurde, kann das Empfängergerät 306 per SMS 2101a darüber informiert werden 2205, dass das Alarmieren 111 erfolgt ist (z.B. zusammen mit der Standortangabe).

Bei Empfang 2207 der Nachricht 106 von dem Empfängergerät 306 kann dem Benutzer des Empfängergeräts 306 die Wahl bereitgestellt sein oder werden (z.B. wenn dieser in Antwort auf 2205, 2204 die Empfängergerätanwendung öffnet), ob er den Erhalt der Nachricht 2101a positiv oder negativ quittiert 2208 (anschaulich dem Hilferuf folgt oder nicht). Bei positivem Quittieren kann das Empfängergerät 306 dem Ereignis des Alarmierens 111 durch das Mobilfunkgerät 102 zugeordnet 2207 werden und eine Information darüber in der Datenbank des Systems abgespeichert werden. Erfolgt kein oder ein negatives Quittieren (z.B. innerhalb weniger Minuten), so kann die Nachricht 106 an ein anderes Empfängergerät 306 versandt 2209 werden, z.B. um die Polizei oder einen Hintergrunddienst des zuständigen Sicherheitsdienstleisters zu informieren. Sollte das Empfängergerät 306 über keine Internet-Verbindung verfügen, so kann ein Telefonanruf mit einer Sprachnachricht 2101b (anschaulich eine Ansage) an das Empfängergerät 306 gerichtet werden. Die Sprachnachricht 2101b kann in Analogie zur Textnachricht 2101a die Standortangabe, die Alarmangabe und optional die Mobilfunknummer des Mobilfunkgeräts 102 übermitteln.

Bei einer telefonischen Alarmierung 2101b kann optional ein Gespräch zwischen dem Anwender 104 und dem Benutzer des Empfängergeräts 306 initiiert werden. Das Alarmieren 111 muss in diesem Fall (z.B. wenn keine Internet-Verbindung besteht) nicht notwendigerweise mittels der Rechenanlage 304 erfolgen, kann aber von dem Mobilfunkgerät 102 (z.B. der Anwendung 452) protokolliert werden und der Inhalt des Protokolls an die Rechenanlage 304 übermittelt werden, sobald eine Internet-Verbindung besteht.

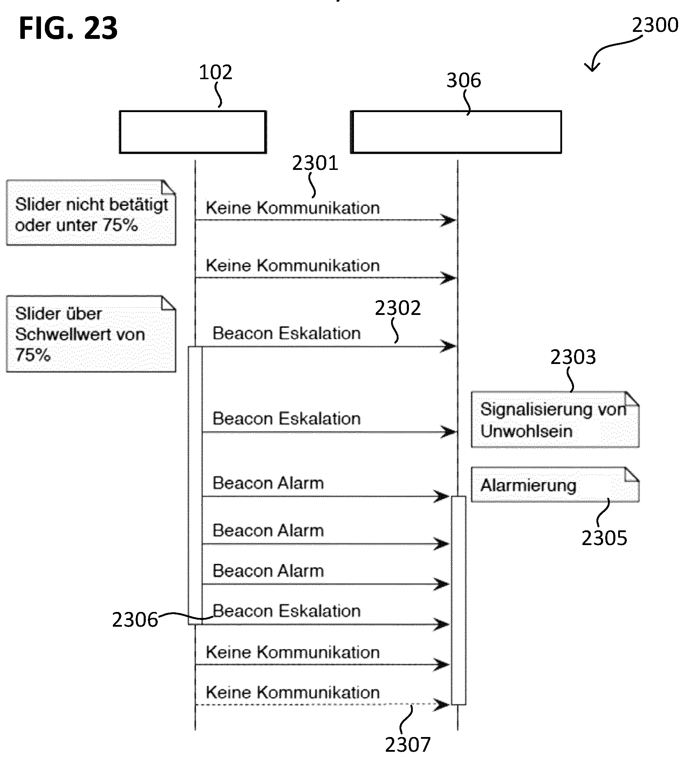

**Fig.23** veranschaulicht das Alarmieren 111 via Bluetooth 302c (auch als Bluetooth-Alarmieren 111 bezeichnet) gemäß verschiedenen Ausführungsformen in einem schematischen Ablaufdiagramm 2300. Das Bluetooth-Alarmieren 111 kann alternativ oder zusätzlich zu dem Alarmieren 111 per Internet-Verbindung 302a und/oder per Telefonnetz 302b erfolgen. Das Bluetooth-Alarmieren 111 kann beispielsweise einen oder mehr als einen Beacon 308 verwenden (auch als Beacon-Alarmieren 111 bezeichnet), um auch ohne Internet-Verbindung 302a oder Telefonnetz 302b einem im lokalen Umkreis verfügbaren Empfängergerät 306 die Nachricht 106 zuzuführen. Das Empfängergerät 306 kann beispielsweise ein mit dem Mobilfunkgerät 102 verknüpftes Mobilfunkgerät 102 sein.

Das Beacon-Alarmieren 111 kann aufweisen, dass das Senden der Nachricht 106 von dem Mobilfunkgerät 102 (z.B. mittels der Anwendung 452) mehrmals (z.B. periodisch) erfolgt. Mit anderen Worten kann das Mobilfunkgerät 102 einen Beacon-Sender implementieren. Alternativ oder zusätzlich zu der Alarmangabe kann die Nachricht eine Angabe (auch als Bereitschaftsangabe bezeichnet) aufweisen darüber, dass das Mobilfunkgerät 102 scharfgeschaltet 105 ist (d.h. in dem Bereitschaftsmodus 109 umgeschaltet ist), z.B. in Antwort auf das Scharfschalten 105. Bevor das Alarmieren 111 mittels Übermittlung der Alarmangabe erfolgt, kann beispielsweise die Bereitschaftsangabe übermittelt werden. Das Senden 111 der Nachricht 106 (die Alarmangabe und/oder die Bereitschaftsangabe aufweisend) kann beispielsweise getaktet erfolgen, z.B. alle 200 Millisekunden. Optional kann zusammen mit der Information eine oder mehr als eine persönliche Information des Anwenders 104 gesendet werden.

Ein Empfängergerät 306 (z.B. dessen Anwendung 452 und/oder Empfängergerätanwendung) im lokalen Umkreis des Mobilfunkgeräts 102 kann einen Beacon-Scanner implementieren, und die Nachricht 106 (die Alarmangabe und/oder die Bereitschaftsangabe aufweisend) empfangen.

Das Beacon-Alarmieren 111 benötigt nicht notwendigerweise eine Internet-Verbindung. Beispielsweise kann die Verwendung von Bluetooth 302c eine Reichweite der unmittelbaren Kommunikation zwischen Beacon-Sender und Beacon-Empfänger von bis zu ungefähr 100 Metern bereitstellen. Hindernisse zwischen diesen können die Reichweite jedoch reduzieren.

Der Empfang der Bereitschaftsangabe kann beispielsweise von dem Empfängergerät 306 signalisiert werden. Anschaulich kann der Sicherheitsgeber über eine "Unwohlsein" des Anwenders 104 im unmittelbaren Umfeld informiert werden. Erfolgt das Alarmieren 111, kann eine Push-Nachricht 2101a an das Empfängergerät 306 übertragen werden, beispielsweise um die Sicherheitskraft anzufordern.

Ist das Mobilfunkgerät 102 in dem Ruhemodus 107, kann das Mobilfunkgerät 102 den Beacon-Sender nicht implementieren 2301. Beispielsweise kann, während der Anwender 104 in der Anwendung 452 den Schieberegler 402s nicht bedient oder der Marker 412m unter einem gewissen Schwellwert liegt, die Anwendung 452 noch nicht als Beacon-Sender arbeiten und es erfolgt keine Signalisierung 2301. Schaltet das Mobilfunkgerät 102 in den Bereitschaftsmodus 109 um, kann der Beacon-Modus gestartet werden. Wird der Schwellwert des Schiebereglers 402s überschritten, kann die Anwendung 452 beispielsweise den Beacon-Sender implementieren 2302. Das Mobilfunkgerät 102 verhält sich je nach Betriebssystem 1412 beispielsweise als iBeacon oder als Eddystone-Beacon und übermittelt die Bereitschaftsangabe und/oder Details über den Anwender 104 (anschaulich als geringe Eskalationsstufe bevor das Alarmieren 111 erfolgt).

Mittels der Bereitschaftsangabe kann dem Empfängergerät 306 das "Unwohlsein" des Anwenders 104 im engsten lokalen Umkreis signalisiert werden 2303. Der Benachrichtigung des Empfängergeräts 306 (z.B. einer Sicherheitskraft) mittels der Bereitschaftsangabe kann gemäß einer Einstellung des Empfängergeräts 306 erfolgen (oder nicht erfolgen) und muss nicht notwendigerweise von diesem quittiert werden (z.B. im Gegensatz zum Erhalt der Alarmangabe).

Erfolgt das Alarmieren 111, kann das Empfängergerät (z.B. dessen Empfängergerätanwendung) in Antwort 2305 darauf eine Push-Benachrichtigung anzeigen 2305. Wenn der Anwender 104 das Entschärfen 105 durchführt (gegebenenfalls nur bei Erfüllen des erweiterten Entschärfungskriteriums), kann zurück zu 2305 gewechselt werden oder der Beacon-Modus kann beendet 2306 werden. Wird der Beacon-Modus beendet, kann dies von dem System (z.B. dem Empfängergerät 306) optional als Fehlalarm interpretiert werden. Wird diese Zeit überschritten, dann kann das Alarmieren 111 aktiv bleiben, auch wenn keine weitere Signalisierung oder Bedienung des Mobilfunkgeräts 102 (z.B. durch den Anwender) erfolgt. Solange das Alarmieren 111 aktiv ist, kann die Nachricht 106 mit der Alarmangabe wiederholt gesendet werden.

In Analogie kann das Übermitteln der Nachricht 106 an ein verknüpftes Mobilfunkgerät 102 erfolgen. Das verknüpfte Mobilfunkgerät 102 kann zunächst die Bereitschaftsangabe erhalten. In diesem Fall kann das verknüpfte Mobilfunkgerät 102 allerdings eingerichtet sein, nur dann zu reagieren 2305, wenn die Bereitschaftsangabe von einem dazu verknüpften Mobilfunkgerät 102 stammt. Anschaulich kann das verknüpfte Mobilfunkgerät 102 (z.B. dessen Anwendung 452) nur auf diejenigen Mobilfunkgeräte 102 reagieren, deren Benutzerkennung mit dem Mobilfunkgerät 102 verknüpft ist (d.h. die Teil der Gruppe verknüpfter Mobilfunkgeräte 102 sind). Andere Mobilfunkgeräte, die nicht Teil der Gruppe sind, können von den Mobilfunkgeräten 102 der Gruppe ignoriert werden. Optional kann die Anwendung 452 im Gegensatz zur Empfängergerätanwendung derart eingerichtet sein, dass bereits der Erhalt der Bereitschaftsangabe das Anzeigen 2305 der Push-Benachrichtigung auslöst.

Die Möglichkeiten zur Übertragung von Details des Anwenders unterscheiden sich stark zwischen iBeacons und Eddystone-Beacons, worauf im Folgenden eingegangen wird.

Der iBeacon-Standard erlaubt beispielsweise keine Übertragung von zusätzlichen Nutzdaten und wird somit nur unter iOS für das Alarmieren 111 via Bluetooth-Verbindung 302c verwendet, da der EddyStone-Standard dort lediglich für den Empfang von Beacon-Daten unterstützt wird. Jedes iBeacon überträgt die Proximity-UUID (eine statische UUID für Beacons des Systems) sowie eine Major- und eine Minor-ID (z.B. zwei 16-Bit Zahlen). Letztere erlauben zusammen die Adressierung von 2¹⁶·2¹⁶ = 4'294'967'296 Geräten.

Um die Bereitschaftsangabe und die Alarmangabe in die Nachricht 106 zu integrieren, kann das System 300, 1100, 1200, 1400 optional eingerichtet sein, das höchstwertige Bit der Major-ID als Bitschalter (Flag) zu verwenden. Mittels des Bitschalters kann angegeben werden, dass das Mobilfunkgerät 102 in dem Bereitschaftsmodus 109 (Bitschalter=0) ist (was der Bereitschaftsangabe entspricht), und, dass die Berührung in dem Bereitschaftsmodus 109 unterbrochen (Bitschalter=1) wurde (was der Alarmangabe entspricht). In dem Fall stehen 2¹⁵·2¹⁶ = 2'147'483'648 Geräteadressen zur Verfügung. Das System 300, 1100, 1200, 1400 kann jedem iOS-Anwender statisch eine dieser Geräteadressen zuweisen und kann dieser die Benutzerkennung des iOS-Anwenders 104 zuzuordnen. Diese Zuordnung kann beispielsweise nur serverseitig 304 bereitgestellt und/oder gespeichert sein und die Validierung eines Alarmierens 111 kann in dem Fall nur dann erfolgen, wenn das von der Nachricht 106 adressierte Empfängergerät 306 aktuell eine Internet-Verbindung hat.

Der EddyStone-Standard definiert mehrere Varianten, von denen das System 300, 1100, 1200, 1400 beispielsweise die Variante der Eddystone-UID (einmalige Eddystone-Kennung) verwenden kann. Der 10-Byte umfassende Namensraum ("Namespace") enthält einen statischen Wert, der die Beacons 308 des Systems 300 kennzeichnet. Die 6-Byte umfassende Instanz ("Instance") kann auch beim EddyStone-Standard nicht für die Übertragung einer Benutzerkennung ausreichen. Stattdessen kann analog zum iBeacon-Standard eine Geräteadresse generiert werden. Die Zuordnung der Geräteadresse auf die Benutzerkennung kann dann beim EddyStone-Standard nur serverseitig 304 erfolgen und die Validierung eines Alarmierens 111 kann entsprechend nur dann erfolgen, wenn das Empfängergerät 306 aktuell eine Internet-Verbindung hat. Da beim EddyStone-Standard ein größerer Zahlenraum als beim iBeacon-Standard zur Verfügung steht, kann in diesem Fall jedoch eine zusätzliche Absicherung bereitgestellt sein. Zur Absicherung können beispielsweise von den zur Verfügung stehenden 48 Bit die ersten 14 Bit als Prüfsumme über die Benutzerkennung verwendet werden und die restlichen 34 Bit zufällig vergeben werden. Das Erraten einer gültigen Geräteadresse wird dadurch zusätzlich erschwert, was eine Manipulation erschwert.

Zusätzlich zum UID-Frame kann der Eddystone-Standard einen sogenannten TLM-Datenframe (Telemetrie-Datenframe, d.h. eine Protokolldateneinheit auf der Sicherungsschicht) aufweisen. Der TLM-Datenframe kann für die Übertragung von Telemetrie-Daten im Rahmen des Internets der Dinge (IoT) eingerichtet sein. Das System 300, 1100, 1200, 1400 kann beispielsweise einen Byte-Offset 2 standardkonform für den Batterie-Status verwenden. In dem Byte-Offset 3 legt das höchstwertige Bit fest, ob in weiteren Feldern eine GPS-Koordinate oder Major- und Minor-ID eines Beacons 308 des Systems 300 übertragen werden soll. Das nächste Bit von Byte-Offset 3 gibt an, ob es sich um die Bereitschaftsangabe (Bit=0) oder eine Alarmangabe (Bit=1) handelt. Die restlichen Bits von Byte-Offset 3 enthalten die Anzahl der Sprünge (Hops), die ein Paket genommen hat (z.B. zum Erhöhen der Reichweite der Übertragung im via Bluetooth) . Die Byte-Offsets 8 und 9 sowie 12 und 13 können jeweils als 16-Bit Wort ausgewertet werden. Ist das höchstwertige Bit von Byte-Offset 3 gesetzt, so erfolgt die Interpretation als GPS-Koordinate mit Byte-Offsets 7, 8 und 9 als Breitengrad und Byte-Offset 11, 12 und 13 als Längengrad (IEEE 754 Gleitkommazahl mit zwei Bit Exponent und 21 Bit Mantisse). Ist das höchstwertige Bit von Byte-Offset 3 nicht gesetzt, dann enthalten Byte-Offset 8 und 9 die Major-ID und Byte-Offset 12 und 13 die Minor-ID. Wenn die Position unbekannt ist, dann ist das höchstwertige Bit von Byte-Offset 3 nicht gesetzt und die Byte-Offsets 8, 9, 12 und 13 enthalten den Wert 0.

Optional kann ein Erhöhen der Reichweite der Übertragung im via Bluetooth erfolgen, wie nachfolgend genauer beschrieben wird. Mittels des Mechanismus des Bluetooth-Alarmierens 111 kann signifikant die Abdeckung von Bereichen mit schlechter Mobilfunkabdeckung verbessert werden. Allerdings kann das unmittelbare Empfangen der Nachricht 106 auf eine Reichweite von beispielsweise ungefähr 100 Metern beschränkt sein. Beim unmittelbaren Empfangen müsste das Empfängergerät 306 dann über eine Internet-Verbindung verfügen, um das Alarmieren 111 validieren zu können. Beide Faktoren werden durch das Erhöhen der Reichweite verbessert.

Das Erhöhen der Reichweite kann mittels einer Vorrichtung (auch als Extender oder Reichweitenvergrößerung-Vorrichtung bezeichnet) erfolgen, die eingerichtet ist, eingehende Nachrichten des Systems 300 (z.B. Beacon-Pakete) weiterzuleiten. Beispielsweise kann eine empfangene Nachricht (z.B. die Alarmangabe und/oder die Bereitschaftsangabe aufweisend) von dem Extender weitergegeben werden, beispielsweise nur dann, wenn diese eine Standortangabe (beispielsweise GPS-Koordinaten oder Beacon-Standortinformation) aufweist und/oder wenn diese mit der Standortangabe des Extenders ergänzt werden kann. Letzteres kann die Lokalisierung zwar ungenauer machen, aber dennoch eine Standortangabe bereitstellen, was gegenüber einer Weiterleitung ganz ohne jede Standortangabe zumindest einen besser nutzbaren Informationsgehalt bereitstellt. Die Weiterleitung erfolgt beispielsweise ausschließlich nach einem Beacon-Standard (z.B. dem EddyStone-Standard), der das Übertragen einer Standortangabe unterstützt. Wenn der Beacon-Standard (z.B. der iBeacon-Standard) das Übertragen einer Standortangabe nicht unterstützt, kann bereitgestellt werden, dass zumindest bereits der erste empfangende Extender eine Standortangabe ergänzen kann. Um das zyklische Weiterleiten von Paketen zu verhindern, kann der TLM-Datenframe eine Sprungzähler ("Hop-Count") aufweisen, der bei jeder Weiterleitung inkrementiert wird. Pakete mit einem Sprungzähler größer vier werden beispielsweise verworfen. Sofern der Extender selbst über eine Internet-Verbindung verfügt, kann die Einkopplung der Nachricht in das Internet 302 erfolgen. Optional können das Mobilfunkgerät 102 und/oder das Empfängergerät 306 eingerichtet sein, die Funktionen des Extenders zu implementieren, um damit die beschränkte Bluetooth-Reichweite zu erweitern.

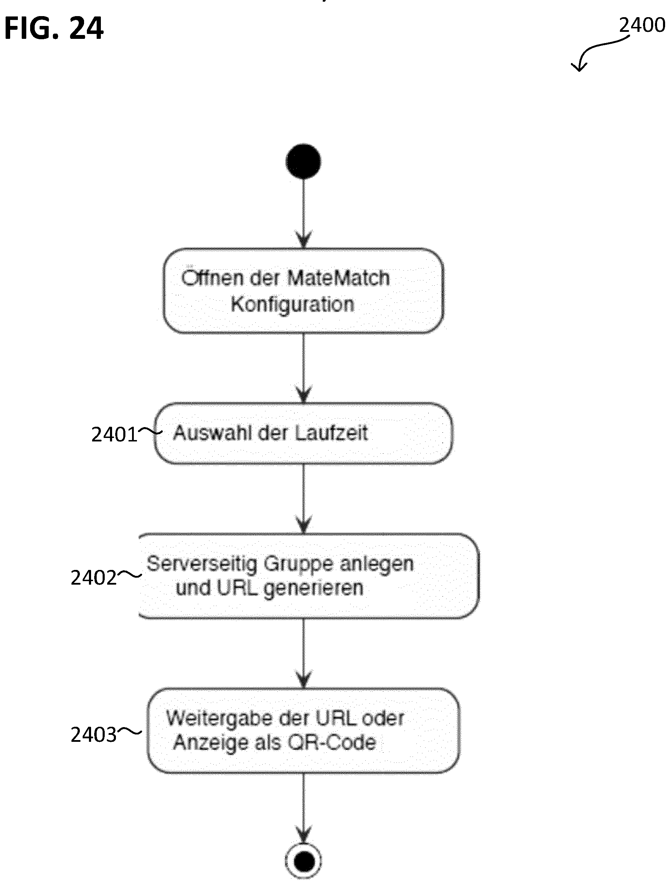

**Fig.24** veranschaulicht die Verknüpfung von zwei oder mehr Mobilfunkgeräten 102, 306 (auch als Verknüpfen bezeichnet) gemäß verschiedenen Ausführungsformen in einem schematischen Ablaufdiagramm 2400. Das Verknüpfen kann das Erzeugen einer Adresse (auch als Verknüpfen-Adresse bezeichnet) aufweisen.

Unter dem Verknüpfen kann das Assoziieren von zwei oder mehr Mobilfunkgeräten 102, 306 (auch als verknüpfte Mobilfunkgeräte 102, 306 bezeichnet) verstanden werden, z.B. dauerhaft oder temporär. Die verknüpften zwei oder mehr Mobilfunkgeräte 102, 306 bilden eine Gruppe, bei der ein Scharfschalten 105 (mittels der Bereitschaftsangabe) oder ein Alarmieren 111 (mittels der Alarmangabe) eines Mobilfunkgeräts 102 der Gruppe zu einem oder mehr als einem (z.B. jedem) Mobilfunkgerät 102 der Gruppe mitgeteilt wird, z.B. zusätzlich zum der Mitteilung darüber an Sicherheitskräfte

Optional können die verknüpften Mobilfunkgeräte 102, 306 untereinander Zugriff auf deren aktuellen Standort haben. Alternativ oder zusätzlich können sich die verknüpften Mobilfunkgeräte 102, 306 untereinander einem niedrigen Ladestand der Batterie mitteilen.

Das Bilden eines Paars verknüpfter Mobilfunkgeräte 102, 306 (z.B. das Beitreten eines Mobilfunkgeräts 102 in eine bereits gebildete Gruppe) wird im Folgenden beschrieben. Ein erstes Mobilfunkgerät 102 kann eine Wahlentscheidung (z.B. eine entsprechende Konfigurationsseite der Anwendung 452) bereitstellen 2401, gemäß welcher dem Anwender 104 ermöglicht wird, für ein zweites Mobilfunkgerät 102 eine Zeitangabe auszuwählen (z.B. 1 Minute, mehrere Minuten, Tage, Wochen oder unbegrenzt). Das System 300, 1100, 1200, 1400 (z.B. das erste Mobilfunkgerät 102 und/oder die Rechenanlage 304) kann in Antwort darauf eine neue Gruppe anlegen, der eine Laufzeit gemäß der Zeitangabe zugeordnet wird. Ferner kann das System 300, 1100, 1200, 1400 (z.B. das erste Mobilfunkgerät 102 und/oder die Rechenanlage 304) eine Verknüpfen-Adresse erzeugen 2402, welche der Gruppe zugeordnet ist. Die Verknüpfen-Adresse kann beispielsweise einen Ressourcenzeiger aufweisen oder daraus gebildet sein, z.B. einen einheitlichen Ressourcenzeiger (URL). Der Ressourcenzeiger kann eine der Gruppe zugeordnete Ressource des Systems 300, beispielsweise eine Internetseite, identifizieren und lokalisieren. Die Verknüpfen-Adresse kann von dem ersten Mobilfunkgerät 102 an das zweite Mobilfunkgerät 102 übertragen werden, z.B. mittels einer Nachricht (z.B. einer Textnachricht) oder mittels eines QR-Codes (d.h. eines zweidimensionalen Codes), der beispielsweise von dem ersten Mobilfunkgerät 102 angezeigt 2403 wird, ausgedruckt vorliegt oder anderweitig wiedergegeben wird.

Der Ressourcenzeiger kann einen Token (z.B. einen JWT-Token - "JavaScript Object Notation Web Token") aufweisen, der Information aufweist, die es ermöglichen, der Gruppe beizutreten. Der Ressourcenzeiger kann beispielsweise ein ULD sein, der auch mittels eines Browsers geöffnet werden kann, z.B. falls keine Anwendung 452 auf dem zweiten Mobilfunkgerät 102 vorhanden ist. Die mittels des Browsers geöffnete Ressource (z.B. Internetseite) kann optional einen Hinweis aufweisen, der es ermöglicht, die Anwendung 452 auf dem zweiten Mobilfunkgerät 102 zu installieren (z.B. herunterzuladen). Beispielsweise kann auf den Download der Anwendung 452 in einem oder mehr als einem Anwendungsmarktplatz (auch als App-Store bezeichnet) hingewiesen werden.

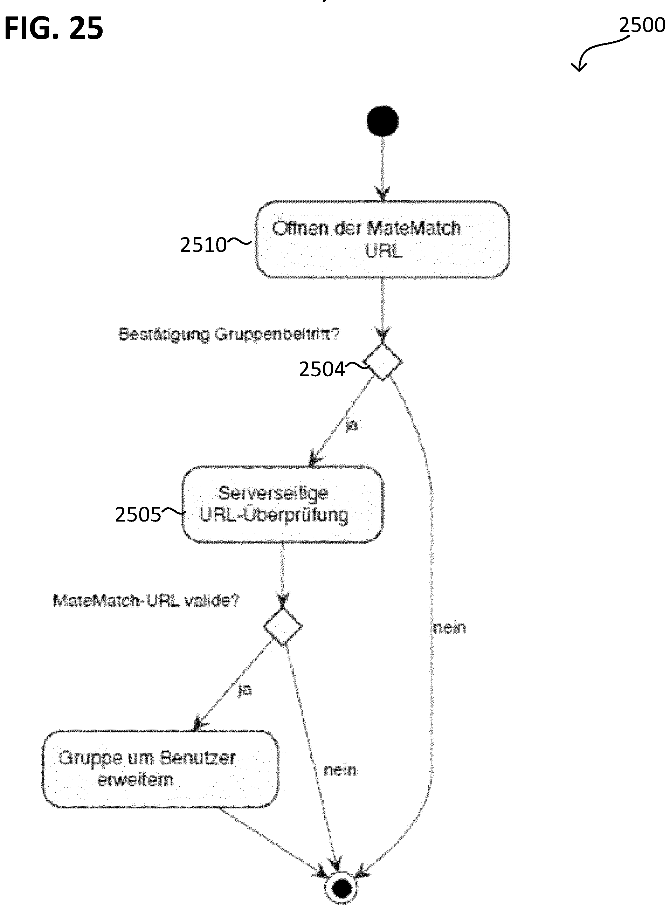

**Fig.25** veranschaulicht die das Verknüpfen gemäß verschiedenen Ausführungsformen in einem schematischen Ablaufdiagramm 2500. Wird die Verknüpfen-Adresse (direkt oder über ein Foto des QR-Codes) von dem zweiten Mobilfunkgerät 102 geöffnet 2510, kann in Antwort darauf eine Bestätigungsabfrage 2504 erfolgen, beispielsweise mittels der Anwendung 452, auf dem zweiten Mobilfunkgerät 102. Dies kann der Sicherheit dienen. Nach erfolgter Bestätigung, kann die Verknüpfen-Adresse optional serverseitig 304 validiert 2505 werden. Bei erfolgreicher Validierung 2505 kann das zweite Mobilfunkgerät 102 der Gruppe hinzugefügt werden. Nach Ablauf der Laufzeit kann die Gruppe gelöscht werden, was zur Folge haben kann, dass die Mobilfunkgeräte 102 keine Information mehr miteinander teilen.

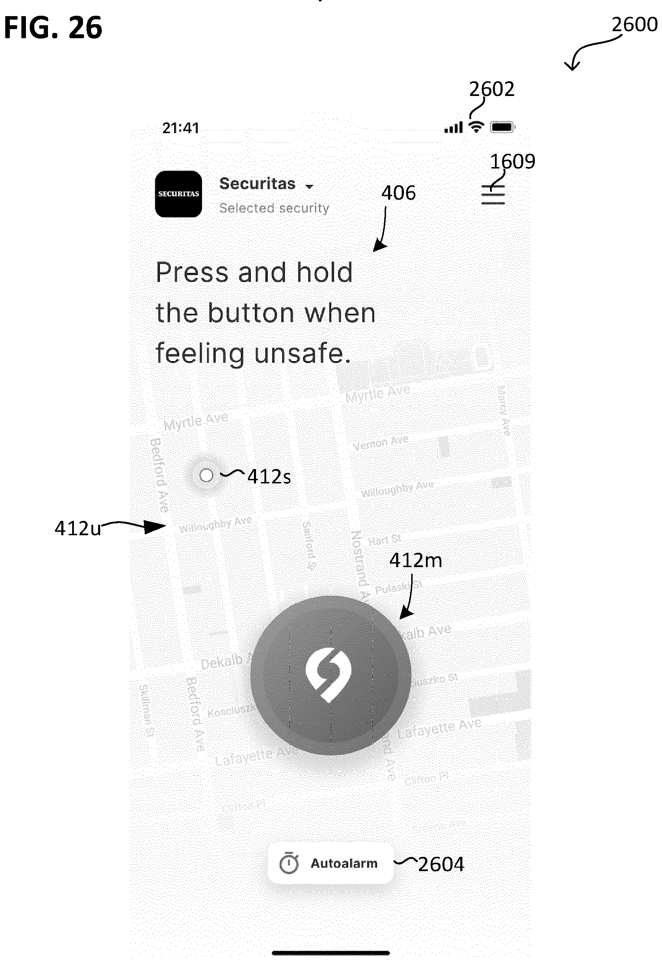

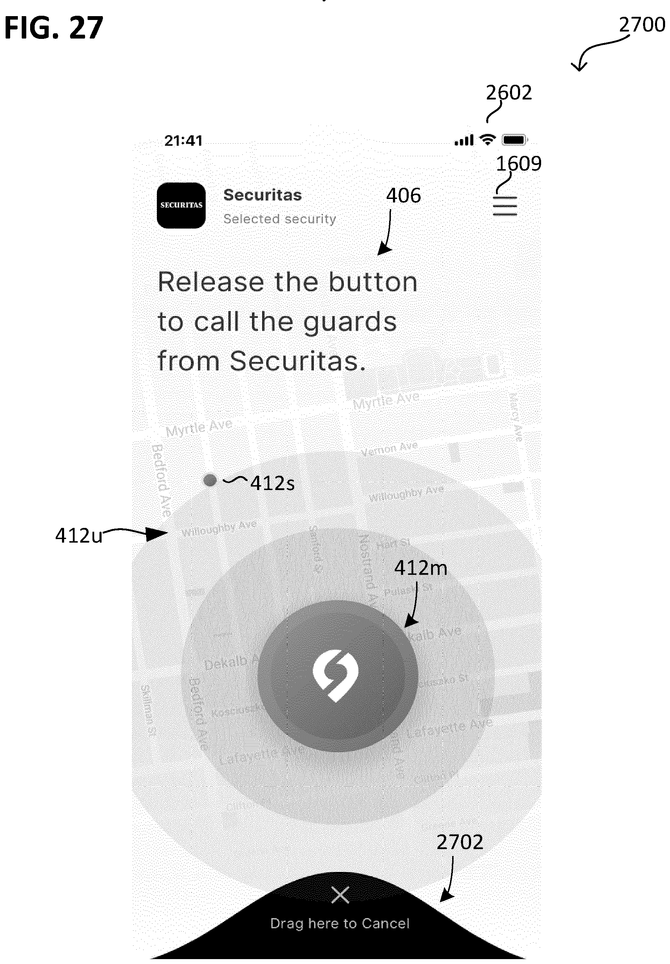

**Fig.26** und **Fig.27** veranschaulichen jeweils die Anzeigevorrichtung 112 eines Mobilfunkgeräts 102 in schematischen Draufsichten zu einem ersten Zeitpunkt 2600 und einem zweiten Zeitpunkt 2700 nach dem ersten Zeitpunkt 2600. Zwischen dem ersten Zeitpunkt 2600 und dem zweiten Zeitpunkt 2700 kann das Ermitteln der Berührung des Mobilfunkgeräts 102 erfolgt sein. Zu dem ersten Zeitpunkt 2600 kann das Mobilfunkgerät 102 in dem Ruhemodus sein. Zu dem zweiten Zeitpunkt 2700 kann das Mobilfunkgerät 102 in dem Bereitschaftsmodus 109 sein.

Das hierin beschriebene Alarmieren 111, in Antwort darauf, dass die Berührung unterbrochen wurde, kann auch als Totmannschaltung (auch als Totmanneinrichtung bezeichnet) bezeichnet werden. Die Totmannschaltung löst beim Loslassen des Mobilfunkgeräts 102 das Alarmieren 111 aus.

Vorstehend wurde unter anderem auf ein Entschärfungskriterium Bezug genommen, welches erfüllt ist, wenn der Marker 412m wieder in die erste Markerposition bzw. die Ausgangsposition gebracht wird. Dies erreicht, dass ein versehentliches Scharfschalten erschwert wird, da der Bereitschaftsmodus 109 beispielsweise erst dann aktiviert wird, wenn der Marker 412m aus seiner Ausgangsposition herausgebracht wird (als Berührungsmuster). Dies hemmt somit ein versehentliches Scharfschalten.

Im Folgenden wird auf einen virtuellen Totmannschalter 412m Bezug genommen, der das Scharfschalten wiederum erleichtert. Dasselbe kann in Analogie auch für andere Formen und/oder Ausgestaltungen des Bedienelements 402s gelten, z.B. auch für den zuvor beschriebenen linearen Schieberegler.

Mittels des Totmannschalters 412m kann die bloße Berührung (z.B. an der Position des Totmannschalters 412m) als Scharfschaltungskriterium implementiert werden. Mit anderen Worten kann das Umschalten in den Bereitschaftsmodus 109 erfolgen, wenn in dem Ruhemodus 107 ermittelt wurde, dass die Berührung erfolgt, z.B. dass der Totmannschalter 412m berührt wird (z.B. mit dem Finger des Anwenders 104). Noch anders ausgedrückt, kann das Scharfschaltungskriterium erfüllt sein, wenn die Berührung (z.B. an der Position des Totmannschalters 412m) erfolgt und/oder beginnt.

Die Anwendung 452 kann eingerichtet sein, die Position des Totmannschalters als Berührungshinweis anzuzeigen. Alternativ oder zusätzlich kann die Anwendung 452 kann eingerichtet sein, in dem Bereitschaftsmodus 109 optional einen Berührungshinweis 2702 über das Entschärfungskriterium (auch als Entschärfungshinweis 2702 bezeichnet) auszugeben. Der Entschärfungshinweis 2702 kann beispielsweise, wie hier dargestellt, eine Textform aufweisen. Alternativ oder zusätzlich kann der Entschärfungshinweis 2702 auch anders angezeigt werden, z.B. mittels eines Piktogramms (hier ein Kreuz) oder Ähnlichem, z.B. die Position repräsentierend, an dem die Endposition einer Streichbewegung liegen soll.

Das Entschärfungskriterium kann beispielsweise erfüllt sein, wenn die Streichbewegung (z.B. mit dem Finger des Anwenders 104) ohne Berührungsunterbrechung erfolgt und deren Endpunkt an einer vordefinierten Position (auch als Entschärfungsposition bezeichnet) der Anzeige liegt. Die Streichbewegung kann beispielsweise nur dann registriert werden, wenn diese an der Position des Totmannschalters 412m beginnt. Beispielsweise kann die Entschärfungsposition am unteren Rand der Anzeige sein, z.B. links, rechts und/oder mittig. Diese Platzierung der Entschärfungsposition ist besonders ergonomisch. Beispielsweise kann die Streichbewegung vertikal erfolgen, d.h. zum unteren Rand der Anzeige hin.

Wird die Berührung des Totmannschalters 412m unterbrochen, kann, wie vorstehend beschrieben, das Alarmieren 111 ausgelöst werden.

Wie oben bereits erläutert, kann die Anwendung 452 eingerichtet sein, optional eine oder mehr als eine der folgenden Informationen auszugeben (z.B. mittels der Benutzerschnittstelle 112) und/oder periodisch zu aktualisieren:
- die Umgebungsinformation 412u;
- die Standortinformation 412s;
- einen oder mehr als einen Berührungshinweis 406, 2702 zu einer Berührung, die das erste vordefinierte Kriterium und/oder das zweite vordefinierte Kriterium erfüllen würde (z.B. hier in Textform und/oder als Piktogramm);
- eine Information 2602 über die Verbindungsqualität zu dem Netzwerk 302; und/oder
- eine Information 2604 (auch als Timerinformation 2604 bezeichnet) über den Timer.

Die Timerinformation 2604 kann beispielsweise anzeigen, ob der Timer aktiviert ist. Alternativ oder zusätzlich kann die Timerinformation 2604 beispielsweise die Funktion bereitstellen, den Zeitraum 201 manuell einzustellen und/oder den Timer zu starten bzw. abzubrechen (z.B. in Antwort auf eine Berührung der Timerinformation 2604).

Im Allgemeinen kann verstanden werden, dass die hierin beschriebenen Informationen (die z.B. von dem Mobilfunkgerät 102 ausgegeben werden), akustisch und/oder optisch ausgegeben werden können.

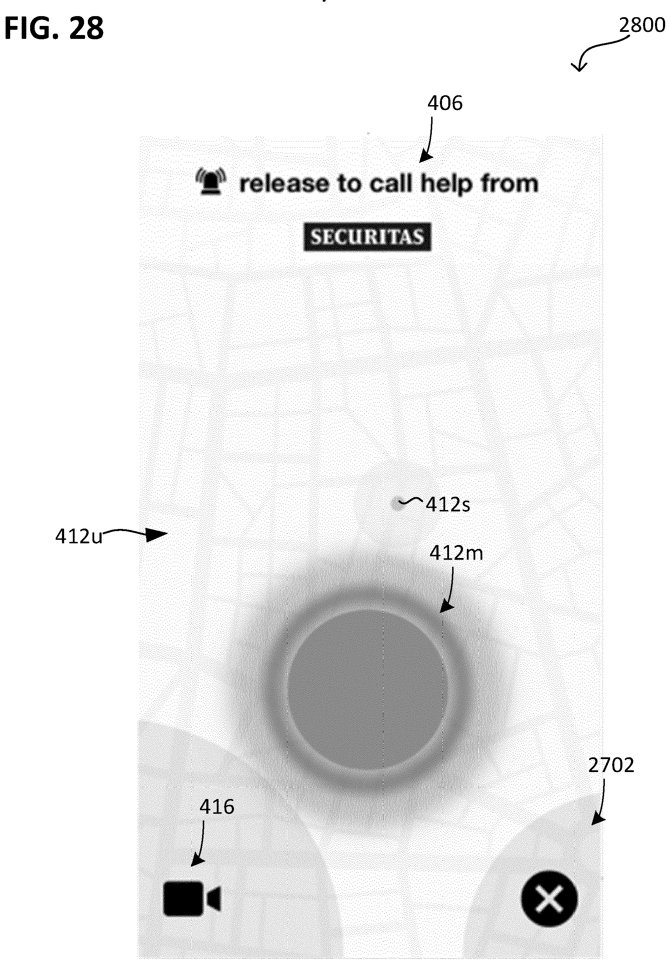

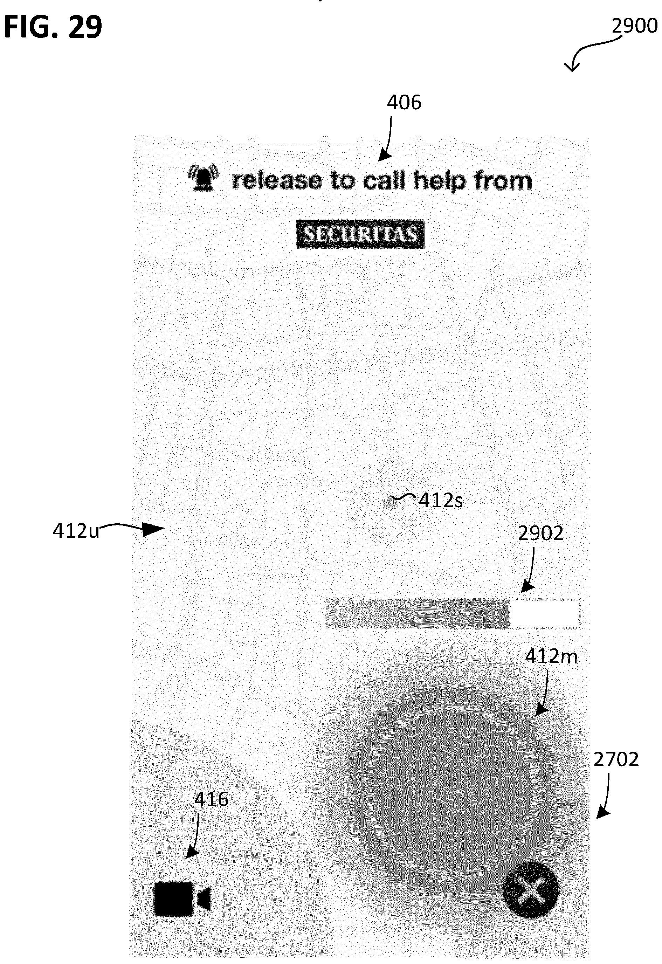

**Fig.28** und **Fig.29** veranschaulichen jeweils die Anzeigevorrichtung 112 eines Mobilfunkgeräts 102 in schematischen Draufsichten zu einem ersten Zeitpunkt 2800 und einem zweiten Zeitpunkt 2700 nach dem ersten Zeitpunkt 2900. Zwischen dem ersten Zeitpunkt 2800 und dem zweiten Zeitpunkt 2900 kann das Ermitteln der Berührung des Mobilfunkgeräts 102 erfolgt sein.

In dem hier dargestellten Beispiel, kann die Entschärfungsposition am unteren rechten Rand der Anzeige angeordnet sein. Dies erreicht mehr Platz zum Anzeigen von Informationen.

Beispielsweise kann am linken Rand der Anzeige der Ort der dritten Markerposition 416 (auch als Umgebungsaufzeichnen-Position bezeichnet) angeordnet sein und/oder als Berührungshinweis angezeigt werden. Wird der Totmannschalter 412m in die Umgebungsaufzeichnen-Position 416 am unteren linken Rand der Anzeige gebracht, kann in Antwort darauf das Umgebungsaufzeichnen gestartet werden. Beispielsweise kann es das Bringen des Totmannschalters 412m in die Umgebungsaufzeichnen-Position 416 veranlassen, dass der dritte Sensor (z.B. die Kamera, z.B. Videokamera) des Mobilfunkgeräts 102 aktiviert wird und/oder mittels diesem Audiodaten und/oder Bilddaten erfasst werden.

Die derart paarweise voneinander verschiedenen Markerpositionen, z.B. zum Entschärfen unten rechts, zum Scharfstellen mittig und zum Umgebungsaufzeichnen unten links, erleichtern, dass diese Aktionen unabhängig voneinander durchgeführt werden können. Indem die Markerpositionen nicht alle auf einer Geraden (z.B. auf den Ecken eines Vielecks) liegen, wird erreicht, dass der Weg der Streichbewegung verlängert ist, was ein versehentliches Auslösen der entsprechenden Funktion erschwert.

Vorstehend wurden verschiedene Kriterien (z.B. das Scharfschaltungskriterium und/oder das Entschärfungskriterium) erläutert, welche beispielsweise eine oder mehr als eine räumliche Vorgabe aufweisen, z.B. die Entschärfungsposition und/oder eine Richtung der Streichbewegung. Alternativ oder zusätzlich kann das Kriterien (z.B. das Scharfschaltungskriterium und/oder das Entschärfungskriterium) eine zeitliche Vorgabe aufweisen. Beispielsweise kann ein Kriterium (z.B. das Scharfschaltungskriterium und/oder das Entschärfungskriterium) erfüllt sein, wenn die zeitliche Vorgabe erfüllt ist, z.B. ein Zeitraum. Beispielsweise kann das Entschärfungskriterium erst dann erfüllt sein, wenn die Berührung an der Entschärfungsposition (nach der Streichbewegung) über einen der vordefinierten Zeitraum (auch als Entschärfungszeitraum bezeichnet) nicht unterbrochen wird. Der Entschärfungszeitraum kann beispielsweise mehrere Sekunden sein, z.B. mehr als 2 oder mehr als 5 Sekunden.

Anschaulich kann dann das Entschärfungskriterium erfüllt sein, wenn der Totmannschalter 412m für einen vordefinierten Zeitraum in der Entschärfungsposition gehalten wird mittels der Berührung.

Selbiges kann alternativ oder zusätzlich in Analogie für das Scharfstellen gelten.

Diese zeitliche Vorgabe des Kriteriums (z.B. des Scharfschaltungskriteriums und/oder des Entschärfungskriteriums) erreicht beispielsweise, dass ein versehentliches Entschärfen/Scharfstellen erschwert wird. Ebenso kann es die zeitliche Vorgabe des Kriteriums ermöglichen, das Bedienungskonzept an die Fähigkeiten des Nutzers besser anzupassen.

Optional kann die Anwendung 452 eingerichtet sein, eine Information 2902 über den Fortschritt (auch als Fortschrittinformation bezeichnet) des Erfüllens des Kriteriums (z.B. des Scharfschaltungskriteriums und/oder des Entschärfungskriteriums) auszugeben. Die Fortschrittinformation 2902 kann beispielsweise auf die zeitliche Vorgabe und/oder die räumliche Vorgabe des Kriteriums bezogen sein. In dem hier dargestellten Beispiel kann die Fortschrittinformation 2902 grafisch ausgeben, welcher Teil des Entschärfungszeitraums bereits abgelaufen ist. Diese Ausgabe kann alternativ oder zusätzlich akustisch erfolgen.

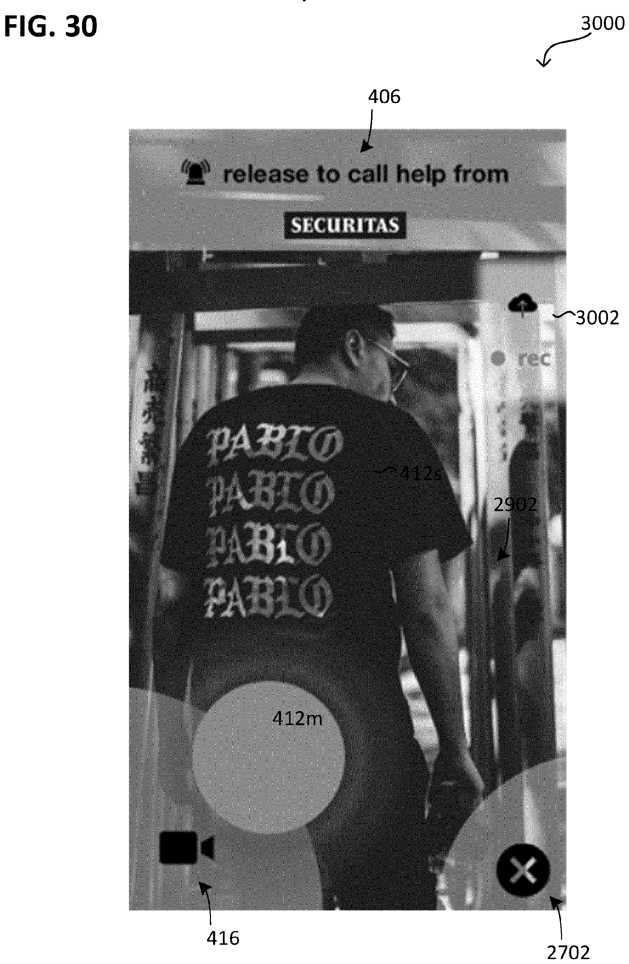

**Fig.30** veranschaulicht die Anzeigevorrichtung 112 eines Mobilfunkgeräts 102 in einer schematischen Draufsicht, nachdem das Umgebungsaufzeichnen gestartet wurde. Optional kann die Anwendung 452 eingerichtet sein, eine Information 3002 über den Status des Umgebungsaufzeichnens (auch als Aufzeichnungsstatus bezeichnet) auszugeben. Beispielsweise kann der Aufzeichnungsstatus repräsentieren, ob und/oder seit wann das Umgebungsaufzeichnen erfolgt. Beispielsweise kann der Aufzeichnungsstatus eine Dauer des Umgebungsaufzeichnens repräsentieren. Beispielsweise kann der Aufzeichnungsstatus repräsentieren, welcher Art das Umgebungsaufzeichnen ist (z.B. optisch oder akustisch). Beispielsweise kann der Aufzeichnungsstatus repräsentieren, mittels welchen Sensors das Umgebungsaufzeichnen erfolgt (z.B. Kamera und/oder Mikrofon). Beispielsweise kann der Aufzeichnungsstatus repräsentieren, ob oder wohin die Umgebungsdaten übermittelt werden, z.B. wenn diese an eine von dem Mobilfunkgerät 102 externe Rechenanlage 304 übermittelt werden.

## Patentansprüche

1. Verfahren (100) zum Betreiben eines Mobilfunkgeräts (102) gemäß einem ersten Modus (107) und einem zweiten Modus (109), das Verfahren aufweisend:
• Ermitteln (101) einer Angabe über einen Standort des Mobilfunkgeräts (102) mittels eines ersten Sensors des Mobilfunkgeräts (102);
• Ermitteln einer Berührung des Mobilfunkgeräts (102) mittels eines zweiten Sensors des Mobilfunkgeräts (102) ;
• Umschalten (105) in den zweiten Modus (109), wenn in dem ersten Modus (107) ermittelt wurde, dass die Berührung ein erstes vordefiniertes Kriterium erfüllt;
• Erzeugen (111) einer Nachricht (106) gemäß einem drahtlos-Kommunikationsprotokoll, wenn in dem zweiten Modus (109) ermittelt wurde, dass die Berührung erstmalig unterbrochen wurde, wobei die Nachricht (106) die Angabe aufweist und ferner angibt, dass die Berührung unterbrochen wurde;
• Umschalten (105) in den ersten Modus (107) ohne Erzeugen der Nachricht (106), wenn in dem zweiten Modus (109) ermittelt wurde, dass die Berührung ein zweites vordefiniertes Kriterium erfüllt.

2. Verfahren (200) zum Betreiben eines Mobilfunkgeräts (102) gemäß einem ersten Modus (107) und einem zweiten Modus (109), das Verfahren aufweisend:
• Ermitteln (101) einer Angabe über einen Standort des Mobilfunkgeräts (102) mittels eines ersten Sensors des Mobilfunkgeräts (102);
• Ermitteln (103) einer Berührung des Mobilfunkgeräts (102) mittels eines zweiten Sensors des Mobilfunkgeräts (102);
• Umschalten (105) in den zweiten Modus (109), wenn in dem ersten Modus (107) ermittelt wurde, dass die Berührung ein erstes vordefiniertes Kriterium erfüllt;
• Erzeugen (111) einer Nachricht (106) gemäß einem drahtlos-Kommunikationsprotokoll, wenn in dem zweiten Modus (109) ermittelt wurde, dass seit dem Umschalten in den zweiten Modus (109) ein vordefinierter Zeitraum verstrichen ist, wobei die Nachricht (106) die Angabe aufweist und ferner angibt, dass der vordefinierte Zeitraum verstrichen ist;
• Umschalten (105) in den ersten Modus (107) ohne Erzeugen der Nachricht (106), wenn in dem zweiten Modus (109) ermittelt wurde, dass die Berührung ein zweites vordefiniertes Kriterium erfüllt;
• Erzeugen (111) der Nachricht (106) gemäß dem drahtlos-Kommunikationsprotokoll, wenn in dem zweiten Modus (109) ermittelt wurde, dass das Mobilfunkgerät in einem räumlichen Sicherheitsbereich angeordnet ist.

3. Verfahren (200) zum Betreiben eines Mobilfunkgeräts (102) gemäß einem ersten Modus (107) und einem zweiten Modus (109), das Verfahren aufweisend:
• Ermitteln (101) einer Angabe über einen Standort des Mobilfunkgeräts (102) mittels eines ersten Sensors des Mobilfunkgeräts (102);
• Ermitteln (103) einer Berührung des Mobilfunkgeräts (102) mittels eines zweiten Sensors des Mobilfunkgeräts (102);
• Umschalten (105) in den zweiten Modus (109), wenn in dem ersten Modus (107) ermittelt wurde, dass die Berührung ein erstes vordefiniertes Kriterium erfüllt;
• Erzeugen (111) einer Nachricht (106) gemäß einem drahtlos-Kommunikationsprotokoll, wenn in dem zweiten Modus (109) ermittelt wurde, dass seit dem Umschalten in den zweiten Modus (109) ein vordefinierter Zeitraum verstrichen ist, wobei die Nachricht (106) die Angabe aufweist und ferner angibt, dass der vordefinierte Zeitraum verstrichen ist;
• Umschalten (105) in den ersten Modus (107) ohne Erzeugen der Nachricht (106), wenn in dem zweiten Modus (109) eine Benutzerauthentifizierung erfolgt.

4. Verfahren (200) zum Betreiben eines Mobilfunkgeräts (102) gemäß einem ersten Modus (107) und einem zweiten Modus (109), das Verfahren (200) aufweisend:
• Ermitteln (101) einer Angabe über einen Standort des Mobilfunkgeräts (102) mittels eines ersten Sensors des Mobilfunkgeräts (102);
• Ermitteln (103) einer Berührung des Mobilfunkgeräts (102) mittels eines zweiten Sensors des Mobilfunkgeräts (102);
• Umschalten (105) in den zweiten Modus (109), wenn in dem ersten Modus (107) ermittelt wurde, dass die Berührung ein erstes vordefiniertes Kriterium erfüllt;
• Erzeugen (111) einer Nachricht (106) gemäß einem drahtlos-Kommunikationsprotokoll, nur wenn in dem zweiten Modus (109) ermittelt wurde, dass eine Betätigung einer Vorrichtung, die mit dem Mobilfunkgerät (102) kommunikativ gekoppelt ist, ein zusätzliches zweites vordefiniertes Kriterium erfüllt, wobei die Nachricht (106) die Angabe aufweist und ferner angibt, dass die Betätigung der Vorrichtung das zusätzliche zweite vordefinierte Kriterium erfüllt;
• Umschalten (105) in den ersten Modus (107) ohne Erzeugen der Nachricht (106), wenn in dem zweiten Modus (109) ermittelt wurde, dass die Berührung ein zweites vordefiniertes Kriterium erfüllt.

5. Verfahren (100, 200) gemäß einem der Ansprüche 1 bis 4, ferner aufweisend:
Erfassen von Audiodaten und/oder Bilddaten mittels eines dritten Sensors des Mobilfunkgeräts (102), wenn in dem zweiten Modus (109) ermittelt wurde, dass die Berührung ein drittes vordefiniertes Kriterium erfüllt.

6. Verfahren (100, 200) gemäß einem der Ansprüche 1 bis 5, wobei das Erzeugen der Nachricht (106) ferner erfolgt, wenn ermittelt wurde, dass die Berührung ein viertes vordefiniertes Kriterium erfüllt.

7. Verfahren (100, 200) gemäß einem der Ansprüche 1 bis 6, wobei das erste vordefinierte Kriterium erfüllt ist, wenn die Berührung gemäß einem vorzunehmenden ersten Berührungsmuster erfolgt;
wobei das zweite vordefinierte Kriterium erfüllt ist, wenn die Berührung gemäß einem vorzunehmenden zweiten Berührungsmuster erfolgt;
wobei das zweite Berührungsmuster zu dem ersten Berührungsmuster entgegengesetzt ist.

8. Verfahren (100, 200) gemäß einem der Ansprüche 1 bis 7, wobei das zweite vordefinierte Kriterium erfüllt ist, wenn mittels der Berührung eine Benutzerauthentifizierung erfolgt ist.

9. Verfahren (100, 200) gemäß einem der Ansprüche 1 bis 8, wobei der zweite Sensor eine berührungsempfindliche Oberfläche des Mobilfunkgeräts (102) aufweist.

10. Verfahren (100, 200) gemäß einem der Ansprüche 1 bis 9, wobei das Ermitteln der Angabe über den Standort des Mobilfunkgeräts (102) auf Grundlage einer Übertragung an das Mobilfunkgerät (102) gemäß dem drahtlos-Kommunikationsprotokoll erfolgt.

11. Verfahren (100, 200) gemäß einem der Ansprüche 1 bis 10, wobei das Ermitteln der Angabe über den Standort des Mobilfunkgeräts (102) auf Grundlage eines Satellitensignals erfolgt, das von dem Mobilfunkgerät (102) empfangen wird.

12. Verfahren (100, 200) gemäß einem der Ansprüche 1 bis 11, wobei das Ermitteln der Angabe über den Standort des Mobilfunkgeräts (102) auf Grundlage eines Funkbarke-Signals erfolgt, das von dem Mobilfunkgerät (102) empfangen wird.

13. Verfahren (100, 200) gemäß einem der Ansprüche 1 bis 12, ferner aufweisend:
gegenseitiges Autorisieren des Mobilfunkgeräts (102) mit einem Empfängergerät der Nachricht (106).

14. Verfahren (100, 200) gemäß einem der Ansprüche 1 bis 13, ferner aufweisend:
vor dem Erzeugen der Nachricht (106), Anzeigen einer Information mittels einer Anzeigevorrichtung des Mobilfunkgeräts (102), wobei die Information ein oder mehrere verfügbare Empfängergeräte repräsentiert, an welche die erzeugte Nachricht (106) übermittelt werden kann.

15. Computerprogramm, das, wenn von einem Prozessor (1402p) ausgeführt, alle Verfahrensschritte des Verfahrens gemäß einem der Ansprüche 1 bis 14 ausführt.

16. Mobilfunkgerät (102), aufweisend einen oder mehr als einen Prozessor (1402p), der eingerichtet ist, das Verfahren gemäß einem der Ansprüche 1 bis 14 durchzuführen.

17. System (300, 1100, 1200, 1400), aufweisend:
ein Mobilfunkgerät (102) gemäß Anspruch 16; und
einen Schaltkreis, der gemäß dem drahtlos-Kommunikationsprotokoll kommunikativ mit dem Mobilfunkgerät (102) gekoppelt und ferner eingerichtet ist zum:
• Empfangen der Nachricht (106),
• Ermitteln eines verfügbaren Empfängergeräts (306) auf Grundlage der Nachricht (106); und
• Alarmieren des Empfängergeräts (306) unter Angabe des Standorts des Mobilfunkgeräts (102).

18. System (300, 1100, 1200, 1400), aufweisend:
ein Mobilfunkgerät (102) gemäß Anspruch 16;
einen Schaltkreis, der gemäß dem drahtlos-Kommunikationsprotokoll kommunikativ mit dem Mobilfunkgerät (102) gekoppelt und ferner eingerichtet ist zum:
• Ermitteln eines Empfängergeräts (306), welches einem geolokalen Bereich zugeordnet ist,
• Alarmieren des Empfängergeräts (306), wenn ermittelt wurde, dass der Standort des Mobilfunkgeräts (102) innerhalb des geolokalen Bereichs ist, während das Mobilfunkgerät (102) in dem zweiten Modus (109) betrieben wird.

## Claims

1. Method (100) for operating a mobile radio (102) according to a first mode (107) and a second mode (109), the method involving:
• ascertaining (101) an indication of a location of the mobile radio (102) by means of a first sensor of the mobile radio (102);
• ascertaining touching of the mobile radio (102) by means of a second sensor of the mobile radio (102);
• changing over (105) to the second mode (109) if it has been ascertained in the first mode (107) that the touching satisfies a first predefined criterion;
• generating (111) a message (106) according to a wireless communication protocol if it has been ascertained in the second mode (109) that the touching was interrupted for the first time, the message (106) including the indication and also indicating that the touching was interrupted;
• changing over (105) to the first mode (107) without generating the message (106) if it has been ascertained in the second mode (109) that the touching satisfies a second predefined criterion.

2. Method (200) for operating a mobile radio (102) according to a first mode (107) and a second mode (109), the method involving:
• ascertaining (101) an indication of a location of the mobile radio (102) by means of a first sensor of the mobile radio (102);
• ascertaining (103) touching of the mobile radio (102) by means of a second sensor of the mobile radio (102);
• changing over (105) to the second mode (109) if it has been ascertained in the first mode (107) that the touching satisfies a first predefined criterion;
• generating (111) a message (106) according to a wireless communication protocol if it has been ascertained in the second mode (109) that a predefined time period has elapsed since the changing over to the second mode (109), the message (106) including the indication and also indicating that the predefined time period has elapsed;
• changing over (105) to the first mode (107) without generating the message (106) if it has been ascertained in the second mode (109) that the touching satisfies a second predefined criterion;
• generating (111) the message (106) according to the wireless communication protocol if it has been ascertained in the second mode (109) that the mobile radio is arranged in a spatial security area.

3. Method (200) for operating a mobile radio (102) according to a first mode (107) and a second mode (109), the method involving:
• ascertaining (101) an indication of a location of the mobile radio (102) by means of a first sensor of the mobile radio (102);
• ascertaining (103) touching of the mobile radio (102) by means of a second sensor of the mobile radio (102);
• changing over (105) to the second mode (109) if it has been ascertained in the first mode (107) that the touching satisfies a first predefined criterion;
• generating (111) a message (106) according to a wireless communication protocol if it has been ascertained in the second mode (109) that a predefined time period has elapsed since the changing over to the second mode (109), the message (106) including the indication and also indicating that the predefined time period has elapsed;
• changing over (105) to the first mode (107) without generating the message (106) if a user authentication has taken place in the second mode (109).

4. Method (200) for operating a mobile radio (102) according to a first mode (107) and a second mode (109), the method (200) involving:
• ascertaining (101) an indication of a location of the mobile radio (102) by means of a first sensor of the mobile radio (102);
• ascertaining (103) touching of the mobile radio (102) by means of a second sensor of the mobile radio (102);
• changing over (105) to the second mode (109) if it has been ascertained in the first mode (107) that the touching satisfies a first predefined criterion;
• generating (111) a message (106) according to a wireless communication protocol only if it has been ascertained in the second mode (109) that an actuation of a device which is communicatively coupled to the mobile radio (102) satisfies an additional second predefined criterion, the message (106) the message (106) including the indication and also indicating that the actuation of the device satisfies the additional second predefined criterion;
• changing over (105) to the first mode (107) without generating the message (106) if it has been ascertained in the second mode (109) that the touching satisfies a second predefined criterion.

5. Method (100, 200) according to one of Claims 1 to 4, also involving:
recording audio data and/or image data by means of a third sensor of the mobile radio (102) if it has been ascertained in the second mode (109) that the touching satisfies a third predefined criterion.

6. Method (100, 200) according to one of Claims 1 to 5,
the generating of the message (106) also taking place if it has been ascertained that the touching satisfies a fourth predefined criterion.

7. Method (100, 200) according to one of Claims 1 to 6,
the first predefined criterion being satisfied if the touching takes place according to a first pattern of touching to be performed;
the second predefined criterion being satisfied if the touching takes place according to a second pattern of touching to be performed;
the second pattern of touching being opposite to the first pattern of touching.

8. Method (100, 200) according to one of Claims 1 to 7,
the second predefined criterion being satisfied if a user authentication has taken place by means of the touching.

9. Method (100, 200) according to one of Claims 1 to 8,
the second sensor comprising a touch-sensitive surface of the mobile radio (102).

10. Method (100, 200) according to one of Claims 1 to 9,
the ascertainment of the indication of the location of the mobile radio (102) taking place on the basis of a transmission to the mobile radio (102) according to the wireless communication protocol.

11. Method (100, 200) according to one of Claims 1 to 10,
the ascertainment of the indication of the location of the mobile radio (102) taking place on the basis of a satellite signal which is received by the mobile radio (102).

12. Method (100, 200) according to one of Claims 1 to 11,
the ascertainment of the indication of the location of the mobile radio (102) taking place on the basis of a radio beacon signal which is received by the mobile radio (102).

13. Method (100, 200) according to one of Claims 1 to 12, also involving:
mutual authorization of the mobile radio (102) with a receiver device of the message (106).

14. Method (100, 200) according to one of Claims 1 to 13, also involving:
before the generating of the message (106), displaying information by means of a display device of the mobile radio (102), the information representing one or more available receiver devices to which the generated message (106) can be transmitted.

15. Computer program which executes all method steps of the method according to one of Claims 1 to 14 when it is executed by means of a processor (1402p).

16. Mobile radio (102), comprising one or more than one processor (1402p) which is set up to carry out the method according to one of Claims 1 to 14.

17. System (300, 1100, 1200, 1400), comprising:
a mobile radio (102) according to Claim 16; and
a circuit which is communicatively coupled to the mobile radio (102) according to the wireless communication protocol and is also set up for:
• receiving the message (106),
• ascertaining an available receiver device (306) on the basis of the message (106); and
• sending an alarm to the receiver device (306) while indicating the location of the mobile radio (102).

18. System (300, 1100, 1200, 1400), comprising:
a mobile radio (102) according to Claim 16;
a circuit which is communicatively coupled to the mobile radio (102) according to the wireless communication protocol and is also set up for:
• ascertaining a receiver device (306) which is assigned to a geo-local area,
• sending an alarm to the receiver device (306) if it has been ascertained that the location of the mobile radio (102) is within the geo-local area while the mobile radio (102) is being operated in the second mode (109).

## Revendications

1. Procédé (100) pour faire fonctionner un appareil de radiocommunication mobile (102) selon un premier mode (107) et un deuxième mode (109), le procédé comprenant :
• la détermination (101) d'une indication à propos d'un emplacement de l'appareil de radiocommunication mobile (102) au moyen d'un premier capteur de l'appareil de radiocommunication mobile (102) ;
• la détermination d'un toucher de l'appareil de radiocommunication mobile (102) au moyen d'un deuxième capteur de l'appareil de radiocommunication mobile (102) ;
• le basculement (105) dans le deuxième mode (109) si, dans le premier mode (107), il a été déterminé que le toucher satisfait à un premier critère prédéfini ;
• la génération (111) d'un message (106) selon un protocole de communication sans fil si, dans le deuxième mode (109), il a été déterminé que le toucher a été interrompu pour la première fois, le message (106) comprenant l'indication et indiquant en outre que le toucher a été interrompu ;
• le basculement (105) dans le premier mode (107) sans générer le message (106) si, dans le deuxième mode (109), il a été déterminé que le toucher satisfait à un deuxième critère prédéfini.

2. Procédé (200) pour faire fonctionner un appareil de radiocommunication mobile (102) selon un premier mode (107) et un deuxième mode (109), le procédé comprenant :
• la détermination (101) d'une indication à propos d'un emplacement de l'appareil de radiocommunication mobile (102) au moyen d'un premier capteur de l'appareil de radiocommunication mobile (102) ;
• la détermination (103) d'un toucher de l'appareil de radiocommunication mobile (102) au moyen d'un deuxième capteur de l'appareil de radiocommunication mobile (102) ;
• le basculement (105) dans le deuxième mode (109) si, dans le premier mode (107), il a été déterminé que le toucher satisfait à un premier critère prédéfini ;
• la génération (111) d'un message (106) selon un protocole de communication sans fil si, dans le deuxième mode (109), il a été déterminé qu'une période prédéfinie s'est écoulée depuis le basculement dans le deuxième mode (109), le message (106) comprenant l'indication et indiquant en outre que la période prédéfinie s'est écoulée ;
• le basculement (105) dans le premier mode (107) sans générer le message (106) si, dans le deuxième mode (109), il a été déterminé que le toucher satisfait à un deuxième critère prédéfini ;
• la génération (111) du message (106) selon le protocole de communication sans fil si, dans le deuxième mode (109), il a été déterminé que l'appareil de radiocommunication mobile se situe dans une zone de sécurité spatiale.

3. Procédé (200) pour faire fonctionner un appareil de radiocommunication mobile (102) selon un premier mode (107) et un deuxième mode (109), le procédé comprenant :
• la détermination (101) d'une indication à propos d'un emplacement de l'appareil de radiocommunication mobile (102) au moyen d'un premier capteur de l'appareil de radiocommunication mobile (102) ;
• la détermination (103) d'un toucher de l'appareil de radiocommunication mobile (102) au moyen d'un deuxième capteur de l'appareil de radiocommunication mobile (102) ;
• le basculement (105) dans le deuxième mode (109) si, dans le premier mode (107), il a été déterminé que le toucher satisfait à un premier critère prédéfini ;
• la génération (111) d'un message (106) selon un protocole de communication sans fil si, dans le deuxième mode (109), il a été déterminé qu'une période prédéfinie s'est écoulée depuis le basculement dans le deuxième mode (109), le message (106) comprenant l'indication et indiquant en outre que la période prédéfinie s'est écoulée ;
• le basculement (105) dans le premier mode (107) sans générer le message (106) si, dans le deuxième mode (109), une authentification de l'utilisateur est effectuée.

4. Procédé (200) pour faire fonctionner un appareil de radiocommunication mobile (102) selon un premier mode (107) et un deuxième mode (109), le procédé (200) comprenant :
• la détermination (101) d'une indication à propos d'un emplacement de l'appareil de radiocommunication mobile (102) au moyen d'un premier capteur de l'appareil de radiocommunication mobile (102) ;
• la détermination (103) d'un toucher de l'appareil de radiocommunication mobile (102) au moyen d'un deuxième capteur de l'appareil de radiocommunication mobile (102) ;
• le basculement (105) dans le deuxième mode (109) si, dans le premier mode (107), il a été déterminé que le toucher satisfait à un premier critère prédéfini ;
• la génération (111) d'un message (106) selon un protocole de communication sans fil uniquement si, dans le deuxième mode (109), il a été déterminé qu'un actionnement d'un dispositif couplé par voie de communication à l'appareil de radiocommunication mobile (102) satisfait à un deuxième critère prédéfini supplémentaire, le message (106) comprenant l'indication et indiquant en outre que l'actionnement du dispositif satisfait au deuxième critère prédéfini supplémentaire ;
• le basculement (105) dans le premier mode (107) sans générer le message (106) si, dans le deuxième mode (109), il a été déterminé que le toucher satisfait à un deuxième critère prédéfini.

5. Procédé (100, 200) selon l'une quelconque des revendications 1 à 4, comprenant en outre :
la détection de données audio et/ou de données d'image au moyen d'un troisième capteur de l'appareil de radiocommunication mobile (102) si, dans le deuxième mode (109), il a été déterminé que le toucher satisfait à un troisième critère prédéfini.

6. Procédé (100, 200) selon l'une quelconque des revendications 1 à 5, dans lequel la génération du message (106) est en outre effectuée s'il a été déterminé que le toucher satisfait à un quatrième critère prédéfini.

7. Procédé (100, 200) selon l'une quelconque des revendications 1 à 6, dans lequel le premier critère prédéfini est satisfait si le toucher est effectué selon un premier motif tactile à réaliser ;
le deuxième critère prédéfini étant satisfait si le toucher est effectué selon un deuxième motif tactile à réaliser ;
le deuxième motif tactile étant opposé au premier motif tactile.

8. Procédé (100, 200) selon l'une quelconque des revendications 1 à 7, dans lequel le deuxième critère prédéfini est satisfait si une authentification de l'utilisateur a été effectuée au moyen du toucher.

9. Procédé (100, 200) selon l'une quelconque des revendications 1 à 8, dans lequel le deuxième capteur comprend une surface sensible au toucher de l'appareil de radiocommunication mobile (102).

10. Procédé (100, 200) selon l'une quelconque des revendications 1 à 9, dans lequel la détermination de l'indication à propos de l'emplacement de l'appareil de radiocommunication mobile (102) est effectuée sur la base d'une transmission à l'appareil de radiocommunication mobile (102) selon le protocole de communication sans fil.

11. Procédé (100, 200) selon l'une quelconque des revendications 1 à 10, dans lequel la détermination de l'indication à propos de l'emplacement de l'appareil de radiocommunication mobile (102) est effectuée sur la base d'un signal de satellite reçu par l'appareil de radiocommunication mobile (102).

12. Procédé (100, 200) selon l'une quelconque des revendications 1 à 11, dans lequel la détermination de l'indication à propos de l'emplacement de l'appareil de radiocommunication mobile (102) est effectuée sur la base d'un signal de balise radio qui est reçu par l'appareil de radiocommunication mobile (102).

13. Procédé (100, 200) selon l'une quelconque des revendications 1 à 10, comprenant en outre :
l'autorisation mutuelle de l'appareil de radiocommunication mobile (102) avec un appareil de réception pour le message (106).

14. Procédé (100, 200) selon l'une quelconque des revendications 1 à 13, comprenant en outre :
avant la génération du message (106), l'affichage d'une information au moyen d'un dispositif d'affichage de l'appareil de radiocommunication mobile (102), l'information représentant un ou plusieurs appareils de réception disponibles auxquels le message généré (106) peut être transmis.

15. Programme d'ordinateur qui, lorsqu'il est exécuté par un processeur (1402p), met en oeuvre toutes les étapes du procédé selon l'une quelconque des revendications 1 à 14.

16. Appareil de radiocommunication mobile (102) comprenant un ou plusieurs processeurs (1402p), qui est conçu pour mettre en oeuvre le procédé selon l'une quelconque des revendications 1 à 14.

17. Système (300, 1100, 1200, 1400), comprenant :
un appareil de radiocommunication mobile (102) selon la revendication 16 ; et
un circuit couplé par voie de communication à l'appareil de radiocommunication mobile (102) selon le protocole de communication sans fil et conçu en outre pour :
• recevoir le message (106),
• déterminer un appareil de réception disponible (306) sur la base du message (106) ; et
• alerter l'appareil de réception (306) en indiquant l'emplacement de l'appareil de radiocommunication mobile (102) .

18. Système (300, 1100, 1200, 1400), comprenant :
un appareil de radiocommunication mobile (102) selon la revendication 16 ;
un circuit couplé par voie de communication à l'appareil de radiocommunication mobile (102) selon le protocole de communication sans fil et conçu en outre pour :
• déterminer un appareil de réception (306) associé à une zone géolocalisée,
• alerter l'appareil de réception (306) s'il a été déterminé que l'emplacement de l'appareil de radiocommunication mobile (102) se situe dans la zone géolocalisée alors que l'appareil de radiocommunication mobile (102) est amené à fonctionner dans le deuxième mode (109).
